# EUROPEAN PATENT SPECIFICATION

(11) **EP 4 474 959 B1**
(45) Date of publication and mention of the grant of the patent: **05.08.2026**
(21) Application number: 24209236.9
(22) Date of filing: 20.05.2021
(51) Int. Cl.: G06F 1/16, G06F 3/041, G06F 3/0354, G06F 3/046, G06F 3/038, G06F 3/044

(54) **FOLDABLE ELECTRONIC DEVICE COMPRISING DIGITIZER**
FALTBARE ELEKTRONISCHE VORRICHTUNG MIT DIGITALISIERER
DISPOSITIF ÉLECTRONIQUE PLIABLE COMPRENANT UN NUMÉRISEUR

(30) Priority: 04.06.2020 KR 20200067775; 06.11.2020 KR 20200148101; 13.11.2020 KR 20200152295
(43) Date of publication of application: 11.12.2024
(62) Divisional of application: 21816749.2
(73) Proprietor: Samsung Electronics Co., Ltd., Suwon-si, Gyeonggi-do 16677 (KR)
(72) Inventor: Park, Myeongsil, 16677 Suwon-si, Gyeonggi-do (KR); Kim, Seonghoon, 16677 Suwon-si, Gyeonggi-do (KR); Park, Changbyung, 16677 Suwon-si, Gyeonggi-do (KR); Bae, Jungbae, 16677 Suwon-si, Gyeonggi-do (KR)
(74) Representative: Gulde & Partner

(56) References cited:
- WO-A1-2019/031062
- US-A1- 2016 239 133
- US-A1- 2019 350 081

## Description

### [Technical Field]

Various embodiments of the disclosure relate to a foldable electronic device including a digitizer and a method for controlling the same.

### [Background Art]

Electronic devices are gradually becoming slimmer, and are being improved to increase their rigidity, strengthen their design aspects, and differentiate their functional features. The electronic device is being developed to have various shapes, departing from a uniform rectangular shape. The electronic device may have a deformable structure that provides high portability and also provides a large-screen display in use. In connection with such a deformable structure, the electronic device (e.g., a foldable electronic device) may include at least two foldable housings that are folded or unfolded relative to each other. Also, the foldable electronic device may include a digitizer for detecting an input through an electronic pen. The foldable electronic device may require an efficient arrangement structure for the digitizer disposed in an inner space. A prior art publication of WO 2019/031062 A1 concerns touch display digitizers. It discloses an electrode pattern which extends across the foldable region of a foldable display device.

### [Disclosure of Invention]

### [Technical Problem]

The foldable electronic device may include a hinge module, and first and second housings connected in opposite directions through the hinge module. The foldable electronic device may be operated in an in-folding and/or out-folding scheme as the first housing is rotated with respect to the second housing through the hinge module in a range of 0 to 360 degrees. The foldable electronic device may include a flexible display disposed to be supported at least in part through the first housing and the second housing in an unfolded state. The flexible display may have supportability and bending characteristics through layers (e.g., a polymer layer such as a cushion layer, and a metal sheet layer such as a conductive plate or SUS plate) stacked in the inner space of the electronic device or under a display panel of the flexible display.

The foldable electronic device may include an electronic pen as an additional input tool. Also, the foldable electronic device may include at least one digitizer disposed in the inner space to detect data input through the electronic pen. The at least one digitizer may be arranged under the display panel.

However, in such a digitizer arrangement structure, stress due to the rigidity of the digitizer may be transferred to the upper layer during the frequent unfolding and folding operations of the foldable electronic device, thereby causing a buckling phenomenon that the corresponding portion is crushed or bent. Furthermore, the digitizer is attached through lamination with its nearby layers under the display panel, and a conductive pattern (e.g., a coil member, a digitizer pattern, or a coil pattern) may be visually recognized from the outside of the flexible display due to pressure applied during a process. In addition, because conductive members (e.g., a metal sheet layer and/or reinforcing plates) disposed under the display panel maintain a floating state by the digitizer, malfunctions such as a flicker phenomenon of the flexible display may be caused.

Various embodiments of the disclosure may provide a foldable electronic device including a digitizer and a method for controlling the same.

According to various embodiments, a foldable electronic device including a digitizer having an arrangement structure disallowing a digitizer pattern to be visually recognized from the outside, and a method for controlling the same may be provided.

According to various embodiments, a foldable electronic device including a digitizer having an arrangement structure capable of reducing a buckling phenomenon caused in a folded portion by unfolding and folding operations, and a method for controlling the same may be provided.

According to various embodiments, a foldable electronic device including a digitizer configured to reduce the malfunction of a flexible display by providing a grounding structure connecting conductive members disposed under a display panel to the ground, and a method for controlling the same may be provided.

### [Solution to Problem]

The present invention is directed to subject matter as defined in the claims.

### [Advantageous Effects of Invention]

The digitizer according to embodiments of the disclosure is disposed under the metal sheet layer supporting the flexible display panel, and the metal sheet layer is formed to have a structure in which the digitizer can recognize the electronic pen. Therefore, it is possible to prevent the digitizer pattern from being visually recognized from the outside through the metal sheet layer, and it is possible to prevent a buckling phenomenon of the peripheral layer occurring in the folded part of the digitizer, thereby helping in improving the reliability of the electronic device. Also, the conductive members (e.g., the metal sheet layer and/or the reinforcing plates) disposed under the display are connected to the ground through a ground structure disposed on the digitizer, thereby helping in reducing malfunctions of the flexible display.

In addition, various effects explicitly or implicitly appreciated through the disclosure may be provided.

### [Brief Description of Drawings]

In connection with the description of the drawings, the same or similar reference numerals may be used for the same or similar components.
FIG. 1A is a front perspective view illustrating a flat state or an unfolding state of an electronic device according to various embodiments of the disclosure.
FIG. 1B is a plan view illustrating a front surface of the electronic device in the unfolding state according to various embodiments of the disclosure.
FIG. 1C is a plan view illustrating a rear surface of the electronic device in the unfolding state according to various embodiments of the disclosure.
FIG. 2A is a perspective view illustrating a folding state of the electronic device according to various embodiments of the disclosure.
FIG. 2B is a perspective view illustrating an intermediate state of the electronic device according to various embodiments of the disclosure.
FIG. 3 is an exploded perspective view illustrating a flexible display according to various embodiments of the disclosure.
FIG. 4A is a view illustrating configuration of a metal sheet layer according to various embodiments of the disclosure.
FIG. 4B is an enlarged view of a region 4b of FIG. 4A according to various embodiments of the disclosure.
FIG. 4C is an enlarged view of a region 4c of FIG. 4A according to various embodiments of the disclosure.
FIG. 5 is a partial cross-sectional view of a flexible display taken along a line 5-5 of FIG. 1A according to various embodiments of the disclosure.
FIG. 6 is a view illustrating a folded state of a flexible display according to various embodiments of the disclosure.
FIGS. 7A to 7D are views illustrating shapes of a second pattern in flat portions of a metal sheet layer according to various embodiments of the disclosure.
FIG. 8A is a partial cross-sectional view of a flexible display including two digitizers according to various embodiments of the disclosure.
FIG. 8B is a view illustrating a foldable electronic device according to various embodiments of the disclosure.
FIG. 9A is a partial cross-sectional view of a flexible display including a digitizer having a step region according to various embodiments of the disclosure.
FIG. 9B is a partial configuration view of a digitizer having a step region according to various embodiments of the disclosure.
FIG. 10 is a partial cross-sectional view of a flexible display including a digitizer having a margin region according to various embodiments of the disclosure.
FIG. 11 is a partial configuration view of a digitizer having a bendable pattern region according to various embodiments of the disclosure.
FIG. 12 is a partial configuration view of a digitizer having a third pattern according to various embodiments of the disclosure.
FIGS. 13A and 13B are views illustrating shapes of a plurality of openings disposed in a bendable pattern region of a digitizer according to various embodiments of the disclosure.
FIG. 14 is a partial cross-sectional view of a display including two digitizers according to various embodiments of the disclosure.
FIG. 15A is a configuration view of two digitizers of FIG. 14 according to various embodiments of the disclosure.
FIG. 15B is a partial cross-sectional view of a first digitizer taken along a line 15b-15b of FIG. 15A according to various embodiments of the disclosure.
FIG. 16A is a constitution view of a first digitizer according to various embodiments of the disclosure.
FIG. 16B is an enlarged view of a region 16b of FIG. 16A according to various embodiments of the disclosure.
FIGS. 17 to 19 are partial cross-sectional views of a display according to various embodiments of the disclosure.
FIG. 20A is a partial cross-sectional view of a display according to various embodiments of the disclosure.
FIG. 20B is a configuration view of a metal sheet layer shown in FIG. 20A according to various embodiments of the disclosure.
FIG. 20C is a configuration view of two digitizers shown in FIG. 20A according to various embodiments of the disclosure.
FIG. 21 illustrates a structure of a foldable electronic device according to various embodiments.
FIGS. 22A and 22B illustrate an arrangement of conductive patterns in digitizers according to various embodiments.
FIG. 23 illustrates a connection between conductive patterns included in a digitizer and a controller according to various embodiments.
FIG. 24 illustrates a connection between conductive patterns included in a digitizer and a controller according to various embodiments.
FIG. 25 illustrates a connection between conductive patterns included in a digitizer and a controller according to various embodiments.
FIG. 26 illustrates a connection between conductive patterns included in a digitizer and a controller according to various embodiments.
FIG. 27 illustrates a connection between conductive patterns included in a digitizer and a controller according to various embodiments.
FIG. 28 is a flowchart illustrating operations performed by an electronic device according to various embodiments.
FIG. 29 is a flowchart illustrating operations performed by an electronic device according to various embodiments.
FIG. 30 is a block diagram of an electronic device in a network environment according to various embodiments.

### [Mode for the Invention]

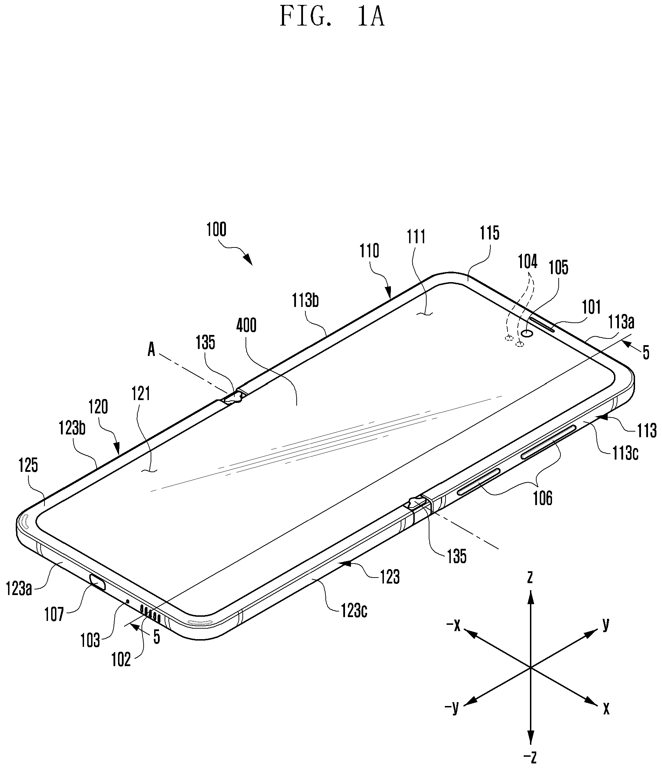

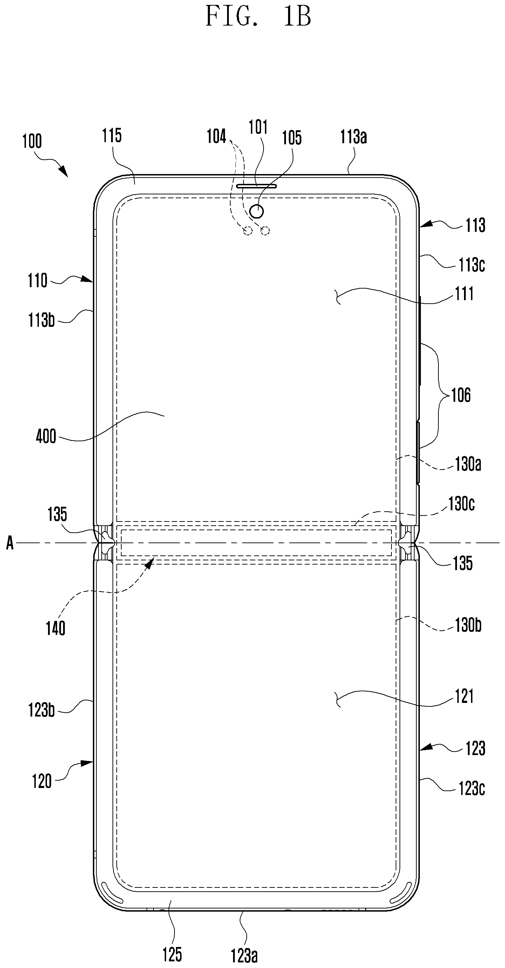

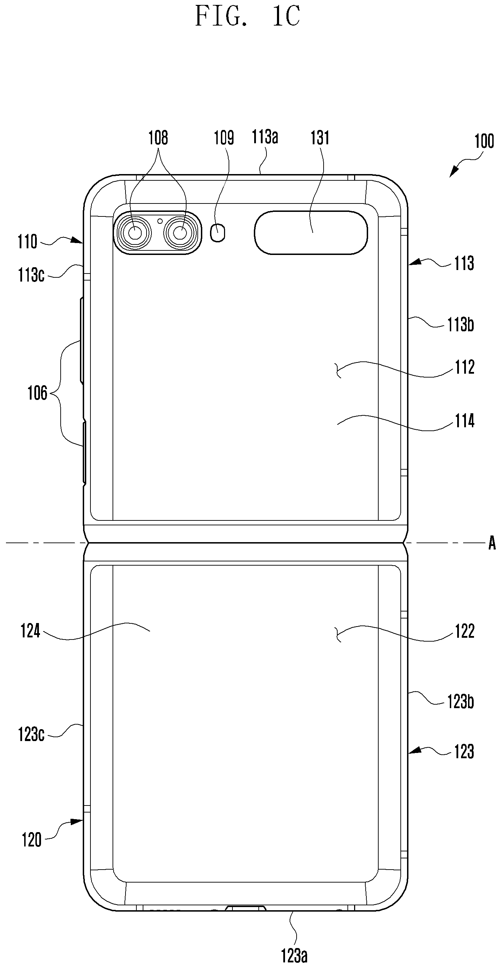

FIG. 1A is a front perspective view of an electronic device in a flat or unfolded state according to certain embodiments of the disclosure. FIG. 1B is a plan view illustrating the front of the electronic device in an unfolded state according to certain embodiments of the disclosure. FIG. 1C is a plan view illustrating the back of the electronic device in an unfolded state according to certain embodiments of the disclosure.

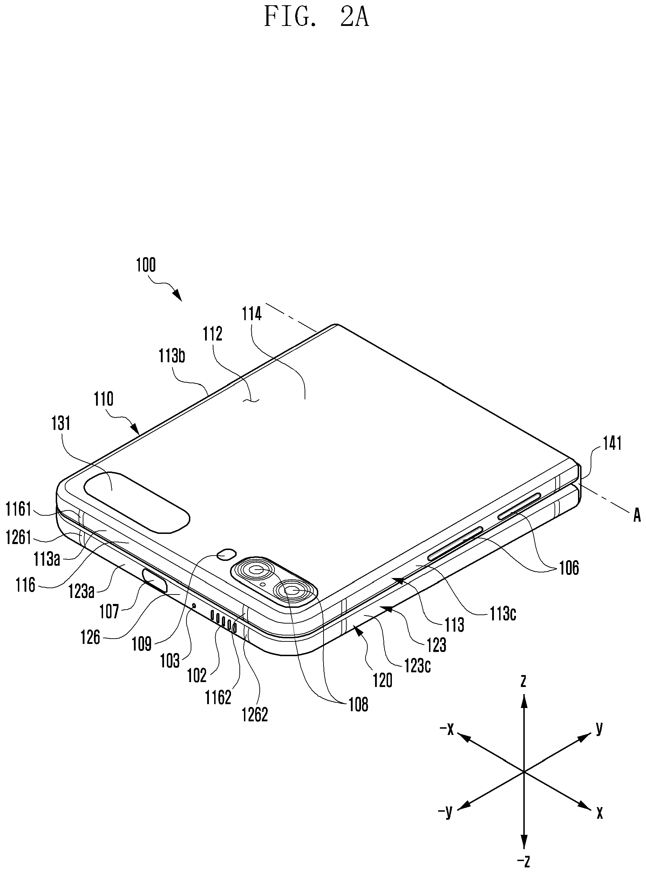

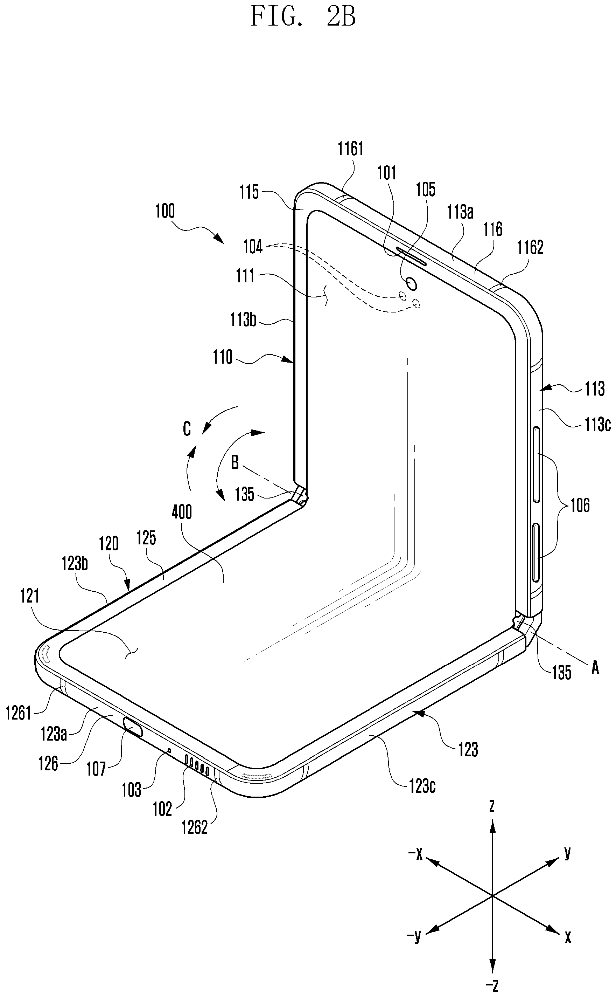

FIG. 2A is a perspective view of the electronic device in a folded state according to certain embodiments of the disclosure. FIG. 2B is a perspective view of the electronic device in an intermediate state according to certain embodiments of the disclosure.

With reference to FIGS. 1A to 2B, the electronic device 100 may include a pair of housings 110 and 120 (e.g., foldable housings) that are rotatably coupled as to allow folding relative to a hinge mechanism (e.g., hinge mechanism 140 in FIG. 1B). In certain embodiments, the hinge mechanism (e.g., hinge mechanism 140 in FIG. 1B) may be disposed in the X-axis direction or in the Y-axis direction. In certain embodiments, two or more hinge mechanisms (e.g., hinge mechanism 140 in FIG. 1B) may be arranged to be folded in a same direction or in different directions. According to an embodiment, the electronic device 100 may include a flexible display 400 (e.g., foldable display) disposed in an area formed by the pair of housings 110 and 120. According to an embodiment, the first housing 110 and the second housing 120 may be disposed on both sides about the folding axis (axis A), and may have a substantially symmetrical shape with respect to the folding axis (axis A). According to an embodiment, the angle or distance between the first housing 110 and the second housing 120 may vary, depending on whether the state of the electronic device 100 is a flat or unfolded state, a folded state, or an intermediate state.

According to certain embodiments, the pair of housings 110 and 120 may include a first housing 110 (e.g., first housing structure) coupled to the hinge mechanism (e.g., hinge mechanism 140 in FIG. 1B), and a second housing 120 (e.g., second housing structure) coupled to the hinge mechanism (e.g., hinge mechanism 140 in FIG. 1B). According to an embodiment, in the unfolded state, the first housing 110 may include a first surface 111 facing a first direction (e.g., front direction) (z-axis direction), and a second surface 112 facing a second direction (e.g., rear direction) (negative z-axis direction) opposite to the first surface 111. According to an embodiment, in the unfolded state, the second housing 120 may include a third surface 121 facing the first direction (z-axis direction), and a fourth surface 122 facing the second direction (negative z-axis direction). According to an embodiment, the electronic device 100 may be operated in such a manner that the first surface 111 of the first housing 110 and the third surface 121 of the second housing 120 face substantially the same first direction (z-axis direction) in the unfolded state, and the first surface 111 and the third surface 121 face one another in the folded state. According to an embodiment, the electronic device 100 may be operated in such a manner that the second surface 112 of the first housing 110 and the fourth surface 122 of the second housing 120 face substantially the same second direction (negative z-axis direction) in the unfolded state, and the second surface 112 and the fourth surface 122 face one another in opposite directions in the folded state. For example, in the folded state, the second surface 112 may face the first direction (z-axis direction), and the fourth surface 122 may face the second direction (negative z-axis direction).

According to certain embodiments, the first housing 110 may include a first side member 113 that at least partially forms an external appearance of the electronic device 100, and a first rear cover 114 coupled to the first side member 113 that forms at least a portion of the second surface 112 of the electronic device 100. According to an embodiment, the first side member 113 may include a first side surface 113a, a second side surface 113b extending from one end of the first side surface 113a, and a third side surface 113c extending from the other end of the first side surface 113a. According to an embodiment, the first side member 113 may be formed in a rectangular shape (e.g., square or rectangle) through the first side surface 113a, second side surface 113b, and third side surface 113c.

According to certain embodiments, the second housing 120 may include a second side member 123 that at least partially forms the external appearance of the electronic device 100, and a second rear cover 124 coupled to the second side member 123, forming at least a portion of the fourth surface 122 of the electronic device 100. According to an embodiment, the second side member 123 may include a fourth side surface 123a, a fifth side surface 123b extending from one end of the fourth side surface 123a, and a sixth side surface 123c extending from the other end of the fourth side surface 123a. According to an embodiment, the second side member 123 may be formed in a rectangular shape through the fourth side surface 123a, fifth side surface 123b, and sixth side surface 123c.

According to certain embodiments, the pair of housings 110 and 120 are not limited to the shape and combinations illustrated herein, and may be implemented with a combination of other shapes or parts. For example, in certain embodiments, the first side member 113 may be integrally formed with the first rear cover 114, and the second side member 123 may be integrally formed with the second rear cover 124.

According to certain embodiments, in the unfolded state of the electronic device 100, the second side surface 113b of the first side member 113 and the fifth side surface 123b of the second side member 123 may be connected without a gap formed therebetween. According to an embodiment, in the unfolded state of the electronic device 100, the third side surface 113c of the first side member 113 and the sixth side surface 123c of the second side member 123 may be connected without a gap formed therebetween. According to an embodiment, in the unfolded state, the electronic device 100 may be configured such that the combined length of the second side surface 113b and the fifth side surface 123b is longer than the combined length of the first side surface 113a and/or the fourth side surface 123a. In addition, the combined length of the third side surface 113c and the sixth side surface 123c may be configured to be longer than the length of the first side surface 113a and/or the fourth side surface 123a.

According to certain embodiments, the first side member 113 and/or the second side member 123 may be formed of a metal, and may further include a polymer injected into the metal. According to an embodiment, the first side member 113 and/or the second side member 123 may include at least one conductive portion 116 and/or 126 electrically segmented through one or more segmenting portions 1161 and 1162 and/or segmenting 1261 and 1262, which may be formed using a polymer. In this case, the at least one conductive portion may be electrically connected to a wireless communication circuit included in the electronic device 100, and may be used as an antenna operating in at least one designated band (e.g., legacy band).

According to certain embodiments, the first rear cover 114 and/or the second rear cover 124 may be formed of, for example, coated or tinted glass, ceramic, polymer, metal (e.g., aluminum, stainless steel or "STS", or magnesium), or a combination thereof.

According to certain embodiments, the flexible display 400 may be disposed to extend from the first surface 111 of the first housing 110 across the hinge mechanism (e.g., hinge mechanism 140 in FIG. 1B) to at least a portion of the third surface 121 of the second housing 120. For example, the flexible display 400 may include a first region 130a substantially corresponding to the first surface 111, a second region 130b corresponding to the second surface 121, and a third region 130c (e.g., the bendable region) connecting the first region 130a and the second region 130b and corresponding to the hinge mechanism (e.g., hinge mechanism 140 in FIG. 1B). According to an embodiment, the electronic device 100 may include a first protection cover 115 (e.g., first protection frame or first decoration member) coupled along the periphery of the first housing 110. According to an embodiment, the electronic device 100 may include a second protection cover 125 (e.g., second protection frame or second decoration member) coupled along the periphery of the second housing 120. According to an embodiment, the first protection cover 115 and/or the second protection cover 125 may be formed of a metal or polymer material. According to an embodiment, the first protection cover 115 and/or the second protection cover 125 may be used as a decorative member. According to an embodiment, the flexible display 400 may be positioned such that the periphery of the first region 130a is interposed between the first housing 110 and the first protection cover 115. According to an embodiment, the flexible display 400 may be positioned such that the periphery of the second region 130b is interposed between the second housing 120 and the second protection cover 125. According to an embodiment, the flexible display 400 may be positioned such that the periphery of the flexible display 400 corresponding to a protection cap 135 is protected through the protection cap disposed in a region corresponding to the hinge mechanism (e.g., hinge mechanism 140 in FIG. 1B). Consequently, the periphery of the flexible display 400 may be substantially protected from the outside. According to an embodiment, the electronic device 100 may include a hinge housing 141 (e.g., hinge cover) that is disposed so as to support the hinge mechanism (e.g., hinge mechanism 140 in FIG. 1B). The hinge housing 141 may further be exposed to the outside when the electronic device 100 is in the folded state, and be invisible as viewed from the outside when retracted into a first space (e.g., internal space of the first housing 110 ) and a second space (e.g., internal space of the second housing 120) when the electronic device 100 is in the unfolded state. In certain embodiments, the flexible display 400 may be disposed to extend from at least a portion of the second surface 112 to at least a portion of the fourth surface 122. In this case, the electronic device 100 may be folded so that the flexible display 400 is exposed to the outside (out-folding scheme).

According to certain embodiments, the electronic device 100 may include a sub-display 131 disposed separately from the flexible display 400. According to an embodiment, the sub-display 131 may be disposed to be at least partially exposed on the second surface 112 of the first housing 110, and may display status information of the electronic device 100 in place of the display function of the flexible display 400 in case of the folded state. According to an embodiment, the sub-display 131 may be disposed to be visible from the outside through at least some region of the first rear cover 114. In certain embodiments, the sub-display 131 may be disposed on the fourth surface 122 of the second housing 120. In this case, the sub-display 131 may be disposed to be visible from the outside through at least some region of the second rear cover 124.

According to certain embodiments, the electronic device 100 may include at least one of an input device 103 (e.g., microphone), sound output devices 101 and 102, a sensor module 104, camera devices 105 and 108, a key input device 106, or a connector port 107. In the illustrated embodiment, the input device 103 (e.g., microphone), sound output devices 101 and 102, sensor module 104, camera devices 105 and 108, key input device 106, and connector port 107 indicate a hole or shape formed in the first housing 110 or the second housing 120, but may be defined to include a substantial electronic component (e.g., input device, sound output device, sensor module, or camera device) that is disposed inside the electronic device 100 and operated through a hole or a shape.

According to certain embodiments, the input device 103 may include at least one microphone disposed on the second housing 120. In certain embodiments, the input device 103 may include a plurality of microphones disposed to detect the direction of a sound. In certain embodiments, a plurality of microphones may be disposed at appropriate positions in the first housing 110 and/or the second housing 120. According to an embodiment, the sound output devices 101 and 102 may include speakers. According to an embodiment, the input device 103 may include a receiver for calls disposed in the first housing 110, and a speaker disposed in the second housing 120. In certain embodiments, the input device 103, the sound output devices 101 and 102, and the connector port 107 may be disposed in a space arranged in the first housing 110 and/or the second housing 120 of the electronic device 100, and may be exposed to the external environment through at least one hole formed in the first housing 110 and/or the second housing 120. According to an embodiment, at least one connector port 107 may be used to transmit and receive power and/or data to and from an external electronic device. In certain embodiments, at least one connector port (e.g., headphonejack hole) may accommodate a connector (e.g., headphonejack) for transmitting and receiving an audio signal to and from an external electronic device. In certain embodiments, the hole formed in the first housing 110 and/or the second housing 120 may be commonly used for the input device 103 and the sound output devices 101 and 102. In certain embodiments, the sound output devices 101 and 102 may include a speaker (e.g., piezo speaker) that operates without using a hole formed in the first housing 110 and/or the second housing 120.

According to certain embodiments, the sensor module 104 may generate an electrical signal or data value corresponding to an internal operating state of the electronic device 100 or an external environmental state. The sensor module 104 may detect an external environment, for example, through the first surface 111 of the first housing 110. In certain embodiments, the electronic device 100 may further include at least one sensor module disposed to detect an external environment through the second surface 112 of the first housing 110. According to an embodiment, the sensor module 104 (e.g., illuminance sensor) may be disposed under the flexible display 400 to detect an external environment through the flexible display 400. According to an embodiment, the sensor module 104 may include at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, a proximity sensor, a biometric sensor, an ultrasonic sensor, or an illuminance sensor 104.

According to certain embodiments, the camera devices 105 and 108 may include a first camera device 105 (e.g., front camera device) disposed on the first surface 111 of the first housing 110, and a second camera device 108 disposed on the second surface 112 of the first housing 110. The electronic device 100 may further include a flash 109 disposed close to the second camera device 108. According to an embodiment, the camera device 105 or 108 may include one or more lenses, an image sensor, and/or an image signal processor. The flash 109 may include, for example, a light emitting diode or a xenon lamp. According to an embodiment, the camera devices 105 and 108 may be arranged so that two or more lenses (e.g., wide-angle lens, super-wide-angle lens, or telephoto lens) and image sensors are positioned on one surface (e.g., first surface 111, second surface 112, third surface 121, or fourth surface 122) of the electronic device 100. In certain embodiments, the camera devices 105 and 108 may include time-of-flight (TOF) lenses and/or an image sensor.

According to certain embodiments, the key input device 106 (e.g., key button) may be disposed on the third side surface 113c of the first side member 113 of the first housing 110. In certain embodiments, the key input device 106 may be disposed on at least one of the other side surfaces 113a and 113b of the first housing 110 and/or the side surfaces 123a, 123b and 123c of the second housing 120. In certain embodiments, the electronic device 100 may not include some or all of the key input devices 106, and those not included key input devices 106 may be implemented in other forms, such as soft keys, on the flexible display 400. In certain embodiments, the key input device 106 may be implemented by using a pressure sensor included in the flexible display 400.

According to certain embodiments, some of the camera devices 105 and 108 (e.g., first camera device 105) or the sensor module 104 may be disposed to be exposed through the flexible display 400. For example, the first camera device 105 or the sensor module 104 may be arranged in the internal space of the electronic device 100 so as to be in contact with the external environment through an opening (e.g., through hole) formed at least partially in the flexible display 400. In another embodiment, some sensor modules 104 may be arranged in the internal space of the electronic device 100 so as to perform their functions without being visually exposed through the flexible display 400. For example, in this case, the opening of a region of the flexible display 400 facing the sensor module may not be needed.

With reference to FIG. 2B, the electronic device 100 may be operated to remain in an intermediate state through the hinge mechanism (e.g., hinge device 140 in FIG. 1B). In this case, the electronic device 100 may control the flexible display 400 to display different pieces of content on the display area corresponding to the first surface 111 and the display area corresponding to the third surface 121. According to an embodiment, the electronic device 100 may be operated substantially in an unfolded state (e.g., unfolded state of FIG. 1A) and/or substantially in a folded state (e.g., folded state of FIG. 2A) with respect to a specific inflection angle (e.g., angle between the first housing 110 and the second housing 120 in the intermediate state) through the hinge mechanism (e.g., hinge mechanism 140 in FIG. 1B). For example, when a pressing force is applied in the unfolding direction (B direction) in a state where the electronic device 100 is unfolded at a specific inflection angle, through the hinge mechanism (e.g., hinge mechanism 140 in FIG. 1B), the electronic device 100 may be transitioned to an unfolded state (e.g., unfolded state of FIG. 1A). For example, when a pressing force is applied in the folding direction (C direction) in a state where the electronic device 100 is unfolded at a specific inflection angle, through the hinge mechanism (e.g., hinge mechanism 140 in FIG. 1B), the electronic device 100 may be transitioned to a closed state (e.g., folded state of FIG. 2A). In an embodiment, the electronic device 100 may be operated to remain in an unfolded state at various angles (not shown) through the hinge mechanism (e.g., hinge mechanism 140 in FIG. 1B).

According to various embodiments, the electronic device 100 may include a structure allowing an electronic pen to be attached (or accommodated). For example, the electronic device 100 may include a space capable of accommodating the electronic pen. In another example, the electronic device 100 may include at least one magnetic material at a position adjacent to an attachment region so that the electronic pen can be attached to the outside of the housing. The electronic pen may be attached to the outside of the housing of the electronic device 100 through the at least one magnetic material. In some embodiments, the electronic device may further include a detection circuit capable of detecting whether or not the electronic pen is attached (or accommodated). In this case, by detecting a resonance circuit generated from the electronic pen, the electronic device may detect whether the electronic pen is attached. In some embodiments, the electronic device may include a magnetic force detection sensor (e.g., a Hall sensor or a magnetic reed switch) therein, and detect whether the electronic pen is attached by detecting a magnetic material included in the electronic pen.

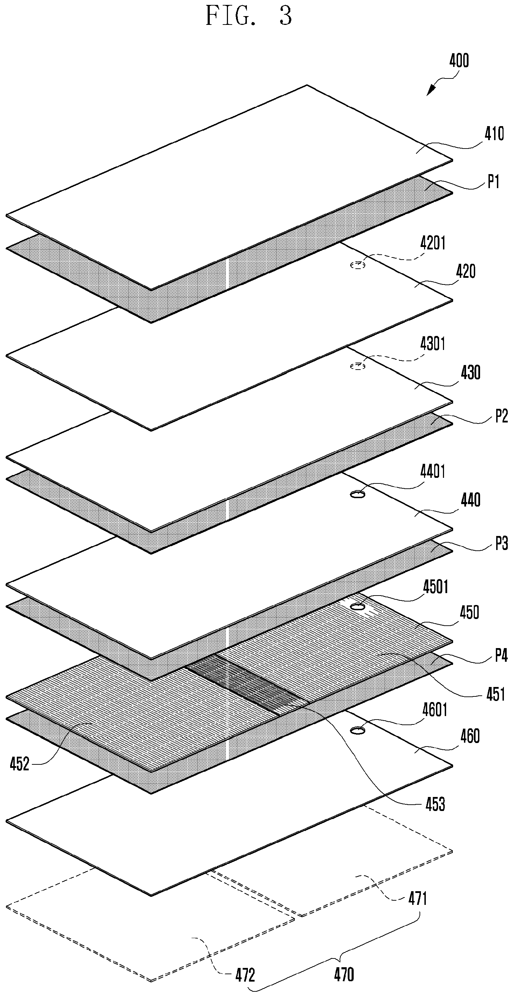

FIG. 3 is an exploded perspective view illustrating a flexible display 400 according to various embodiments of the disclosure.

The display (e.g., the flexible display 400) according to embodiments of the disclosure may include an unbreakable (UB) type OLED display (e.g., a curved display). However, the flexible display 400 is not limited to the above and may include a flat type display of an OCTA (on cell touch AMOLED (active matrix organic light-emitting diode)) scheme.

With reference to FIG. 3, the flexible display 400 may include a window layer 410 and also include a polarization layer 420 (polarizer (POL)) (e.g., a polarizing film), a display panel 430, a polymer layer 440, a metal sheet layer 450, and a digitizer 460 which are sequentially disposed on the rear surface of the window layer 410. In some embodiments, the display may further include a metal reinforcing plate 470 disposed under the metal sheet layer 450. According to an embodiment, the window layer 410 may include a glass layer. According to an embodiment, the window layer 410 may include ultra-thin glass (UTG). In some embodiments, the window layer 410 may include a polymer. In this case, the window layer 410 may include polyethylene terephthalate (PET) or polyimide (PI). In some embodiments, the window layer 410 may be disposed in plural. In some embodiments, the window layer 410 may be disposed with an adhesive having a weaker adhesive strength or a smaller thickness than the adhesive of the other layers to be well separated from the other layers. In some embodiments, the window layer 410 may further include various coating layers formed on at least a portion of at least one of their upper, lower, and side surfaces.

According to various embodiments, the window layer 410, the polarization layer 420, the display panel 430, the polymer layer 440, the metal sheet layer 450, and the digitizer 460 may be disposed to cross at least a portion of a first surface (e.g., the first surface 111 in FIG. 1A) of a first housing (e.g., the first housing 110 in FIG. 1A) and a third surface (e.g., the third surface 121 in FIG. 1A) of a second housing (e.g., the second housing 120 in FIG. 1A). According to an embodiment, the window layer 410, the polarization layer 420, the display panel 430, the polymer layer 440, the metal sheet layer 450, and the digitizer 460 may be attached to each other through adhesives P1, P2, P3, and P4. For example, the adhesives P1, P2, P3, and P4 may include at least one of an optical clear adhesive (OCA), a pressure sensitive adhesive (PSA), a heat-responsive adhesive, a normal adhesive, and a double-sided tape.

According to various embodiments, the display panel 430 may include a plurality of pixels. According to an embodiment, the polarization layer 420 may selectively pass light generated from a light source of the display panel 430 and vibrating in a predetermined direction. According to an embodiment, the display panel 430 and the polarization layer 420 may be integrally formed. According to an embodiment, the flexible display 400 may include a touch panel (not shown). Although not shown, the display panel 430 may include a control circuit. According to an embodiment, the control circuit may include a display driver IC (DDI) and/or a touch display driver IC (TDDI) disposed in a chip on panel (COP) or chip on film (COF) scheme.

According to various embodiments, the polymer layer 440 may be disposed under the display panel 430 to provide a dark background for ensuring visibility of the display panel 430, and formed of a buffer material for a buffering action.

According to various embodiments, the metal sheet layer 450 may provide bending characteristics to the flexible display 400. For example, the metal sheet layer 450 may include a first flat portion 451 corresponding to the first surface (e.g., the first surface 111 in FIG. 1A) of the first housing (e.g., the first housing 110 in FIG. 1A), a second flat portion 452 corresponding to the third surface (e.g., the third surface 121 in FIG. 1A) of a second housing (e.g., the second housing 120 in FIG. 1A), and a bendable portion 453 corresponding to the hinge module (e.g., the hinge module 140 in FIG. 1B) and connecting the first flat portion 451 and the second flat portion 452.

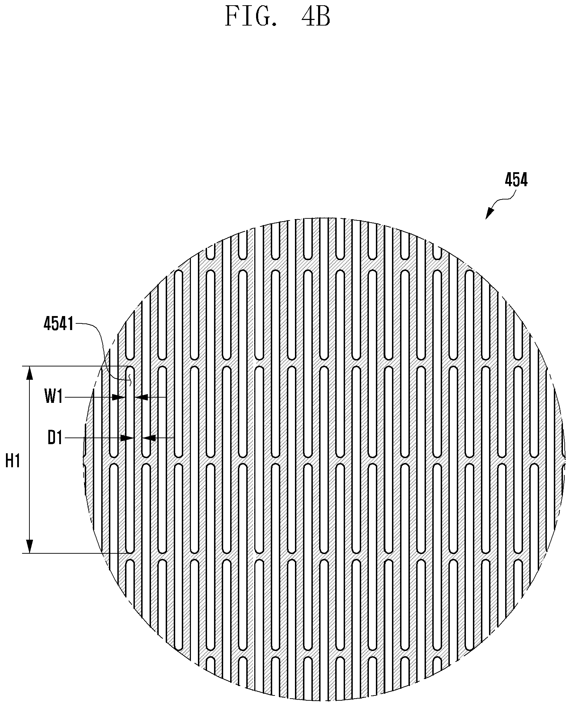

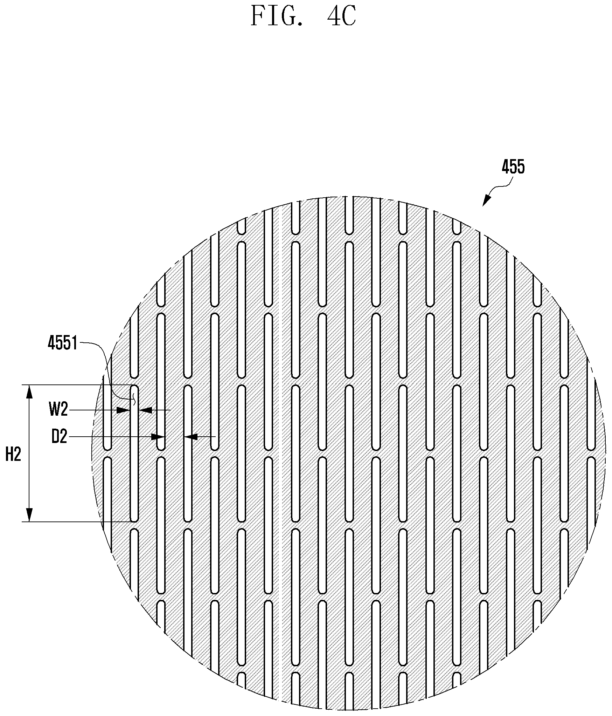

According to various embodiments, the metal sheet layer 450 may be formed to have a structure allowing the digitizer 460 disposed thereunder to recognize an external electronic pen through the metal sheet layer 450. According to an embodiment, the metal sheet layer 450 may have a pattern structure through which a magnetic field can pass so that the digitizer 460 disposed thereunder can detect the electronic pen in contact with or proximity to the outer surface of the flexible display 400 from the outside of the foldable electronic device (e.g., the foldable electronic device 100 in FIG. 1A). According to an embodiment, the bendable portion 453 may have a first pattern (e.g., the first pattern 454 in FIG. 4B) including a plurality of first openings (e.g., the plurality of first openings 4541 in FIG. 4B). According to an embodiment, the first flat portion 451 and the second flat portion 452 may have a second pattern (e.g., the second pattern 455 in FIG. 4C) including a plurality of second openings (e.g., the plurality of second openings 4551 in FIG. 4C). According to an embodiment, the plurality of first openings (e.g., the plurality of first openings 4541 in FIG. 4B) of the first pattern (e.g., the first pattern 454 in FIG. 4B) formed in the bendable portion 453 may be formed in a shape for allowing the digitizer 460 to detect a wireless signal (e.g., a resonance frequency) of the electronic pen and for determining the bending characteristic of the flexible display 400. According to an embodiment, the plurality of second openings (e.g., the plurality of second openings 4551 in FIG. 4C) of the second pattern (e.g., the second pattern 455 in FIG. 4C) formed in the first flat portion 451 and the second flat portion 452 may be formed in a shape for allowing the digitizer 460 to detect a wireless signal (e.g., a resonance frequency) of the electronic pen and for having a rigid support structure for supporting the flexible display 400. According to an embodiment, the metal sheet layer 450 may include at least one of steel use stainless (SUS) (e.g., stainless steel (STS)), Cu, Al, or a metal clad (e.g., a stack member in which SUS and A1 are alternately disposed). In some embodiments, the metal sheet layer 450 may include any other alloy material. In some embodiments, the metal sheet layer 450 can help in reinforcing the rigidity of the electronic device (e.g., the electronic device 100 in FIG. 1A), shield ambient noise, and dissipate heat emitted from nearby heat-generating components.

According to various embodiments, the digitizer 460 is disposed under the metal sheet layer 450 and may include a detection member that receives an input of an electronic pen (e.g., a stylus). For example, the digitizer 460 may include, as the detection member, a coil member disposed on a dielectric substrate to detect a resonance frequency of an electromagnetic induction scheme applied from the electronic pen. For example, when an AC voltage is applied through the coil member of the digitizer 460, a magnetic field is formed, and a current flows an internal coil of the adjacent electronic pen according to the electromagnetic induction law. Thus, a resonance frequency is formed through a pen internal circuit, and the digitizer 460 may recognize this.

According to various embodiments, the flexible display 400 may include at least one functional member (not shown) disposed between the polymer layer 440 and the metal sheet layer 450, between the digitizer 460 and the metal sheet layer 450, and/or below the metal sheet layer 450. According to an embodiment, the functional member may include a graphite sheet for heat dissipation, an added display, a force-touch FPCB, a fingerprint sensor FPCB, an antenna radiator for communication, a conductive/non-conductive tape, or an open cell sponge. According to an embodiment, when bending is not possible, the functional member may be individually disposed in the first housing (e.g., the first housing 110 in FIG. 1A) and the second housing (e.g., the second housing 120 in FIG. 1A). According to an embodiment, when bending is possible, the functional member may be disposed from the first housing (e.g., the first housing 110 in FIG. 1A) up to at least a portion of the second housing (e.g., the second housing 120 in FIG. 1A), passing through the hinge module (e.g., the hinge module 140 in FIG. 1B).

According to various embodiments, the electronic device (e.g., the electronic device 100 in FIG. 1A) may include a camera device (e.g., the first camera device 105 in FIG. 1A) that is disposed under the flexible display 400 and detects an external environment through the flexible display 400. In some embodiments, the electronic device (e.g., the electronic device 100 in FIG. 1A) may include at least one sensor module (e.g., the sensor module 104 in FIG. 1A) (e.g., an illuminance sensor, a proximity sensor, or a TOF sensor) disposed under the flexible display 400. According to an embodiment, the polarization layer 420, the display panel 430, the polymer layer 440, the metal sheet layer 450, and the digitizer 460 may have through-holes 4201, 4301, 4401, 4501, and 4601 formed at corresponding positions for detection of an external environment through the camera device (e.g., the first camera device 105 in FIG. 1A) disposed thereunder. In some embodiments, the display panel 430 and/or the polarization layer 420 may not need the through-holes 4201 and 4301 through adjustment in the transmittance of corresponding regions. In some embodiments, the sizes of the through-holes 4201, 4301, 4401, 4501, and 4601 may be determined based on the size of the camera device (e.g., the first camera device 105 in FIG. 1A) and/or the angle of view of the camera device (e.g., the first camera device 105 in FIG. 1A), and the respective sizes of the through-holes 4201, 4301, 4401, 4501, and 4601 may be different from each other.

According to various embodiments, the reinforcing plate 470 may be formed of a metal material, and may include a first reinforcing plate 471 facing the first flat portion 451 of the metal sheet layer 450 and a second reinforcing plate 472 facing the second flat portion 452 of the metal sheet layer 450.

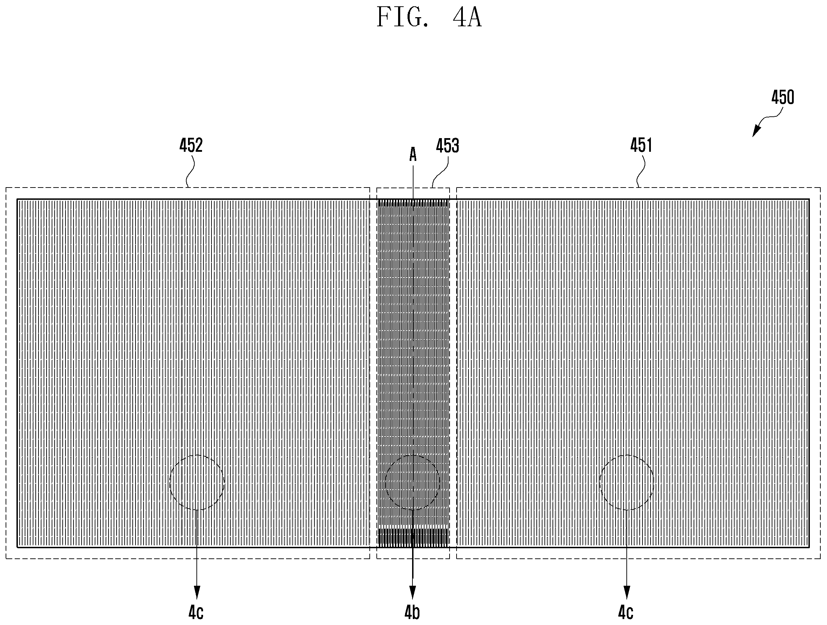

FIG. 4A is a view illustrating configuration of a metal sheet layer 450 according to various embodiments of the disclosure. FIG. 4B is an enlarged view of a region 4b of FIG. 4A according to various embodiments of the disclosure. FIG. 4C is an enlarged view of a region 4c of FIG. 4A according to various embodiments of the disclosure.

With reference to FIGS. 4A to 4C, the metal sheet layer 450 may include the first flat portion 451 facing the first region (e.g., the first region 130a in FIG. 1B) corresponding to the first housing (e.g., the first housing 110 in FIG. 1B) of the foldable electronic device (e.g., the electronic device 100 in FIG. 1B), the second flat portion 452 facing the second region (e.g., the second region 130b in FIG. 1B) corresponding to the second housing (e.g., the second housing 120 in FIG. 1B), and the bendable portion 453 facing the third region (e.g., the third region 130c in FIG. 1B) corresponding to the hinge module (e.g., the hinge module 140 in FIG. 1B). According to an embodiment, the bendable portion 453 may include the first pattern 454 having the plurality of first openings 4541. According to an embodiment, the plurality of first openings 4541 of the first pattern 454 may have a shape, arrangement structure, and arrangement density capable of determining the bending characteristics of the flexible display 400. For example, as illustrated, each of the plurality of first openings 4541 may be formed as a slit having a first length H1 along the folding axis (axis A), a first width W1 smaller than the first length H1, and a first distance D1 from the adjacent first opening. According to an embodiment, the bendable portion 453 may provide elastic force and bending characteristics through the first pattern 454 and also allow the digitizer (e.g., the digitizer 460 in FIG. 3) to detect a wireless signal of the external electronic pen.

According to various embodiments, the metal sheet layer 450 may include a plurality of bendable portions 453. According to an embodiment, the number of bendable portions 453 may be determined based on the number of hinge modules included in the electronic device.

According to various embodiments, the first flat portion 451 and the second flat portion 452 may include the second pattern 455 having the plurality of second openings 4551. According to an embodiment, the plurality of second openings 4551 of the second pattern 455 may have a shape and/or arrangement structure capable of providing rigidity characteristics for supporting the flexible display 400. For example, as illustrated, each of the plurality of second openings 4551 may be formed as a slit having a second length H2 along the folding axis (axis A), a second width W2 smaller than the second length H2, and a second distance D2 from the adjacent second opening. According to an embodiment, the first flat portion 451 and the second flat portion 452 may provide rigidity through the second pattern 455 and also allow the digitizer (e.g., the digitizer 460 in FIG. 3) to detect a wireless signal of the external electronic pen.

According to various embodiments, the first pattern 454 including the plurality of first openings 4541 may be formed to have a first aperture ratio (e.g., an aperture ratio per unit area) for providing the bending characteristics and an effective signal transfer rate (e.g., a signal transfer rate of about 70% or more) capable of transmitting wireless signals emitted from the electronic pen to the digitizer (e.g., the digitizer 460 in FIG. 3). According to an embodiment, the second pattern 455 including the plurality of second openings 4551 may be formed to satisfy the effective signal transfer rate that can transmit wireless signals emitted from the electronic pen to the digitizer (e.g., the digitizer 460 in FIG. 3). According to an embodiment, when the effective signal transfer rate is satisfied, the second pattern 455 may be formed to have a second aperture ratio (e.g., an aperture ratio per unit area) lower than the first aperture ratio. This may be because the first flat portion 451 and the second flat portion 452 provided with the second pattern 455 require high rigidity to support the flexible display 400. For example, when the unit opening 4541 of the first pattern 454 and the unit opening 4551 of the second pattern 455 have the same shape, the first length H1 may be greater than the second length H2, the first width W1 may be greater than the second width W2, or the first distance D1 may be smaller than the second distance D2. In some embodiments, the plurality of first openings 4541 of the first pattern 454 may be formed in various shapes capable of providing the bending characteristics of the bendable portion 453. In some embodiments, the plurality of second openings 4551 of the second pattern 455 may be formed in various shapes capable of having the second aperture ratio lower than the first aperture ratio of the first pattern 454 while satisfying the effective signal transfer rate without considering the bending characteristics. In some embodiments, the plurality of second openings 4551 of the second pattern 455 may be formed to be different in shape, distance, and/or arrangement structure from the plurality of first openings 4541 of the first pattern 454. In some embodiments, in the second pattern 455, the plurality of second openings 4551 corresponding to the first flat portion 451 and the plurality of second openings 4551 corresponding to the second flat portion 452 may be formed differently.

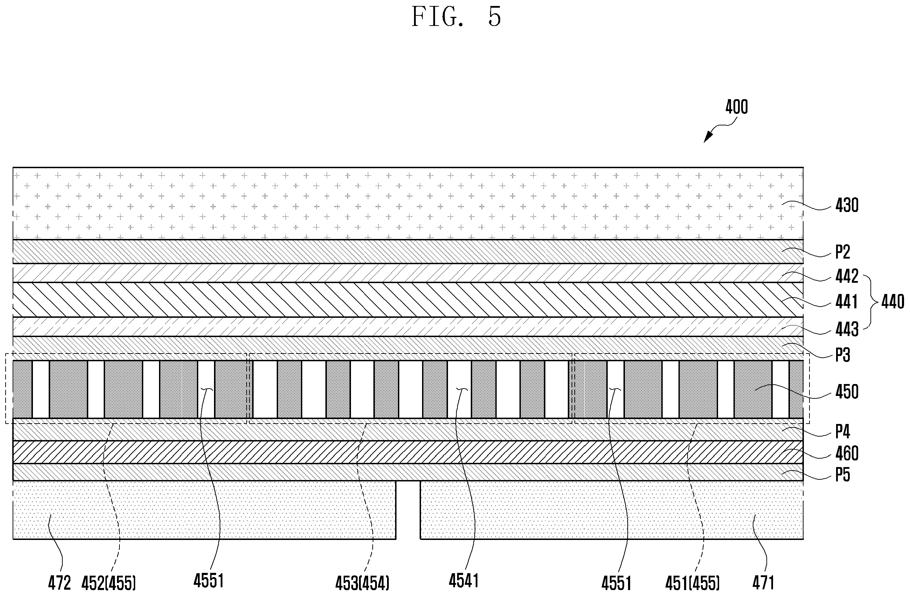

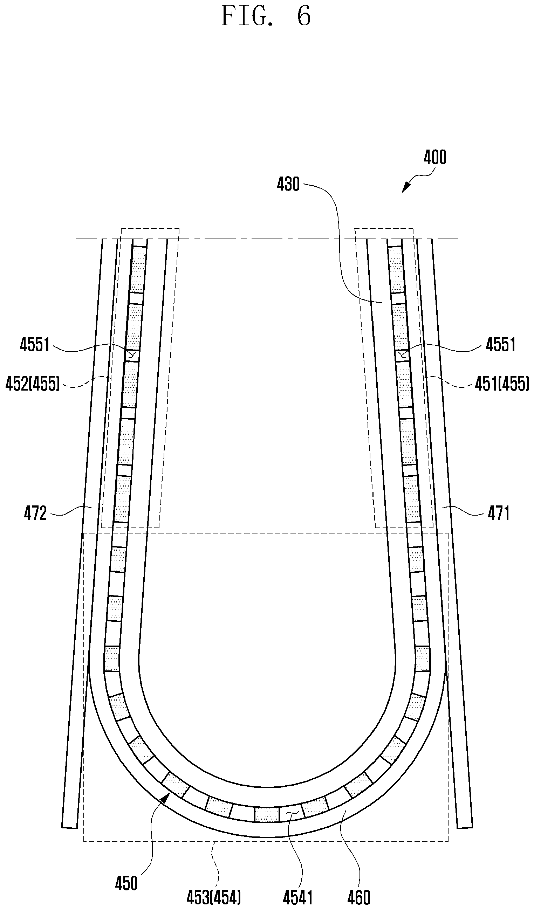

FIG. 5 is a partial cross-sectional view of a flexible display 400 taken along a line 5-5 of FIG. 1A according to various embodiments of the disclosure. FIG. 6 is a view illustrating a folded state of a flexible display 400 according to various embodiments of the disclosure.

With reference to FIG. 5, the flexible display 400 may include the display panel 430 and also include the polymer layer 440, the metal sheet layer 450, the digitizer 460, and reinforcing plates 471 and 472, which are sequentially disposed under the display panel 430. According to an embodiment, the flexible display 400 may be disposed to cross at least a portion of the first surface (e.g., the first surface 111 in FIG. 1A) of the first housing (e.g., the first housing 110 in FIG. 1A) and the third surface (e.g., the third surface 121 in FIG. 1A) of the second housing (e.g., the second housing 120 in FIG. 1A). According to an embodiment, the polymer layer 440 may include a cushion layer 441 and first and second layers 442 and 443 stacked with the cushion layer 441 interposed therebetween. According to an embodiment, the polymer layer 440 may have a stack structure for blocking the inflow of foreign matters through the plurality of first openings 4541 formed in the first pattern 454 of the metal sheet layer 450 and the plurality of second openings 4551 formed in the second pattern 455 of the metal sheet layer 450, and for preventing visibility of a folding boundary region of the flexible display 400 in the bendable portion 453 due to the folding and unfolding operation of the flexible display 400. According to an embodiment, the cushion layer 441 may be formed of a material (e.g., sponge or poron) for cushioning. According to an embodiment, the first layer 442 disposed on the cushion layer 441 and the second layer 443 disposed under the cushion layer 441 may be formed of a material (e.g., TPU) for improving a surface quality (improving visibility).

According to various embodiments, the display panel 430, the polymer layer 440, the metal sheet layer 450, and the digitizer 460 may be attached to each other through adhesives P2, P3, and P4. For example, the adhesives P2, P3, and P4 may include at least one of an optical clear adhesive (OCA), a pressure sensitive adhesive (PSA), a heat-responsive adhesive, a normal adhesive, and a double-sided tape. According to an embodiment, the first reinforcing plate 471 may be attached to the digitizer 460 through the adhesive member P5 in a region corresponding to the first flat portion 451 and at least a part of the bendable portion 453 of the metal sheet layer 450 when the display panel 430 is viewed from above. According to an embodiment, the second reinforcing plate 472 may be attached to the digitizer 460 through the adhesive member P5 in a region corresponding to the second flat portion 452 and at least a part of the bendable portion 453 of the metal sheet layer 450 when the display panel 430 is viewed from above. According to an embodiment, the first reinforcing plate 471 may be attached to the first housing (e.g., the first housing 110 in FIG. 1A) of the electronic device through another adhesive member. According to an embodiment, the second reinforcing plate 472 may be attached to the second housing (e.g., the second housing 120 in FIG. 1A) of the electronic device through another adhesive member. According to an embodiment, another adhesive member may include a double-sided tape or a waterproof tape.

According to various embodiments, the digitizer 460 may detect the wireless signal of the electronic pen received through the first pattern 454 formed in the bendable portion 453 of the metal sheet layer 450, and also help in determining the bending characteristics of the flexible display 400. According to an embodiment, the digitizer 460 may detect the wireless signal of the electronic pen received through the second pattern 455 formed in the first and second flat portions 451 and 452 of the metal sheet layer 450, and also help in reinforcing the rigidity for supporting the flexible display 400.

With reference to FIG. 6, the metal sheet layer 450 may include the first flat portion 451 attached at least in part to the first reinforcing plate 471, the second flat portion 452 attached at least in part to the second reinforcing plate 472, and the bendable portion 453 connecting the first flat portion 451 and the second flat portion 452 and providing bending characteristics. According to an embodiment, the bendable portion 453 may include the first pattern 454 having the plurality of first openings 4541. According to an embodiment, the first planar part 451 and the second planar part 452 may include the second pattern 455 having the plurality of second openings 4551. According to an embodiment, when the display panel 430 is folded with a certain curvature in the folded state, the metal sheet layer 450 and the digitizer 460 disposed thereunder may also be folded together, and the first and second reinforcing plates 471 and 472 may be spread left and right together with the first and second housings because of a non-adhesive region formed by a certain distance from the center of the bendable portion 453 to both sides.

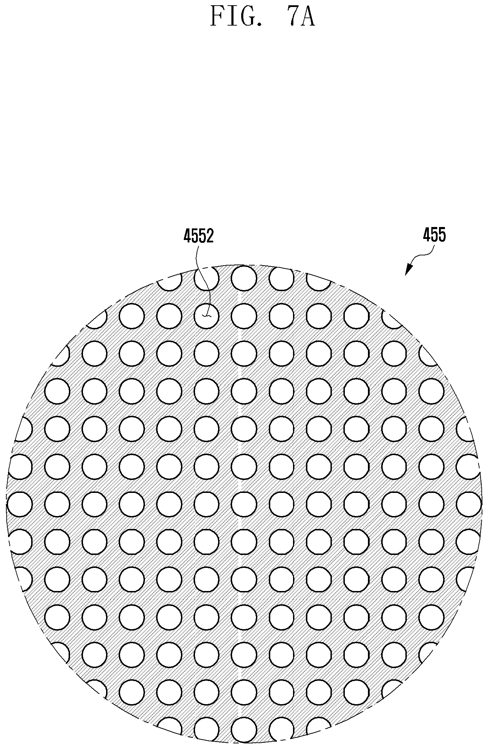

FIGS. 7A to 7D are views illustrating shapes of a second pattern 455 in flat portions 451 and 452 of a metal sheet layer 450 according to various embodiments of the disclosure.

With reference to FIG. 7A, the second pattern 455 disposed in the first and second flat portions 451 and 452 of the metal sheet layer (e.g., the metal sheet layer 450 in FIG. 3) may have circular openings 4552 disposed at specified intervals. According to an embodiment, the circular openings 4552 may have a size and arrangement structure for reinforcing the rigidity while satisfying the effective signal transfer rate between the electronic pen and the digitizer (e.g., the digitizer 460 in FIG. 3) through the metal sheet layer 450. In some embodiments, the openings 4552 may be formed in an oval, square, or polygonal shape rather than a circular shape. In some embodiments, the openings 4552 of different shapes may be arranged alternately regularly or irregularly.

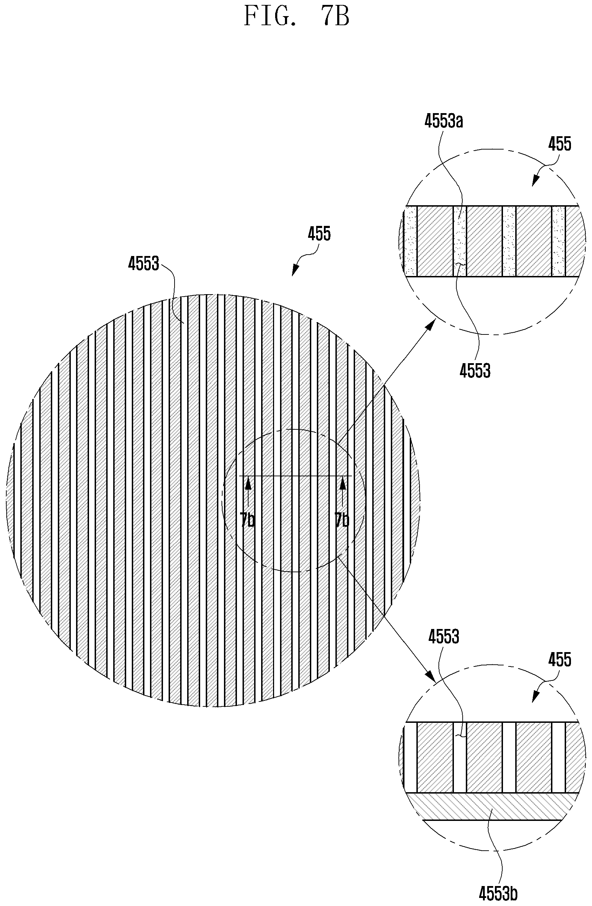

With reference to FIG. 7B, the second pattern 455 disposed on the first and second flat portions 451 and 452 of the metal sheet layer (e.g., the metal sheet layer 450 in FIG. 3) may have elongated slits 4553 arranged at predetermined intervals. In this case, as shown in a cross-sectional view of the second pattern 455 taken along a line 7b-7b, the slits 4553 may be connected through an elastic filling material 4553a (e.g., silicone urethane or rubber) or an adhesive tape 4553b. In some embodiments, the filling material and/or the adhesive tape may be applied to the plurality of openings 4552 of the circular or polygonal shape described above.

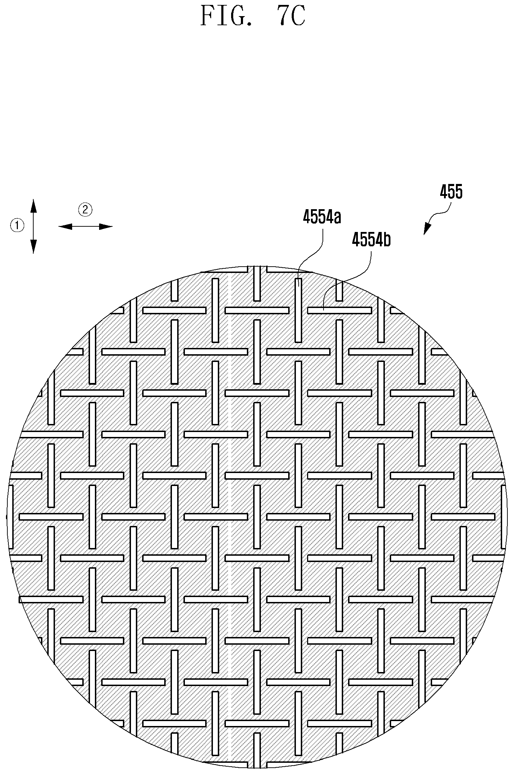

In some embodiments, the openings 4541 of the first pattern 454 and the openings 4551 of the second pattern 455 in the metal sheet layer (e.g., the metal sheet layer 450 in FIG. 3) may be filled with filling materials. In this case, the filling material filled in the openings 4541 of the first pattern 454 and the filling material filled in the openings 4551 of the second pattern 455 may be different from each other in modulus characteristics. For example, the filling material filled in the openings 4541 of the first pattern 454 may have a soft characteristic, thereby helping the bending characteristics, and the filling material filled in the openings 4551 of the second pattern 455 may have a relatively rigid characteristic, thereby helping in reinforcing the rigidity. With reference to FIG. 7C, the second pattern 455 disposed in the first and second flat portions 451 and 452 of the metal sheet layer (e.g., the metal sheet layer 450 in FIG. 3) may have a plurality of openings 4554a and 4554b which are alternately disposed to have lengths in directions perpendicular to each other. According to an embodiment, the plurality of openings 4554a and 4554b may include a first plurality of openings 4554a disposed at predetermined intervals to have a length in a first direction (direction ①) (e.g., the x-axis direction in FIG. 1A), and a second plurality of openings 4554b alternately disposed between the first plurality of openings 4554a and disposed to have a length in a second direction (direction ②) (e.g., the y-axis direction in FIG. 1A) perpendicular to the first direction (direction ①). Through such alternating arrangement (cross arrangement) along the longitudinal directions of the plurality of openings 4554a and 4554b, the first and second flat portions 451 and 452 of the metal sheet layer 450 may have reinforced rigidity and help in reducing eddy currents induced to the metal sheet layer 450 through the digitizer.

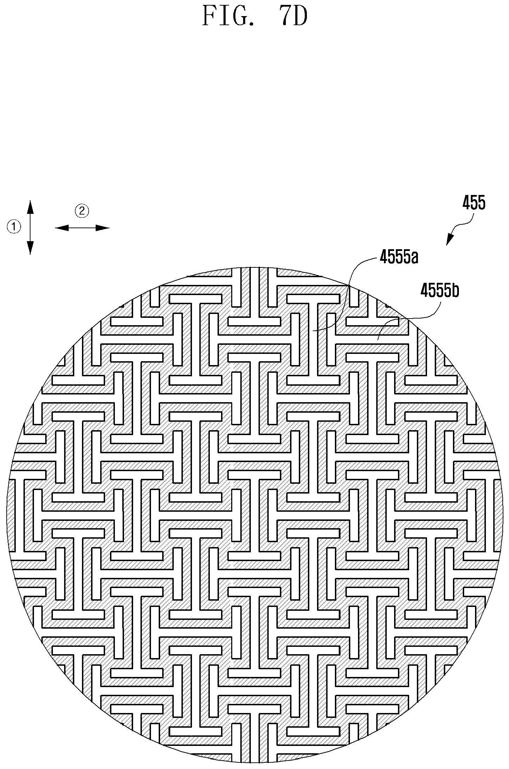

With reference to FIG. 7D, the second pattern 455 disposed in the first and second flat portions 451 and 452 of the metal sheet layer (e.g., the metal sheet layer 450 in FIG. 3) may have a plurality of openings 4555a and 4555b alternately disposed to have lengths in directions perpendicular to each other in a manner similar to that of FIG. 7C. According to an embodiment, the plurality of openings 4555a and 4555b are formed in an 'I' shape, thereby increasing the signal transfer rate through the digitizer by increasing the aperture ratio while maintaining the rigidity of the first and second flat portions 451 and 452.

According to various embodiments, in the first and second flat portions 451 and 452 of the metal sheet layer 450, the aperture ratio and/or the signal transfer rate of the digitizer 460 may be determined depending on the width, length, and/or shape of the plurality of openings 4554a, 4554b, 4555a, and 4555b.

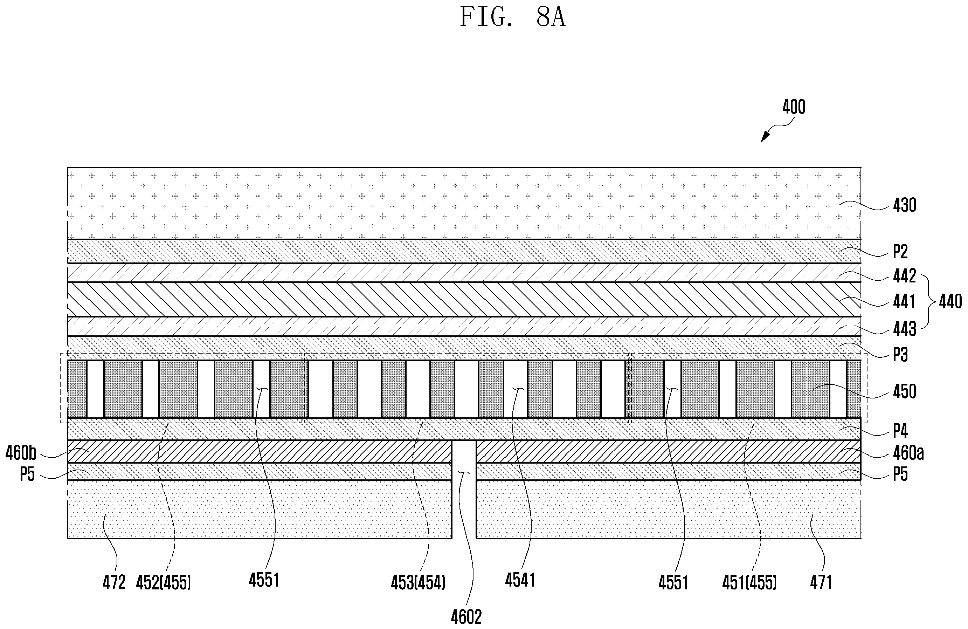

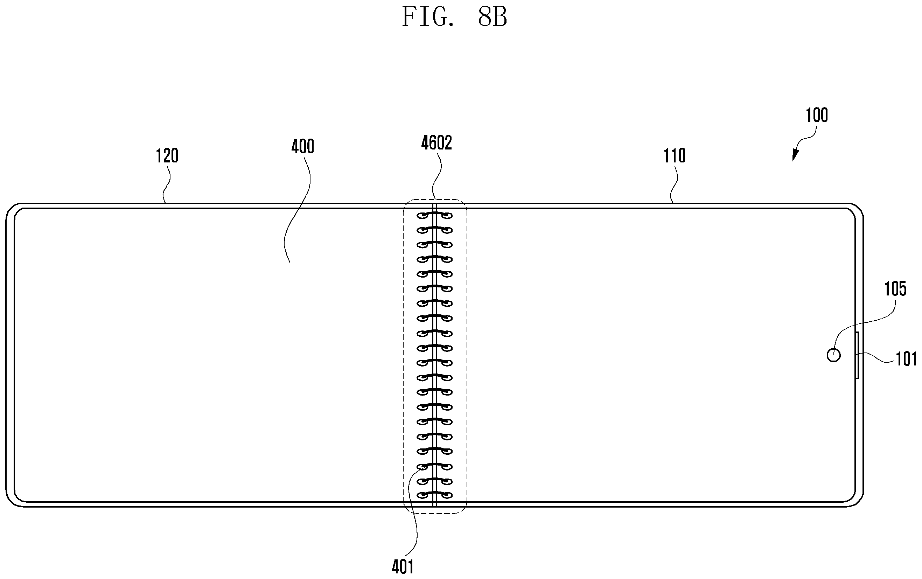

FIG. 8A is a partial cross-sectional view of a flexible display 400 including two digitizers 460a and 460b according to various embodiments of the disclosure. FIG. 8B is a view illustrating a foldable electronic device 100 according to various embodiments of the disclosure.

In describing FIGS. 8A and 8B, detailed descriptions of components substantially the same as those shown in FIG. 5 may be omitted.

With reference to FIG. 8A, the electronic device (e.g., the electronic device 100 in FIG. 8B) may include the flexible display 400. According to an embodiment, the flexible display 400 may include the display panel 430 and also include the polymer layer 440, the metal sheet layer 450, a pair of digitizers 460, and the reinforcing plates 471 and 472, which are sequentially disposed under the display panel 430. According to an embodiment, the flexible display 400 may be disposed to be supported by at least a portion of the first housing (e.g., the first housing 110 in FIG. 8B) and the second housing (e.g., the second housing 120 in FIG. 8B) of the electronic device (e.g., the electronic device 100 in FIG. 8B).

According to various embodiments, when the display panel 430 is viewed from above, the pair of digitizers 460a and 460b may include a first digitizer 460a attached to the metal sheet layer 450 through the adhesive member P5 in a region overlapped with the first flat portion 451 and at least a part of the bendable portion 453 of the metal sheet layer 450, and a second digitizer 460b attached to the metal sheet layer 450 through the adhesive member P5 in a region overlapped with the second flat portion 452 and at least a part of the bendable portion 453 of the metal sheet layer 450. According to an embodiment, in the central region of the bendable portion 453, the digitizers 460a and 460b are divided into the first digitizer 460a and the second digitizer 460b having a separation space 4602 helping the bending characteristics of the flexible display 400 through the metal sheet layer 450.

According to various embodiments, because of failing to detect the coordinates of the electronic pen in the separation space 4602 between the first and second digitizers 460a and 460b, the electronic device (e.g., the processor) (e.g., the electronic device 100 in FIG. 8A) may be configured to predict the input coordinates of the electronic pen through an interpolation method considering the last recognized coordinates, input speed, and/or angle of the electronic pen.

With reference to FIG. 8B, because of failing to detect the coordinates of the electronic pen in the separation space 4602 between the first and second digitizers 460a and 460b, the electronic device (e.g., the electronic device 100 in FIG. 8A) may be configured to display a guide object 401 for informing the user about unrecognizing the electronic pen on a display area corresponding to the separation space 4602. The guide object 401 may include a spring image of a spring note or a binding area image that cannot be written substantially.

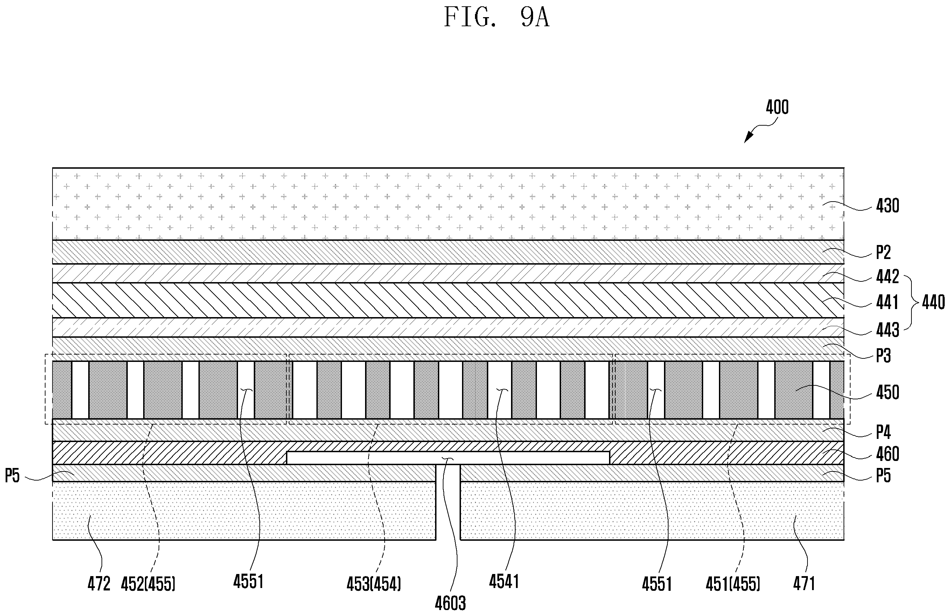

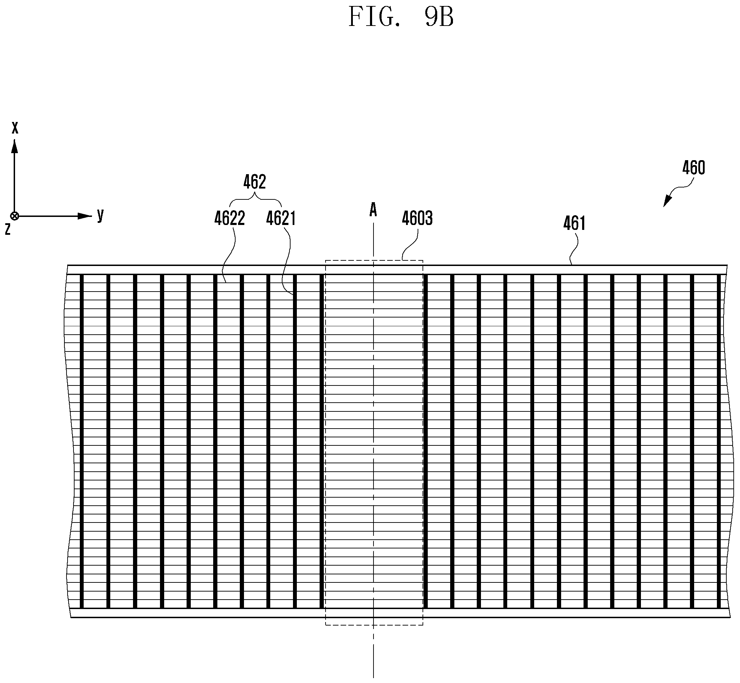

FIG. 9A is a partial cross-sectional view of a flexible display 400 including a digitizer 460 having a step region 4603 according to various embodiments of the disclosure. FIG. 9B is a partial constitution view of a digitizer 460 having a step region 4603 according to various embodiments of the disclosure.

In describing FIGS. 9A and 9B, detailed descriptions of components substantially the same as those shown in FIG. 5 may be omitted.

With reference to FIG. 9A, the flexible display 400 may include the display panel 430 and also include the polymer layer 440, the metal sheet layer 450, the digitizer 460, and the reinforcing plates 471 and 472, which are sequentially disposed under the display panel 430. According to an embodiment, the flexible display 400 may be disposed to be supported by at least a portion of the first housing (e.g., the first housing 110 in FIG. 1A) and the second housing (e.g., the second housing 120 in FIG. 1A) of the electronic device (e.g., the electronic device 100 in FIG. 1A).

According to various embodiments, the digitizer 460 may include the stepped region 4603 in which a thickness in a region overlapped with at least a part of the bendable portion 453 of the metal sheet layer 450, when the display panel 430 is viewed from above, is formed to be smaller than the thicknesses of the first and second flat portions 451 and 452. According to an embodiment, the stepped region 4603 formed in the digitizer around the central region of the bendable portion 453 may help the bending characteristics of the flexible display 400 through the metal sheet layer 450.

With reference to FIG. 9B, the digitizer 460 may include a dielectric substrate 461 (e.g., a dielectric film) and a coil member 462 (e.g., a Cu pattern) disposed on the dielectric substrate 461. According to an embodiment, the coil member 462 may include a first conductive pattern 4621 disposed on the dielectric substrate 461 in a first direction (e.g., the x-axis direction) at regular intervals, and a second conductive pattern 4622 intersecting the first conductive pattern 4621 and disposed in a second direction (e.g., the y-axis direction) at regular intervals. In some embodiments, the first conductive pattern 4621 and the second conductive pattern 4622 may vertically intersect. In some embodiments, the first conductive pattern 4621 and the second conductive pattern 4622 may cross each other at various angles. According to an embodiment, the first conductive pattern 4621 and the second conductive pattern 4622 may be electrically connected to form a magnetic field. According to an embodiment, the digitizer 460 may be formed such that only the second conductive pattern 4622 is disposed in the stepped region 4603. In this case, because the digitizer 460 includes only the first conductive pattern 4621 in the stepped region 4603, the dielectric substrate 461 may be formed to have a smaller thickness than that of periphery in the region corresponding to the bendable portion 453 of the metal sheet layer 450. In some embodiments, the digitizer 460 may be formed to include only the second conductive pattern 4622 in the stepped region 4603. In some embodiments, in the step region 4603 of the digitizer 460, the thickness of the dielectric substrate 461 may be reduced by forming the arrangement density of the first and second conductive patterns 4621 and 4622 to be lower than that of the periphery or forming the intersections to be smaller than those of the periphery, so it may help in improving the bending characteristics of the flexible display 400.

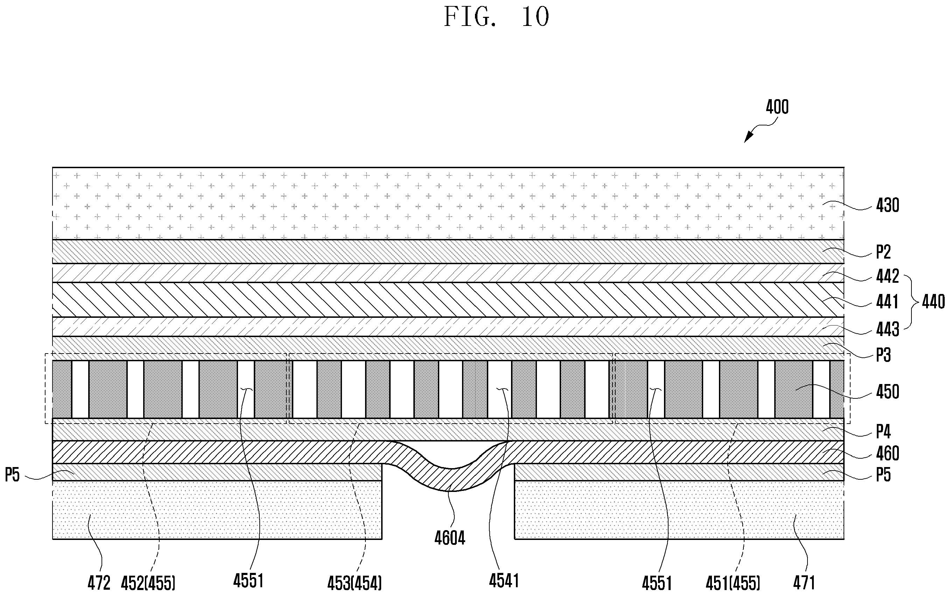

FIG. 10 is a partial cross-sectional view of a flexible display 400 including a digitizer 460 having a margin region 4604 according to various embodiments of the disclosure.

In describing FIG. 10, detailed descriptions of components substantially the same as those shown in FIG. 5 may be omitted.

With reference to FIG. 10, the flexible display 400 may include the display panel 430 and also include the polymer layer 440, the metal sheet layer 450, the digitizer 460, and the reinforcing plates 471 and 472, which are sequentially disposed under the display panel 430. According to an embodiment, the flexible display 400 may be disposed to be supported by at least a portion of the first housing (e.g., the first housing 110 in FIG. 1A) and the second housing (e.g., the second housing 120 in FIG. 1A) of the electronic device (e.g., the electronic device 100 in FIG. 1A).

According to various embodiments, in a region overlapped with at least a part of the bendable portion 453 of the metal sheet layer 450 when the display panel 430 is viewed from above, the digitizer 460 may include the margin area 4604 that is not attached to the metal sheet layer 450 through the adhesive layer P4 unlike the periphery and is formed to be larger than the display panel 430. According to an embodiment, the margin region 4604 formed in the digitizer 460 around the central region of the bendable portion 453 may provide a free space that is not attached to the metal sheet layer 450, thereby helping the bending characteristics of the flexible display 400.

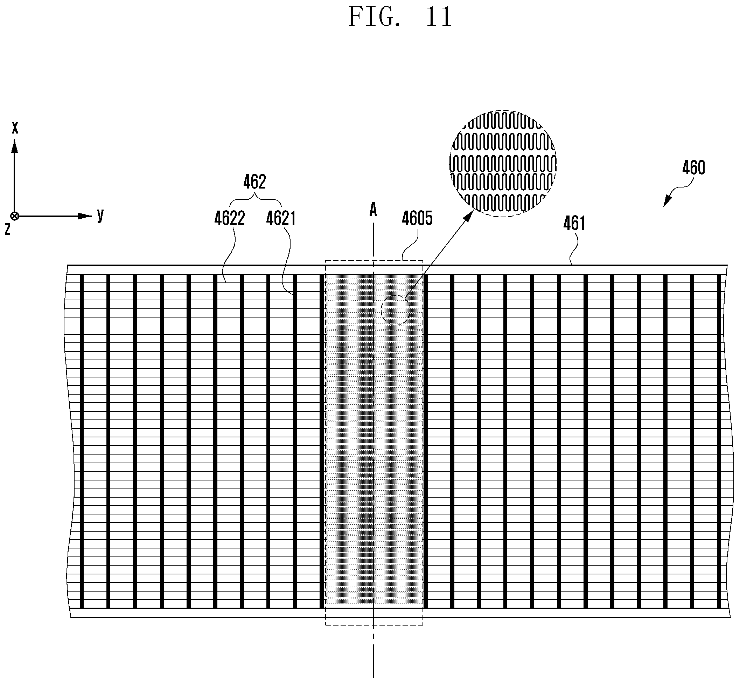

FIG. 11 is a partial configuration view of a digitizer 460 having a bendable pattern region 4605 according to various embodiments of the disclosure.

In describing FIG. 11, detailed descriptions of components substantially the same as those shown in FIG. 9B may be omitted.

With reference to FIG. 11, the digitizer 460 may include the dielectric substrate 461 (e.g., a dielectric film) and the coil member 462 (e.g., a Cu pattern) disposed on the dielectric substrate 461. According to an embodiment, the coil member 462 may include the first conductive pattern 4621 disposed on the dielectric substrate 461 in the first direction (e.g., the x-axis direction) at regular intervals, and the second conductive pattern 4622 intersecting the first conductive pattern 4621 and disposed in the second direction (e.g., the y-axis direction) at regular intervals. According to an embodiment, the dielectric substrate 461 may include the bendable pattern region 4605 corresponding to the bendable portion 453 of the metal sheet layer 450. According to an embodiment, the second conductive pattern 4622 may be disposed in a wave shape in the bendable pattern region 4605. For example, in the bendable pattern region 4605 of the digitizer 460, the second conductive pattern 4622 may be disposed to have a zigzag wave shape while proceeding in a direction perpendicular to the folding axis A, thereby helping in improving the bending characteristics of the flexible display 400.

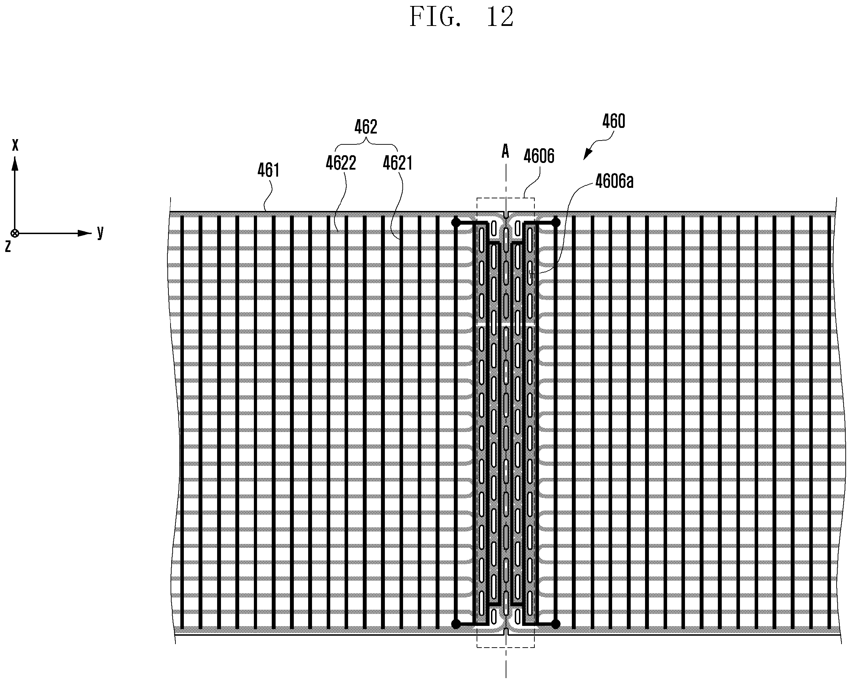

FIG. 12 is a partial constitution view of a digitizer 460 having a third pattern 4606 according to various embodiments of the disclosure.

In describing FIG. 12, detailed descriptions of components substantially the same as those shown in FIG. 11 may be omitted.

With reference to FIG. 12, the digitizer 460 may include the dielectric substrate 461 (e.g., a dielectric film) and the coil member 462 (e.g., a Cu pattern) disposed on the dielectric substrate 461. According to an embodiment, the dielectric substrate 461 may include the bendable pattern region 4606 disposed in a region corresponding to the bendable portion 453 of the metal sheet layer 450. According to an embodiment, the digitizer 460 may have a plurality of openings 4606a disposed in the bendable pattern region 4606 and formed to have a length along the folding axis A. According to an embodiment, the digitizer 460 may help in improving the bending characteristics of the flexible display 400 through the plurality of openings 4606a disposed in the bendable pattern region 4606. According to an embodiment, the coil member 462 may include the first conductive pattern 4621 disposed on the dielectric substrate 461 in the first direction (e.g., the x-axis direction) at regular intervals, and the second conductive pattern 4622 intersecting the first conductive pattern 4621 and disposed in the second direction (e.g., the y-axis direction) at regular intervals. According to an embodiment, the first conductive pattern 4621 and the second conductive pattern 4622 may be disposed in the bendable pattern region in a manner to avoid the plurality of openings 4606a. In some embodiments, the plurality of openings 4606a disposed in the bendable pattern region 4606 may have a variety of modified shapes and/or arrangement structures that may help the bending characteristics of the flexible display 400.

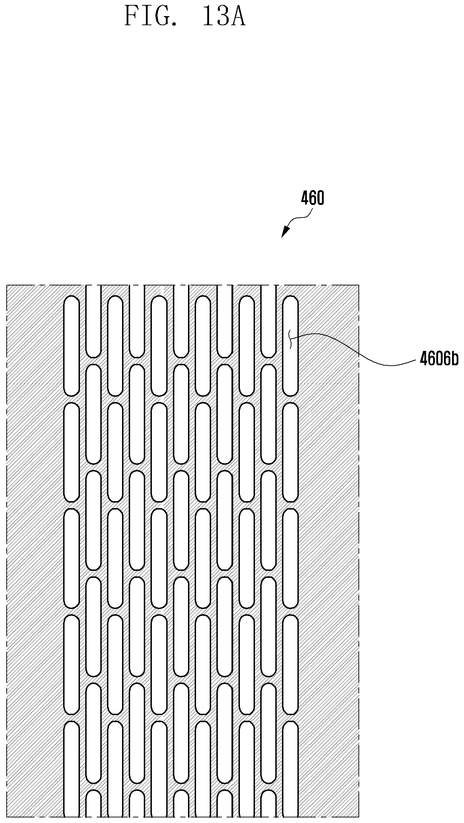

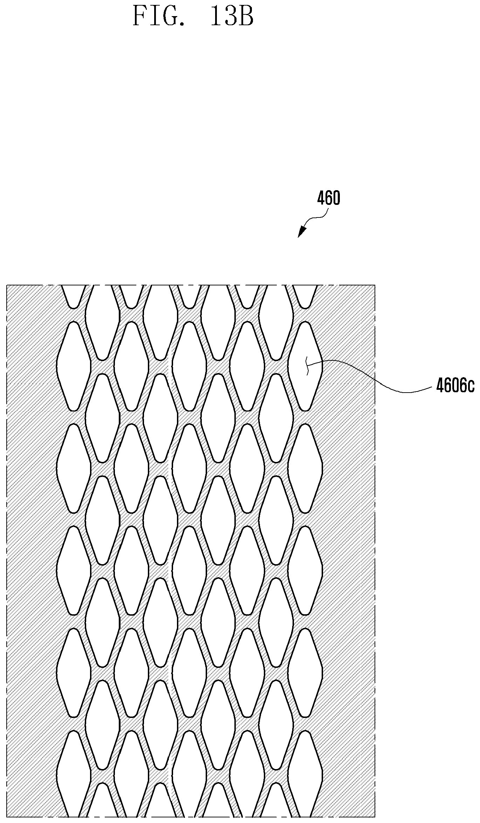

FIGS. 13A and 13B are views illustrating shapes of a plurality of openings 4606b and 4606c disposed in a bendable pattern region of a digitizer 460 according to various embodiments of the disclosure.

With reference to FIG. 13A, the digitizer 460 may have a plurality of openings 4606b disposed in the bendable pattern region (e.g., the bendable pattern region 4605 in FIG. 11 or the bendable pattern region 4606 in FIG. 12). According to an embodiment, the plurality of openings 4606b may be formed in a rectangular shape having a length in a longitudinal direction (e.g., a direction parallel to the folding axis A in FIG. 11 or 12) in the bendable pattern region (e.g., the bendable pattern region 4605 in FIG. 11 or the bendable pattern region 4606 in FIG. 12).

With reference to FIG. 13B, the digitizer 460 may have a plurality of openings 4606c disposed in the bendable pattern region (e.g., the bendable pattern region 4605 in FIG. 11 or the bendable pattern region 4606 in FIG. 12). According to an embodiment, the plurality of openings 4606c may include rhombic shaped openings 4606c disposed in the bendable pattern region (e.g., the bendable pattern region 4605 in FIG. 11 or the bendable pattern region 4606 in FIG. 12). In some embodiments, the plurality of openings disposed in the bendable pattern region (e.g., the bendable pattern region 4605 in FIG. 11 or the bendable pattern region 4606 in FIG. 12) may be formed in various shapes other than the rectangular or rhombic shape.

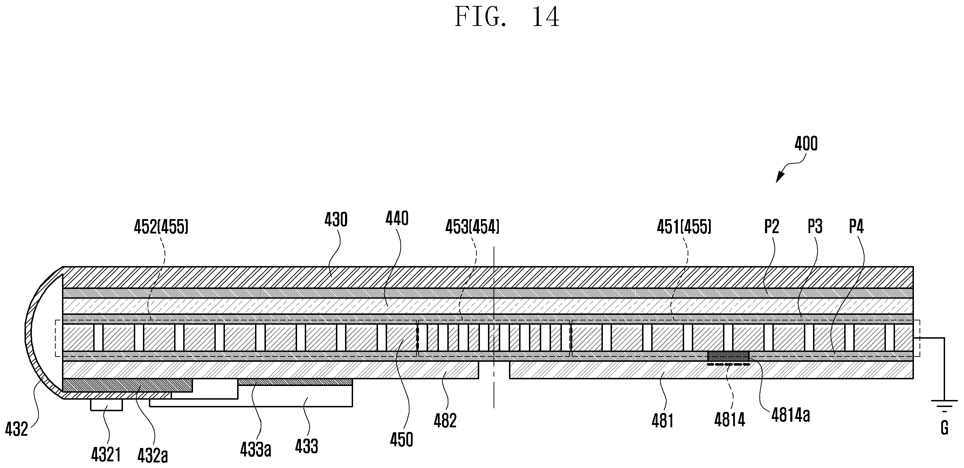

FIG. 14 is a partial cross-sectional view of a display including two digitizers according to various embodiments of the disclosure.

With reference to FIG. 14, the flexible display 400 may include the display panel 430 and also include the polymer layer 440, the metal sheet layer 450, and a pair of digitizers 481 and 482 (e.g., the pair of digitizers 460a and 460b in FIG. 8A), which are sequentially disposed under the display panel 430. According to an embodiment, the flexible display 400 may be disposed to cross at least a portion of a first surface (e.g., the first surface 111 in FIG. 1A) of a first housing (e.g., the first housing 110 in FIG. 1A) and a third surface (e.g., the third surface 121 in FIG. 1A) of a second housing (e.g., the second housing 120 in FIG. 1A). According to an embodiment, the polymer layer 440 may have a stack structure for blocking the inflow of foreign matters through the first and second patterns 454 and 455 of the metal sheet layer 450, and for preventing visibility of a folding boundary region of the flexible display 400 in the bendable portion 453 due to the folding and unfolding operation of the flexible display 400.

According to various embodiments, the display panel 430, the polymer layer 440, the metal sheet layer 450, and the digitizers 481 and 482 may be attached to each other via the adhesives P2, P3, and P4. For example, the adhesives P2, P3, and P4 may include at least one of an optical clear adhesive (OCA), a pressure sensitive adhesive (PSA), a heat-responsive adhesive, a normal adhesive, and a double-sided tape.

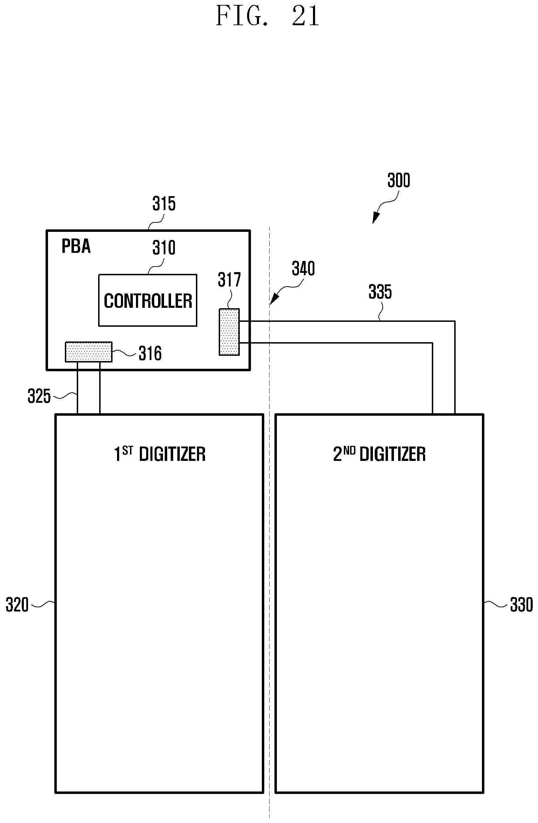

According to various embodiments, the pair of digitizers 481 and 482 may include a first digitizer 481 disposed at a position corresponding to the first housing (e.g., the first housing 110 in FIG. 1A), and a second digitizer 482 disposed at a position corresponding to the second housing (e.g., the second housing 120 in FIG. 1A) substantially based on the folding axis A. According to an embodiment, the first digitizer 481 may be disposed at a position overlapped with the first flat portion 451 and at least a part of the bendable portion 453 when the metal sheet layer 450 is viewed from above. According to an embodiment, the second digitizer 482 may be disposed at a position overlapped with the second flat portion 452 and at least a part of the bendable portion 453 when the metal sheet layer 450 is viewed from above. According to an embodiment, the first digitizer 481 and the second digitizer 482 may be disposed to be spaced apart from each other at a predetermined interval based on the folding axis A. According to an embodiment, the first digitizer 481 and the second digitizer 482 may be simultaneously electrically connected to a substrate (e.g., the substrate 315 in FIG. 21) (e.g. a printed board assembly (PBA)) including a controller disposed in the first housing 110 or the second housing 120.

According to various embodiments, the flexible display 400 may include a bending portion 432 extending from the display panel 430, and a flexible substrate 433 (e.g., a flexible printed circuit board (FPCB)) electrically connected to the bending portion 432. In some embodiments, the flexible display 400 may further include a bending protection layer (BPL) stacked on the outer surface of the bending portion 432 and protecting the bending portion 432. According to an embodiment, the bending portion 432 may be disposed in such a way that it is bent after extending from the display panel 430 and attached to the rear surface of the flexible display 400. According to an embodiment, the bending portion 432 may include a control circuit 4321 (e.g., a display driver IC (DDI)) for controlling driving of the flexible display 400, and a plurality of electrical elements (not shown). According to an embodiment, the bending portion 432 may be attached, after bending, to the rear surface of the second digitizer 482 through a first tape member 432a, and the flexible substrate 433 may also be attached to the rear surface of the second digitizer 482 through a second tape member 433a. In some embodiments, the bending portion 432 and the flexible substrate 433 may be attached to the rear surface of the first digitizer 481 through bending after extending from the display panel.

According to various embodiments, the metal sheet layer 450 disposed under the display panel 430 may be electrically connected to the ground G of the electronic device (e.g., the electronic device 100 in FIG. 1A), thereby helping in preventing malfunctions (e.g., a flicker phenomenon) of the flexible display. For example, the metal sheet layer 450 may be disposed in a floating state between the display panel 430 and the digitizers 481 and 482. According to embodiments, the metal sheet layer 450 may be electrically connected to the ground G of the electronic device through a floating ground pattern 4814 (e.g., a conductive pattern) and a first electrical connection member 4814a disposed in the stack structure of the digitizer 481, thereby helping in reducing performance degradation of the flexible display 400.

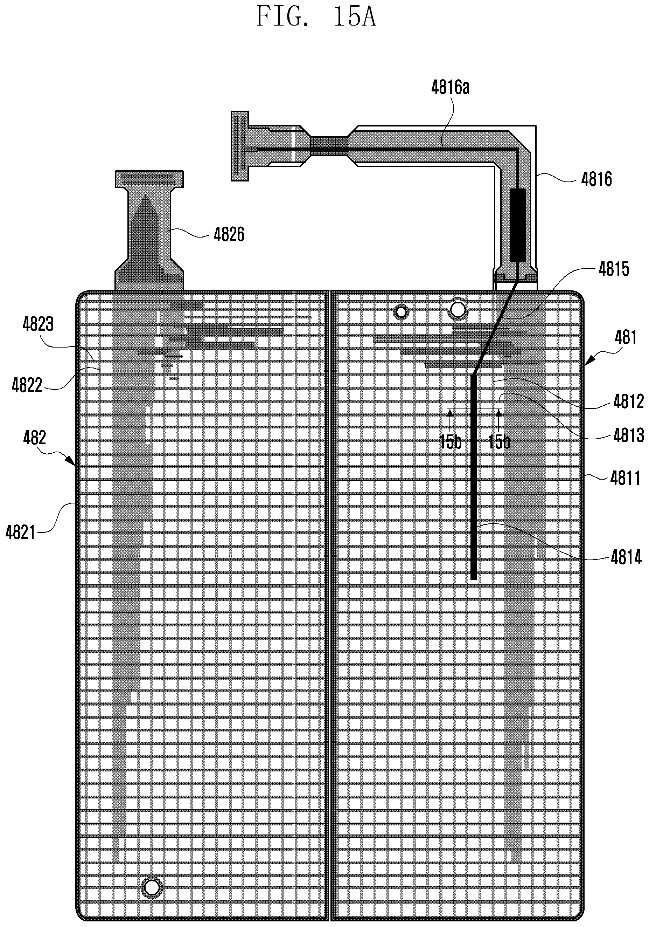

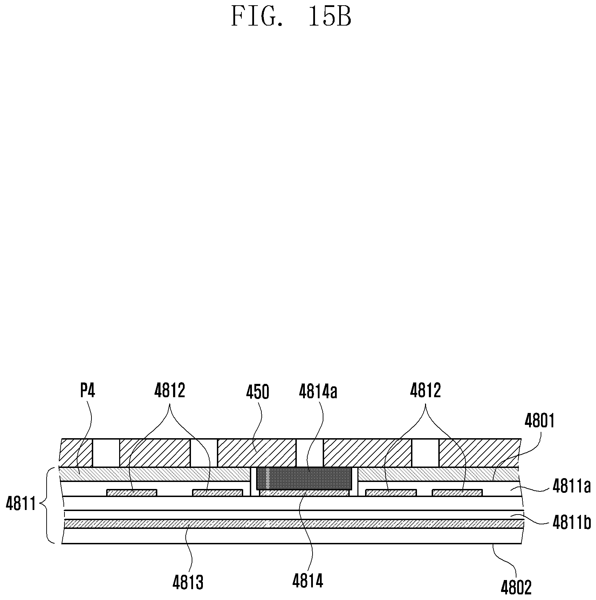

FIG. 15A is a configuration view of two digitizers of FIG. 14 according to various embodiments of the disclosure. FIG. 15B is a partial cross-sectional view of a first digitizer taken along a line 15b-15b of FIG. 15A according to various embodiments of the disclosure.

With reference to FIGS. 15A and 15B, at least one digitizer 481 and 482 disposed under the display panel 430 may include a first digitizer 481 disposed to correspond to the first flat portion 451 and at least a part of the bendable portion 453 of the metal sheet layer 450, and a second digitizer 482 spaced apart from the first digitizer 481 and disposed to correspond to the second flat portion 452 and at least a part of the bendable portion 453 of the metal sheet layer 450. According to an embodiment, the first digitizer 481 may include a first dielectric substrate 4811 (e.g., a first dielectric sheet) including a first substrate surface 4801 facing the display panel 430, a second substrate surface 4802 facing in a direction opposite to the first substrate surface 4801, and a plurality of insulating layers disposed between the first substrate surface 4801 and the second substrate surface 4802. According to an embodiment, in order to detect an input (e.g., contact and/or proximity (e.g., hovering)) of the electronic pen toward the display panel 430, the first digitizer 481 may include first conductive patterns 4812 (e.g., first coil patterns or first coils) disposed on a first insulating layer 4811a among the plurality of insulating layers, and second conductive patterns 4813 (e.g., second coil patterns or second coils) disposed in a second insulating layer 4811b between the first insulating layer 4811a and the second substrate surface 4802. According to an embodiment, the first digitizer 481 may include a first extension portion 4816 (e.g., a first FPCB) bendably extending from or separately attached to the first dielectric substrate 4811. According to an embodiment, the first extension portion 4816 may provide a path through which the first conductive patterns 4812 and the second conductive patterns 4813 extend. Therefore, through the first extension portion, the first digitizer 481 may be electrically connected to a substrate (e.g., the substrate 315 in FIG. 21) including a controller disposed in the first housing or the second housing. According to an embodiment, the substrate may be electrically connected to a device substrate (e.g., a main substrate) of the electronic device. In some embodiments, when the substrate is disposed in the second housing, the first extension portion 4816 may be formed to have sufficient flexibility because of having to traverse a region corresponding to the bendable portion 453 of the metal sheet layer 450.

According to various embodiments, the second digitizer 482 may also include third conductive patterns 4822 (e.g., third coil patterns or third coils) and fourth conductive patterns 4823 (e.g., fourth coil patterns or fourth coils) disposed on the second dielectric substrate 4821. According to an embodiment, the second digitizer 482 may also include a second extension portion 4826 (e.g., a second FPCB) bendably extended from or separately attached to the second dielectric substrate 4821. According to an embodiment, the second extension portion 4826 may provide a path through which the third conductive patterns 4822 and the fourth conductive patterns 4823 extend. Therefore, through the second extension portion 4826, the second digitizer 482 may be electrically connected to a substrate (e.g., a printed circuit board (PCB)) including a controller disposed in the first housing or the second housing. In some embodiments, when the substrate is disposed in the first housing, the second extension portion 4826 may be formed to have sufficient flexibility because of having to traverse a region corresponding to the bendable portion 453 of the metal sheet layer 450. According to an embodiment, after being bent, the first and second extension portions 4816 and 4826 may be attached to the rear surface of the flexible display 400.

According to various embodiments, the first digitizer 481 may include at least one ground pattern 4814 (e.g., a floating dummy pattern) disposed on the first insulating layer 4811a, and a first ground line 4816a electrically connected to the ground pattern 4814 and extending to at least a portion of the first extension portion 4816. According to an embodiment, the at least one ground pattern 4814 may be disposed on the first insulating layer 4811a by utilizing a space between the first conductive patterns 4812. According to an embodiment, at least a partial region of the at least one ground pattern 4814 may be disposed to be exposed through the first substrate surface 4801 by a removed cover layer (e.g., some insulating layers including the first substrate surface 4801) thereon. According to an embodiment, the ground pattern 4814 may be electrically connected to the first ground line 4816a of the first extension portion 4816 through a ground wire 4815 disposed on the first insulating layer 4811a. In some embodiments, the at least one ground pattern 4814 may be disposed on an insulating layer between the first insulating layer 4811a and the first substrate surface 4801 among the plurality of insulating layers. In some embodiments, the at least one ground pattern 4814 may be disposed in such a way that it is exposed to the first substrate surface 4801.

According to various embodiments, when the first digitizer 481 is disposed as a component of the flexible display 400, the at least one ground pattern 4814 exposed through the first substrate surface 4801 of the first digitizer 481 may be electrically connected in such a way that it is in contact with the metal sheet layer 450 through the first electrical connection member 4814a. According to an embodiment, the first electrical connection member 4814a may include a conductive tape and/or a conductive adhesive. Therefore, the metal sheet layer 450 may have a grounding structure of being electrically connected to the ground G of the substrate including the controller through the first electrical connection member 4814a, the at least one ground pattern 4814, and the first ground line 4816a. According to an embodiment, the substrate may be electrically connected to the ground G disposed in the device substrate of the electronic device.

In some embodiments, the flexible display may additionally include the same electrical grounding structure between the metal sheet layer 450 and the second digitizer 482. In this case, when the electrical grounding structure between the first digitizer 481 and the metal sheet layer 450 is cut off, the additional electrical grounding structure between the metal sheet layer 450 and the second digitizer 482 may be used to be connected to the ground G, thereby helping in reducing malfunctions of the flexible display 400.

In some embodiments, the grounding structure through the digitizer according to embodiments of the disclosure may also be applied to a slidable electronic device (e.g., a rollable electronic device) including a first housing, a second housing slidably disposed with a certain reciprocating distance from the first housing, a conductive bendable member (e.g., a multi-bar assembly) connected to at least a portion of the second housing and at least partially accommodated into an inner space of the first housing in a slide-in state, and a flexible display disposed to be supported by the conductive bendable member and at least a portion of the second housing and having a display area variable according to a slide-in state and a slide-out state. In this case, the digitizer may be disposed between the conductive bendable member and the display panel, and the conductive bendable member may be electrically connected to the ground of the slidable electronic device through the grounding structure of the digitizer.

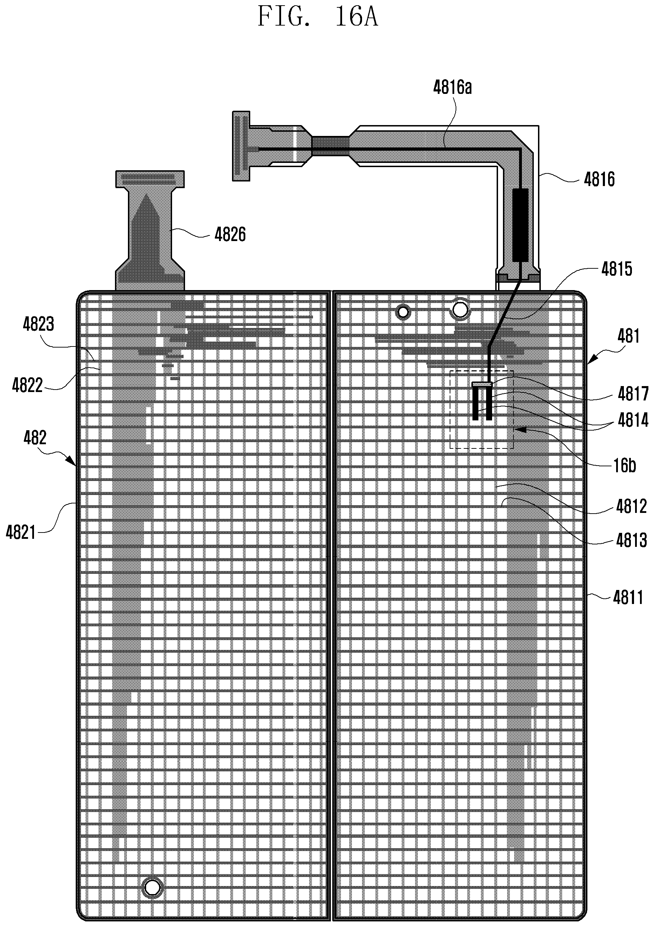

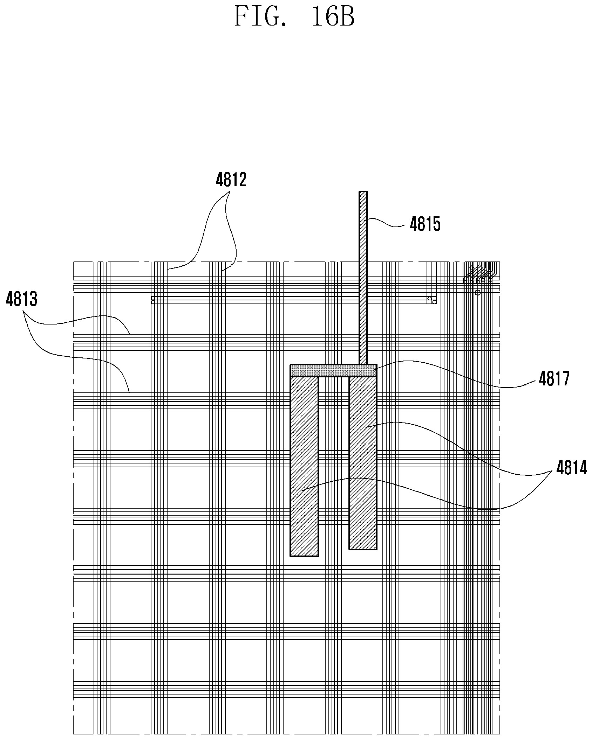

FIG. 16A is a configuration view of a first digitizer according to various embodiments of the disclosure. FIG. 16B is an enlarged view of a region 16b of FIG. 16A according to various embodiments of the disclosure.

In describing the digitizers of FIGS. 16A and 16B, the same reference numerals are assigned to the same components as those of the digitizers of FIGS. 15A and 15B, and a detailed description thereof may be omitted.

With reference to FIGS. 16A and 16B, the first digitizer 481 may include two ground patterns 4814 respectively disposed between the first conductive patterns 4812. According to an embodiment, the two ground patterns 4814 may be electrically connected through a connection pattern 4817. According to an embodiment, the connection pattern 4817 may be electrically connected to the first ground line 4816a extending to at least a portion of the first extension portion 4816. According to an embodiment, the connection pattern 4817 may be disposed on another insulating layer between the first insulating layer 4811a on which two ground patterns 4814 are disposed and the first substrate surface 4801, among a plurality of insulating layers, and be electrically connected to the two ground patterns 4814 through conductive vias. In some embodiments, at least one ground pattern may include three or more ground patterns and may be electrically connected to each other through at least one connection pattern. For example, using the two or more ground patterns 4814 may be advantageous when a space for applying one ground pattern is insufficient between the first conductive patterns 4812, and may be advantageous to provide an improved degree of connection freedom of the first electrical connection member 4814a between the metal sheet layer 450 and the first digitizer 481.

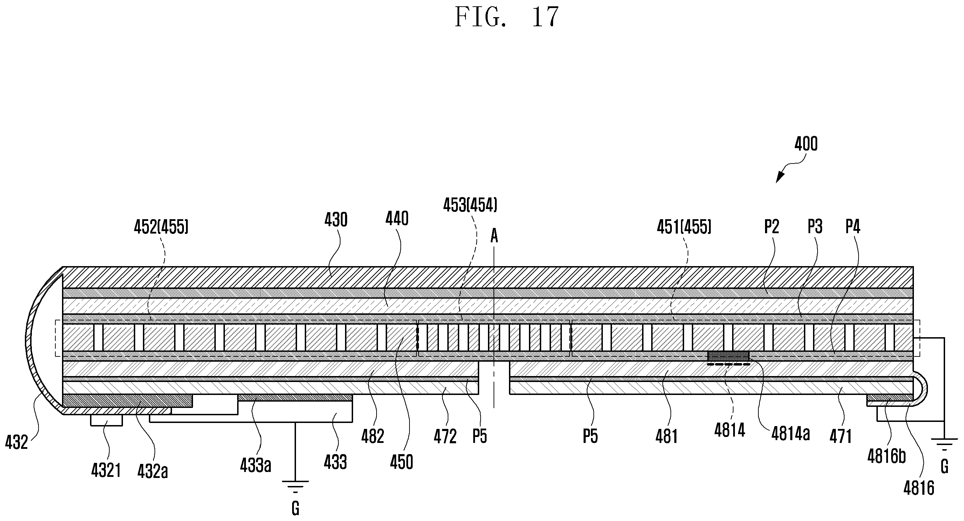

FIGS. 17 to 19 are partial cross-sectional views of a flexible display according to various embodiments of the disclosure.

In describing the flexible display 400 of FIGS. 17 to 19, the same reference numerals are assigned to the same components as those of the flexible display of FIG. 14, and a detailed description thereof may be omitted.

With reference to FIG. 17, the flexible display 400 may include the first reinforcing plate 471 disposed under the first digitizer 481, and the second reinforcing plate 472 spaced apart from the first reinforcing plate 471 and disposed under the second digitizer 482. According to an embodiment, the first reinforcing plate 471 may be attached under the first digitizer 481 through the adhesive member P5 in a region corresponding to the first flat portion 451 and at least a part of the bendable portion 453 of the metal sheet layer 450 when the display panel 430 is viewed from above. According to an embodiment, the second reinforcing plate 472 may be attached under the second digitizer 482 through the adhesive member P5 in a region corresponding to the second flat portion 452 and at least a part of the bendable portion 453 of the metal sheet layer 450 when the display panel 430 is viewed from above. According to an embodiment, the first reinforcing plate 471 may be attached to the first housing (e.g., the first housing 110 in FIG. 1A) of the electronic device through another adhesive member. According to an embodiment, the second reinforcing plate 472 may be attached to the second housing (e.g., the second housing 120 in FIG. 1A) of the electronic device through another adhesive member. According to an embodiment, another adhesive member may include a double-sided tape or a waterproof tape.

According to various embodiments, the second reinforcing plate may be electrically connected to the ground G through the flexible substrate (e.g., FPCB) connected to the bending portion extending from the display panel and attached to the rear surface of the second reinforcing plate through the second tape member. In this case, the second tape member may include a conductive tape.

According to various embodiments, the first reinforcing plate 471 may be electrically connected to the ground G through the first extension 4816 attached to the rear surface of the first reinforcing plate 471 after extending from the first digitizer 481 and bent. For example, the first extension portion 4816 may include a part in which the first ground line 4816a is exposed at least in part to the outside, and the exposed part may be electrically connected to the first reinforcing plate 471 through a second electrical connection member 4816b disposed between the first ground line 4816a and the first reinforcing plate 471. According to an embodiment, the second electrical connection member 4816b may also include a conductive tape or a conductive adhesive. In some embodiments, the first extension portion 4816 may include a separate conductive pad exposed to the outside and electrically connected to the first ground line 4816a. In this case, the separate conductive pad may contact the first reinforcing plate 471 through the second electrical connection member 4816b.

Because the metal sheet layer 450 according to an embodiment is electrically connected to the ground G through the at least one ground pattern 4814 disposed on the first digitizer 481, the first electrical connection member 4814a, and the first ground line 4816a of the first extension portion 4816, the first reinforcing plate 471 is electrically connected to the ground G through the first ground line 4816a and the second electrical connection member 4816b of the first extension portion 4816, and the second reinforcing plate 472 is electrically connected to the ground G through the flexible substrate 433 connected to the bending portion 432, the possibility of malfunctions of the flexible display 400 may be reduced.

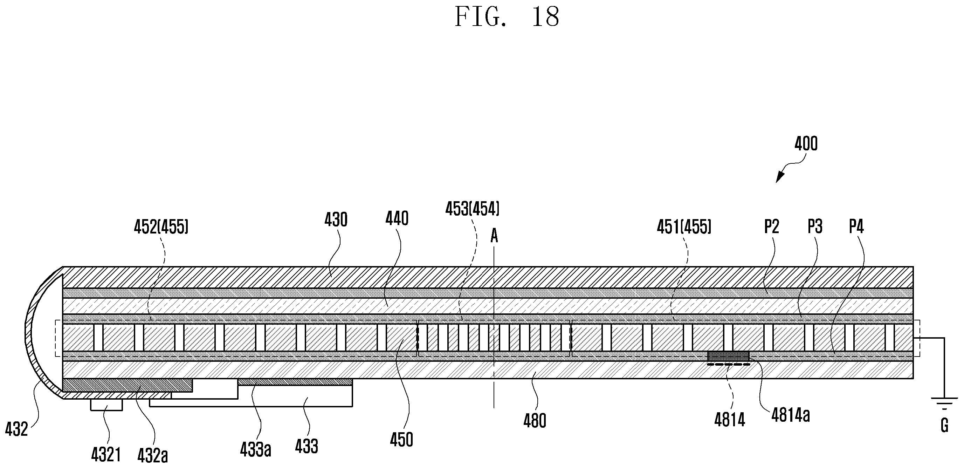

With reference to FIG. 18, the flexible display 400 may include one digitizer 480 (e.g., the digitizer 460 in FIG. 5) disposed in a corresponding region from the first flat portion 451 to at least a part of the second flat portion 452 through the bendable portion 453 under the metal sheet layer. In this case, the metal sheet layer 450 may be electrically connected to the ground G through the at least one ground pattern 4814 disposed on the digitizer 480, the first electrical connection member 4814a, and a ground line (e.g., the first ground line 4816a) of an extension portion (e.g., the first extension portion 4816).

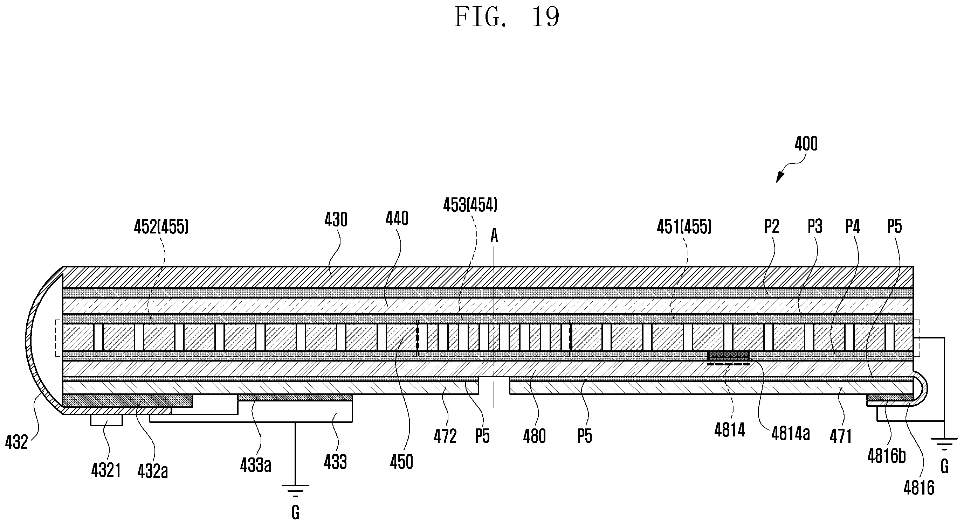

With reference to FIG. 19, the flexible display 400 may include one digitizer 480 (e.g., the digitizer 460 in FIG. 5) disposed in a corresponding region from the first flat portion 451 to at least a part of the second flat portion 452 through the bendable portion 453 under the metal sheet layer 450. According to an embodiment, the flexible display 400 may include the first reinforcing plate 471 disposed through the adhesive member P5 in a region corresponding to the first flat portion 451 and at least a part of the bendable portion 453 of the metal sheet layer 450 under the digitizer 480 when the display panel 430 is viewed from above, and the second reinforcing plate 472 disposed through the adhesive member P5 in a region corresponding to the second flat portion 452 and at least a part of the bendable portion 453 of the metal sheet layer 450.

According to various embodiments, because the metal sheet layer 450 is electrically connected to the ground G through the at least one ground pattern 4814 disposed on the first digitizer 481, the first electrical connection member 4814a, and a ground line (e.g., the first ground line 4816a) of an extension portion (e.g., the first extension portion 4816), the first reinforcing plate 471 is electrically connected to the ground G through a ground line (e.g., the first ground line 4816a) and the second electrical connection member 4816b of an extension portion (e.g., the first extension portion 4816), and the second reinforcing plate 472 is electrically connected to the ground G through the flexible substrate 433 connected to the bending portion 432, the possibility of malfunctions of the flexible display 400 may be reduced.

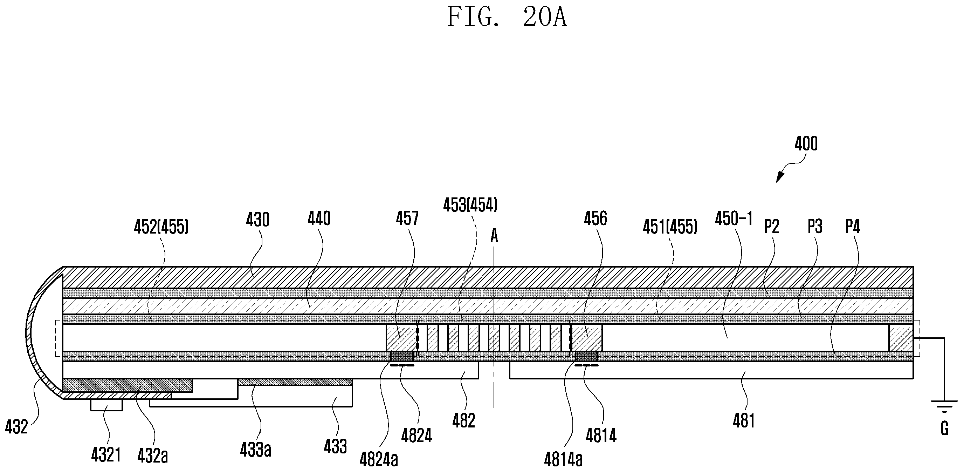

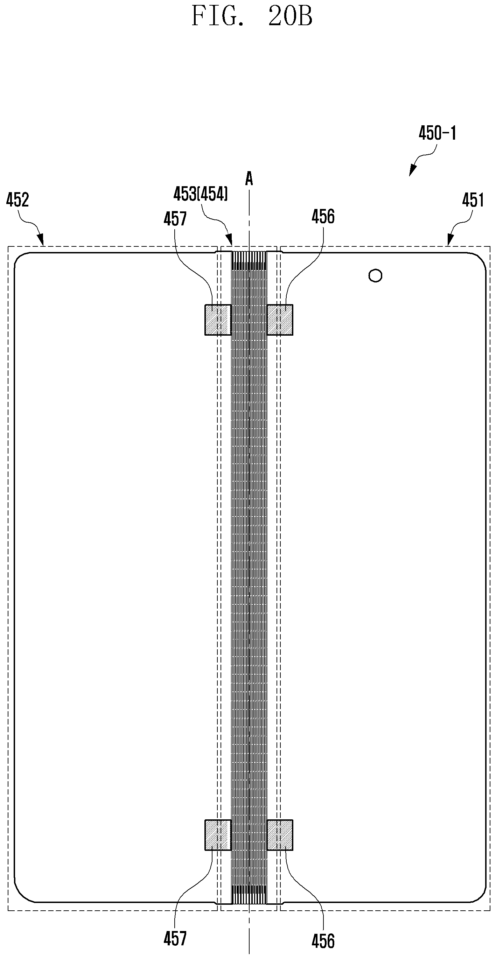

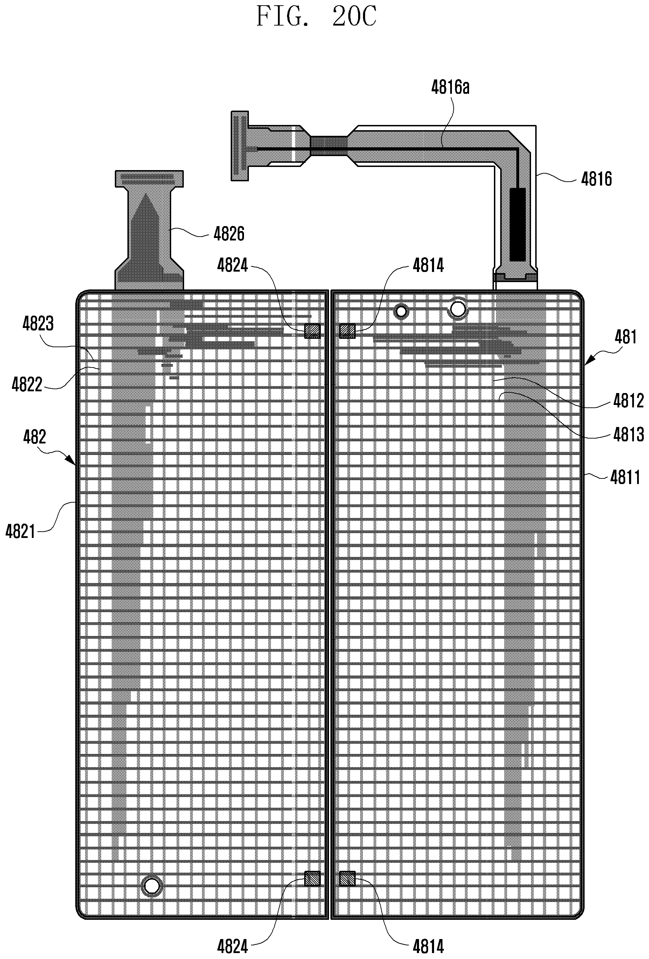

FIG. 20A is a partial cross-sectional view of a flexible display according to various embodiments of the disclosure. FIG. 20B is a configuration view of a metal sheet layer shown in FIG. 20A according to various embodiments of the disclosure. FIG. 20C is a configuration view of two digitizers shown in FIG. 20A according to various embodiments of the disclosure.

In describing the flexible display of FIGS. 20A to 20C, the same reference numerals are assigned to the same components as those of the flexible display of FIG. 14, and a detailed description thereof may be omitted.

With reference to FIGS. 20A to 20C, the flexible display may include the display panel and also include the polymer layer, a bending support layer 450-1, and a pair of digitizers, which are sequentially disposed under the display panel. According to an embodiment, when the bending support layer 450-1 is viewed from above, the first digitizer 481 may be disposed at a position overlapped with the first flat portion 451 and at least a part of the bendable portion 453. According to an embodiment, when the bending support layer 450-1 is viewed from above, the second digitizer 482 may be disposed at a position overlapped with the second flat portion 452 and at least a part of the bendable portion 453.

According to various embodiments, the bending support layer 450-1 replaces the above-described metal sheet layer 450 in order to improve the performance of the digitizers 481 and 482 and may include the first flat portion 451 disposed at a position corresponding to the first housing (e.g., the first housing 110 in FIG. 1A), the second flat portion 452 disposed at a position corresponding to the second housing (e.g., the second housing 120 in FIG. 1A), and the bendable portion 453 connecting the first flat portion 451 and the second flat portion 452 and disposed to be bendable. According to an embodiment, the first flat portion 451 and the second flat portion 452 may be substantially formed of a non-conductive material (e.g., a polymer). According to an embodiment, the bendable portion 453 may be substantially formed of a conductive material (e.g., a metal material) and may have a first pattern 454 (e.g., a plurality of openings (e.g., the plurality of openings 4541 in FIG. 4B)) for providing flexibility. According to an embodiment, the non-conductive material and the conductive material may be connected to each other through a tape member. In some embodiments, the non-conductive material and the conductive material may be connected to each other through insert injection or double injection.

According to various embodiments, the bendable portion 453 formed of a metal material in the bending support layer 450-1 needs to be electrically connected to the ground G between the display panel 430 and the digitizers 481 and 482. According to an embodiment, the bending support layer 450-1 may include at least one first extension region 456 in which a conductive material is extended from the bendable portion 453 to at least a part of the first flat portion 451. According to an embodiment, the at least one first extension region 456 may be electrically connected to the ground G through the first ground pattern 4814 disposed on the first digitizer 481, the electrical connection member 4814a, and the first extension portion 4816. Therefore, because of being electrically connected to the ground G, the bendable portion 453 formed of a metal material in the bendable support layer 450-1 may help in reducing the performance degradation of the flexible display 400.

According to some embodiments, the bending support layer 450-1 may include at least one second extension region 457 in which a conductive material is extended from the bendable portion 453 to at least a part of the second flat portion 452. According to an embodiment, the at least one second extension region 457 may be electrically connected to the ground G through the second ground pattern 4824 disposed on the second digitizer 482, the electrical connection member 4824a, and the second extension portion 4826. Therefore, because of being electrically connected to the ground G, the bendable portion 453 formed of a metal material in the bendable support layer 450-1 may help in reducing the performance degradation of the flexible display 400.

FIG. 21 illustrates a structure of a foldable electronic device according to various embodiments.

The electronic device 300 of FIG. 21 may be similar at least in part to the electronic device 100 of FIGS. 1A to 2B or may further include other embodiments of the electronic device.

With reference to FIG. 21, the electronic device 300 (e.g., the electronic device 101) may include a printed board assembly (PBA) 315, connection interfaces 325 and 335, a first digitizer 320, and a second digitizer 330. According to various embodiments, a controller 310 (e.g., the coprocessor 123) and connectors 316 and 317 may be disposed on the printed board assembly (PBA) 315.

According to various embodiments, the first digitizer 320 may generate a signal for identifying the position of an electronic pen, based on a pen signal generated from the electronic pen, and transmit the generated signal to the processor. According to the invention, a magnetic field generated from the electronic pen may be referred to as a pen signal, and a current induced in a plurality of conductive patterns (e.g., coils) included in the first digitizer 320 or a voltage induced across the plurality of conductive patterns, based on the pen signal, is used as a signal for identifying the position of the electronic pen. According to various embodiments, the electronic pen may generate a signal including a resonance frequency by using a resonance circuit included in a printed circuit board disposed inside the electronic pen. For example, when an alternating voltage is applied through the plurality of conductive patterns of the digitizers 320 and 330, a magnetic field is formed, and a current flows along internal coils of the electronic pen adjacent to the digitizers 320 and 330 according to the electromagnetic induction law. Thus, a signal including a resonance frequency is formed through a resonance circuit inside the electronic pen, and the digitizers 320 and 330 can recognize it. The resonance circuit may include at least one electronic element such as a coil, an inductor, and/or a capacitor. According to an embodiment, the resonance circuit may be used to change the strength or frequency of the electromagnetic field in response to a user's manipulation state. For example, the resonant circuit may provide various frequencies for recognizing a hovering input, a drawing input, a button input, or an erasing input.

According to the invention, the second digitizer 330 may generate a signal for identifying the position of the electronic pen, based on the pen signal generated from the electronic pen. According to various embodiments, the magnetic field generated from the electronic pen may be referred to as the pen signal, and the current induced in the plurality of conductive patterns included in the second digitizer 330 or the voltage induced across the plurality of conductive patterns, based on the pen signal, is used as the signal for identifying the position of the electronic pen.

According to various embodiments, the first digitizer 320 may be connected to the first connector 316 of the printed board assembly (PBA) 315 through the first connection interface 325 (e.g., the first extension portion 4816 or the first FPCB in FIG. 15A), and a signal generated from the first digitizer 320 may be transmitted to the controller 310 through the first connection interface 325 and the first connector 316.

According to various embodiments, the second digitizer 330 may be connected to the second connector 317 of the PBA 315 through the second connection interface 335 (e.g., the second extension portion 4826 or the second FPCB in FIG. 15A), and a signal generated from the second digitizer 330 may be transmitted to the controller 310 through the second connection interface 335 and the second connector 317.

According to the invention, the electronic device 300 includes two housings (e.g., the first housing 110 and the second housing 120 in FIG. 1A), and a line 340 may refer to a folding axis (e.g., a rotation axis) (e.g., the folding axis A in FIG. 1A) on which the two housings rotate. That is, according to the invention, the PBA 315, the connection interface 325, and the first digitizer 320 are located in the first housing of the electronic device 300, the second digitizer 330 is located in the second housing of the electronic device 300, and the connection interface 335 may cross the folding axis (e.g., the rotation axis) and connect the connector 317 and the second digitizer 330. With reference to FIGS. 1A to 2B, in various embodiments, the first housing in which the PBA 315, the connection interface 325, and the first digitizer 320 are located may be any one of the first housing 110 and the second housing 120 shown in FIGS. 1A to 2B. According to various embodiments, the second housing in which the second digitizer 330 is located may be the other one of the first housing 110 and the second housing 120 shown in FIGS. 1A to 2B.

According to various embodiments, the connection interface 335 may include a flexible printed circuits board (FPCB). In this case, because the connection interface 335 that crosses the folding axis 340 and connects the connector 317 and the second digitizer 330 has ductility, the possibility of damage may be reduced despite repeated folding of the electronic device 300. According to various embodiments, the connection interface 325 as well as the connection interface 335 may include an FPCB.

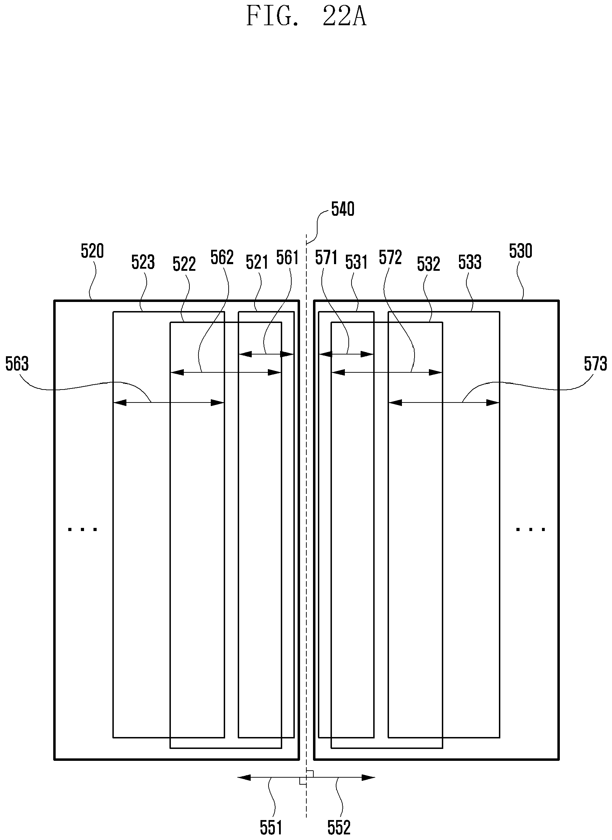

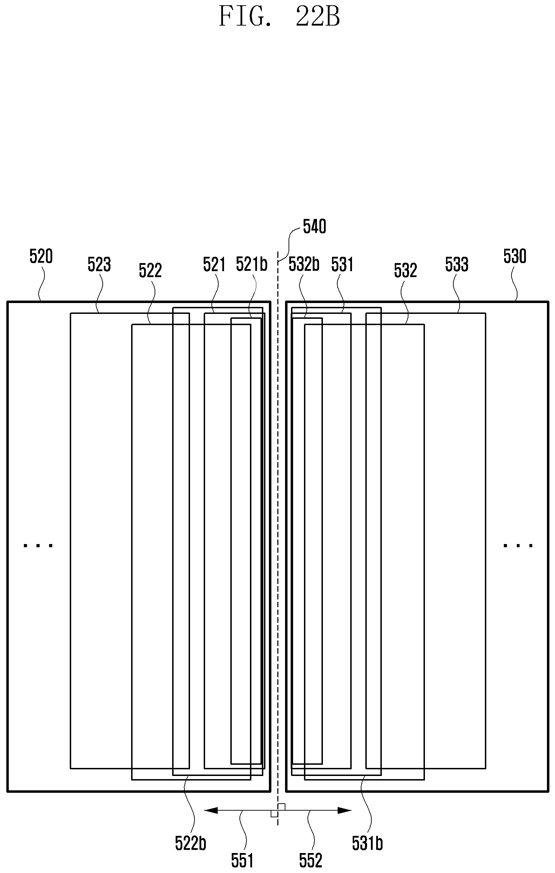

FIGS. 22A and 22B illustrate an arrangement of conductive patterns in digitizers according to the invention.

With reference to FIG. 22A, a folding axis 540 (e.g., the folding axis A1 in FIG. 1A) on which the first housing and the second housing are rotated is positioned between the first housing and the second housing, a first digitizer 520 is included in the first housing, and a second digitizer 530 is included in the second housing. According to various embodiments, the first digitizer 520 includes a plurality of first conductive patterns 521, 522, and 523 that generate signals based on a pen signal from the electronic pen. According to various embodiments, the second digitizer 530 includes a plurality of second conductive patterns 531, 532, and 533 that generate signals based on a pen signal from the electronic pen. The lengths of the plurality of first conductive patterns 521, 522, and 523 in the direction of the folding axis 540 may be greater than the lengths of the plurality of first conductive patterns 521, 522, and 523 in a first direction 551, respectively. The lengths of the plurality of second conductive patterns 531, 532, and 533 in the direction of the folding axis 540 may be greater than the lengths of the plurality of second conductive patterns 531, 532, and 533 in a second direction 552, respectively. The definitions of the first direction 551 and the second direction 552 will be described later.

Although it is illustrated as if three conductive patterns are included in each of the first and second digitizers 520 and 530 in FIG. 22A, FIG. 22A merely shows representative conductive patterns so as to illustrate the arrangement of conductive patterns according to various embodiments. According to various embodiments, the first digitizer 520 and the second digitizer 530 may further include a plurality of other conductive patterns not shown.

According to various embodiments, with respect to each of the plurality of first conductive patterns 521, 522, and 523 included in the first digitizer 520, a distance from the folding axis 540 in the first direction 551 perpendicular to the folding axis 540 may be defined. The first direction 551 may be defined such that a plane formed by the first digitizer 520 is substantially parallel to a plane formed by the folding axis 540 and the first direction 551. Even when the first housing rotates about the folding axis 540, the first direction 551 may still be maintained perpendicular to the folding axis 540. For example, the distance of the conductive pattern 521 from the folding axis 540 in the first direction 551 may be defined as the shortest distance among distances of points constituting the conductive pattern 521 from the folding axis 540 in the first direction 551. For the other conductive patterns 532 and 533, the distance from the folding axis 540 in the first direction 551 may be defined similarly. The distance of the conductive pattern 523 from the folding axis 540 in the first direction 551 may be greater than the distances of the conductive patterns 521 and 522 from the folding axis 540 in the first direction 551.

According to various embodiments, with respect to each of the plurality of second conductive patterns 531, 532, and 533 included in the second digitizer 530, a distance from the folding axis 540 in the second direction 552 perpendicular to the folding axis 540 may be defined. The second direction 552 may be defined such that a plane formed by the second digitizer 530 is substantially parallel to a plane formed by the folding axis 540 and the second direction 552. Even when the second housing rotates about the folding axis 540, the second direction 552 may still be maintained perpendicular to the folding axis 540. For example, the distance of the conductive pattern 531 from the folding axis 540 in the second direction 552 may be defined as the shortest distance among distances of points constituting the conductive pattern 531 from the folding axis 540 in the second direction 552. For the other conductive patterns 532 and 533, the distance from the folding axis 540 in the second direction 552 may be defined similarly. The distance of the conductive pattern 533 from the folding axis 540 in the second direction 552 may be greater than the distances of the conductive patterns 531 and 532 from the folding axis 540 in the second direction 552.

According to various embodiments, a width in the first direction 551 may be defined for each of the plurality of first conductive patterns 521, 522, and 523 included in the first digitizer 520. With reference to FIG. 22A, a width 562 of the conductive pattern 522 in the first direction 551 may be substantially the same as a width 563 of the conductive pattern 523 in the first direction 551. A width 561 of the conductive pattern 521 in the first direction 551 may be smaller than the width 562 of the conductive pattern 522 in the first direction 551 and the width 563 of the conductive pattern 523 in the first direction 551. For example, the width 561 of the conductive pattern 521 in the first direction 551 may be half the width 562 of the conductive pattern 522 in the first direction 551 and the width 563 of the conductive pattern 523 in the first direction 551.

According to various embodiments, a width in the second direction 552 may be defined for each of the plurality of second conductive patterns 531, 532, and 533 included in the second digitizer 530. With reference to FIG. 22A, a width 572 of the conductive pattern 532 in the second direction 552 may be substantially the same as a width 573 of the conductive pattern 533 in the second direction 552. A width 571 of the conductive pattern 531 in the second direction 552 may be smaller than the width 572 of the conductive pattern 532 in the second direction 552 and the width 573 of the conductive pattern 533 in the second direction 552. For example, the width 571 of the conductive pattern 531 in the second direction 552 may be half the width 572 of the conductive pattern 532 in the second direction 552 and the width 573 of the conductive pattern 533 in the first direction 552.

In FIG. 22A, if a combination of the conductive patterns 521 and 531 is regarded as one conductive pattern, the arrangement of conductive patterns in FIG. 22A is equivalent to the arrangement in which conductive patterns of the same width are evenly spaced in a single digitizer that is not divided into two digitizers 520 and 530 based on the folding axis 540. That is, it may be configured such that the widths 562, 563, 572, and 573 of the other conductive patterns 522, 523, 532, and 533 that are not divided by the folding axis 540 are equal to each other, and the sum of the width 561 of the conductive pattern 521 in the first direction 551 and the width 571 of the conductive pattern 531 in the second direction 552 is equal to each width of the other conductive patterns 522, 523, 532, and 533 that are not divided by the folding axis 540. According to various embodiments, the width 561 of the conductive pattern 521 in the first direction 551 may be equal to the width 571 of the conductive pattern 531 in the second direction 552. Even in this case, although not shown in FIG. 22A, the first digitizer 520 may include the first conductive pattern and the second conductive pattern, and the second digitizer 530 may include the third conductive pattern and the fourth conductive pattern. In this case, the width of the first conductive pattern in the first direction 551 may be different from the width of the third conductive pattern in the second direction 552, and the sum of the width of the first conductive pattern in the first direction 551 and the width of the third conductive pattern in the second direction 552 may be equal to each width of the other conductive patterns 522, 523, 532, and 533 that are not divided by the folding axis 540. Also, the width of the second conductive pattern in the first direction 551 may be equal to the width of the third conductive pattern in the second direction 552, and the width of the fourth conductive pattern in the second direction 552 may be equal to the width of the first conductive pattern in the first direction 551. Also, the sum of the width of the second conductive pattern in the first direction 551 and the width of the fourth conductive pattern in the second direction 552 may be equal to each width of the other conductive patterns 522, 523, 532, and 533 that are not divided by the folding axis 540.

According to various embodiments, the width 561 of the conductive pattern 521 in the first direction 551 may be different from the width 571 of the conductive pattern 531 in the second direction 552. In this case, although not shown in FIG. 22A, the first digitizer 520 may further include the third conductive pattern, and the second digitizer 530 may further include the fourth conductive pattern. Also, the width of the third conductive pattern in the first direction 551 may be equal to the width 571 of the conductive pattern 531 in the second direction 552, and the width of the fourth conductive pattern in the second direction 552 may be equal to the width 561 of the conductive pattern 521 in the first direction 551.

FIG. 22B shows an example different from FIG. 22A regarding the arrangement of conductive patterns in the digitizers.

As in FIG. 22A, the folding axis 540 on which the first housing and the second housing are rotated may be positioned between the first housing and the second housing, the first digitizer 520 may be included in the first housing, and the second digitizer 530 may be included in the second housing. According to various embodiments, the first digitizer 520 may include a plurality of first conductive patterns 521, 522, 523, 521b, and 522b that generate signals based on a pen signal from the electronic pen. According to various embodiments, the second digitizer 530 may include a plurality of second conductive patterns 531, 532, 533, 531b, and 532b that generate signals based on a pen signal from the electronic pen.

Although it is illustrated as if five conductive patterns are included in each of the first and second digitizers 520 and 530 in FIG. 22B, FIG. 22B merely shows representative conductive patterns so as to illustrate the arrangement of conductive patterns according to various embodiments. According to various embodiments, the first digitizer 520 and the second digitizer 530 may further include a plurality of other conductive patterns not shown.

The definitions of the first direction 551 and the second direction 552 are the same as those described above with reference to FIG. 22A, so descriptions thereof will not be repeated here.

According to various embodiments, the width of the conductive pattern 522 in the first direction 551 may be substantially equal to the width of the conductive pattern 523 in the first direction 551, the width of the conductive pattern 521 in the first direction 551 may be substantially equal to half each width of the conductive patterns 522 and 523 in the first direction 551, and the width of the conductive pattern 521b in the first direction 551 may be substantially equal to half the width of the conductive pattern 521 in the first direction 551. Also, the width of the conductive pattern 522b in the first direction 551 may be substantially equal to three times the width of the conductive pattern 521b in the first direction 551. Also, the width of the conductive pattern 532 in the second direction 552 may be substantially equal to the width of the conductive pattern 533 in the second direction 552, the width of the conductive pattern 531 in the second direction 552 may be substantially equal to half each width of the conductive patterns 532 and 533 in the second direction 552, and the width of the conductive pattern 531b in the second direction 552 may be substantially equal to half the width of the conductive pattern 531 in the second direction 552. Also, the width of the conductive pattern 532b in the second direction 552 may be substantially equal to three times the width of the conductive pattern 531b in the second direction 552.

In FIG. 22B, if a combination of the conductive patterns 521 and 531 is regarded as one conductive pattern, if a combination of the conductive patterns 521b and 531b is regarded as one conductive pattern, and if a combination of the conductive patterns 522b and 532b is regarded as one conductive pattern, the arrangement of conductive patterns in FIG. 22B is equivalent to the arrangement in which conductive patterns of the same width are evenly spaced in a single digitizer that is not divided into two digitizers 520 and 530 based on the folding axis 540. That is, the width of the conductive pattern 521 in the first direction 551 and the width of the conductive pattern 531 in the second direction 552 may be configured such that the sum of the width of the conductive pattern 521 in the first direction 551 and the width of the conductive pattern 531 in the second direction 552 is equal to each width of other conductive patterns 522, 523, 532, and 533 that are not divided by the folding axis 540. Similarly, the width of the conductive pattern 521b in the first direction 551 and the width of the conductive pattern 531 in the second direction 552 may be configured such that the sum of the width of the conductive pattern 521b in the first direction 551 and the width of the conductive pattern 531b in the second direction 552 is equal to each width of other conductive patterns 522, 523, 532, and 533 that are not divided by the folding axis 540. Similarly, the width of the conductive pattern 522b in the first direction 551 and the width of the conductive pattern 532b in the second direction 552 may be configured such that the sum of the width of the conductive pattern 522b in the first direction 551 and the width of the conductive pattern 532b in the second direction 552 is equal to each width of other conductive patterns 522, 523, 532, and 533 that are not divided by the folding axis 540.

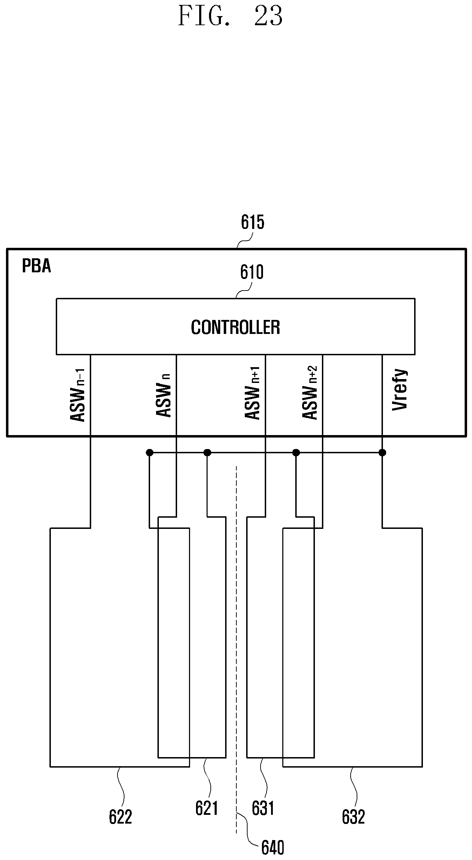

FIG. 23 illustrates a connection between conductive patterns included in a digitizer and a controller according to various embodiments. Details of a PBA 615 and a controller 610 are the same as those of the PBA 315 and the controller 310 shown in FIG. 21, so descriptions thereof will not be repeated here.

Although conductive patterns 621, 622, 631, and 632 are shown as being directly connected to the controller 610 in FIG. 23, this connection is electrically equivalent to that a connector is further included on the PBA 615 and the conductive patterns 621, 622, 631, and 632 are connected to the controller 610 through the connector as shown in FIG. 21. In addition, although the PBA 615 is shown as being disposed to cross the folding axis 640 in FIG. 23, this is for convenience of illustration. According to various embodiments, the PBA 615 may be located in one of the first housing corresponding to the left side of the folding axis 640 or the second housing corresponding to the right side.

Shown in FIG. 23 are only two conductive patterns 621 and 622 among the plurality of first conductive patterns constituting the first digitizer included in the first housing corresponding to the left side with respect to the folding axis 640. Similarly, only two conductive patterns 631 and 632 among the plurality of second conductive patterns constituting the second digitizer included in the second housing corresponding to the right side with respect to the folding axis 640 are shown in FIG. 23. The lengths of the conductive patterns 621, 622, 631, and 632 in the direction of the folding axis 640 may be greater than the lengths of the conductive patterns 621, 622, 631, and 632 in the direction perpendicular to the folding axis 640, respectively.

According to various embodiments, the conductive patterns 621 and 622 included in the first digitizer may be connected to the PBA 615 by the connection interface 325 as shown in FIG. 21, and the conductive patterns 631 and 632 included in the second digitizer may be connected to the PBA 615 by the connection interface 335 as shown in FIG. 21.

According to various embodiments, a first end of the conductive pattern 622 may be connected to a reference terminal V_{refy} of the controller 610, and a second end of the conductive pattern 622 may be connected to an (n-1)th input terminal VSWₙ₋₁ of the controller 610. A first end of the conductive pattern 621 may be connected to the reference terminal V_{refy} of the controller 610, and a second end of the conductive pattern 621 may be connected to an nth input terminal VSWₙ of the controller 610. A first end of the conductive pattern 631 may be connected to the reference terminal V_{refy} of the controller 610, and a second end of the conductive pattern 631 may be connected to an (n+1)th input terminal VSWₙ₊₁ of the controller 610. A first end of the conductive pattern 632 may be connected to the reference terminal V_{refy} of the controller 610, and a second end of the conductive pattern 632 may be connected to an (n+2)th input terminal VSWₙ₊₂ of the controller 610.

According to various embodiments, the electronic pen may generate a magnetic field in contact with or in proximity to the first and second digitizers, and this magnetic field may be referred to as a pen signal of the electronic pen. The magnetic field generated by the electronic pen generates an induced current in each of the conductive patterns 621, 622, 631, and 632. An induced current generated in each of the conductive patterns 621, 622, 631, and 632 or a voltage induced across each of the conductive patterns 621, 622, 631, and 632 may be transmitted to the input terminals of the controller 610 as a signal ASWₙ₋₁, ASWₙ, ASWₙ₊₁, or ASWₙ₊₂ generated in each of the conductive patterns 621, 622, 631, and 632.

The controller 610 may receive the signals ASWₙ₋₁, ASWₙ, ASWₙ₊₁, and ASWₙ₊₂ generated by the respective conductive patterns 621, 622, 631, and 632 included in the first and second digitizers and, based on the received signals, identify the position of the electronic pen. According to various embodiments, the controller 610 may identify the sum of the signal ASWₙ generated by the conductive pattern 621 and the signal ASWₙ₊₁ generated by the conductive pattern 631 and, based on the sum ASWₙ+ASWₙ₊₁ of two signals and the distribution of signals ASWₙ₋₁ and ASWₙ₊₂ received through other input terminals, identify the value of ingredient in a direction perpendicular to the folding axis 640 among the coordinates specifying the position of the electronic pen, thereby identifying the position of the electronic pen. That is, by identifying the sum of the signal ASWₙ generated by the conductive pattern 621 and the signal ASWₙ₊₁ generated by the conductive pattern 631, the controller 610 may operate similarly to regarding a combination of the conductive patterns 621 and 631 as a single conductive pattern.

According to various embodiments, in the case that the first and second digitizers have the conductive pattern arrangement as shown in FIG. 22B, the controller 610 may identify the sum of the signal generated by the conductive pattern 521 and the signal generated by the conductive pattern 531, the sum of the signal generated by the conductive pattern 521b and the signal generated by the conductive pattern 531b, and the sum of the signal generated by the conductive pattern 522b and the signal generated by the conductive pattern 532b. Then, based on these sums and the distribution of the signals generated by the conductive patterns 522, 523, 532, and 533, the controller 610 may identify the value of ingredient in a direction perpendicular to the folding axis 540 among the coordinates specifying the position of the electronic pen, thereby identifying the position of the electronic pen. That is, the controller 610 may operate similarly to regarding a combination of the conductive patterns 521 and 531 as a single conductive pattern, regarding a combination of the conductive patterns 521b and 531b as a single conductive pattern, and regarding a combination of the conductive patterns 522b and 532b as a single conductive pattern.

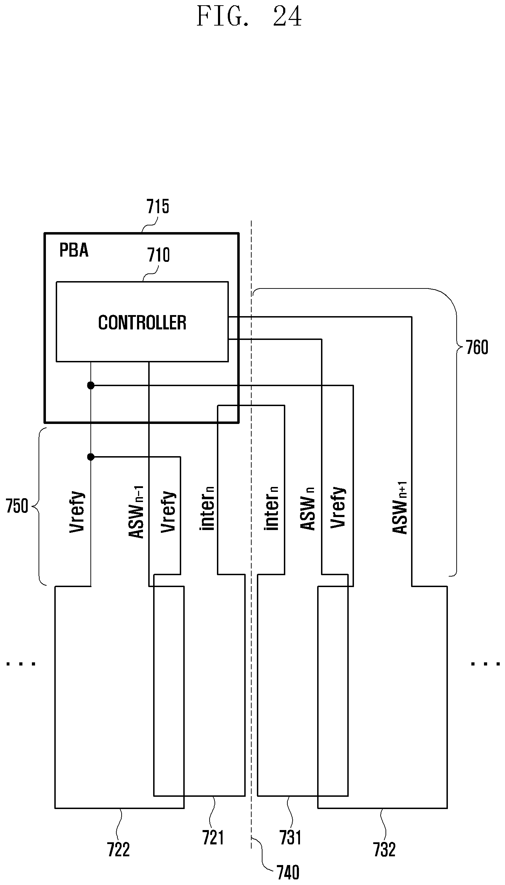

FIG. 24 illustrates a connection between conductive patterns included in a digitizer and a controller according to various embodiments.

Details of a PBA 715 and a controller 710 are the same as those of the PBA 315 and the controller 310 shown in FIG. 21, so descriptions thereof will not be repeated here. Although conductive patterns 721, 722, 731, and 732 are shown as being directly connected to the controller 710 in FIG. 24, this connection is electrically equivalent to that a connector is further included on the PBA 715 and the conductive patterns 721, 722, 731, and 732 are connected to the controller 710 through the connector as shown in FIG. 21.

Shown in FIG. 24 are only two conductive patterns 721 and 722 among the plurality of first conductive patterns constituting the first digitizer included in the first housing corresponding to the left side with respect to the folding axis 740. Similarly, only two conductive patterns 731 and 732 among the plurality of second conductive patterns constituting the second digitizer included in the second housing corresponding to the right side with respect to the folding axis 740 are shown in FIG. 24. The lengths of the conductive patterns 721, 722, 731, and 732 in the direction of the folding axis 740 may be greater than the lengths of the conductive patterns 721, 722, 731, and 732 in the direction perpendicular to the folding axis 740, respectively.

According to various embodiments, between 750 the conductive patterns 721 and 722 included in the first digitizer and the PBA 715, the connection interface 325 may be connected as shown in FIG. 21, and between 760 the conductive patterns 731 and 732 included in the second digitizer and the PBA 715, the connection interface 335 may be connected as shown in FIG. 21.

According to various embodiments, a first end of the conductive pattern 722 may be connected to a reference terminal V_{refy} of the controller 710, and a second end of the conductive pattern 722 may be connected to an (n-1)th input terminal of the controller 710. A first end of the conductive pattern 721 may be connected to the reference terminal V_{refy} of the controller 710, and a second end of the conductive pattern 721 may be connected to the first end of the conductive pattern 731 through an interface (intern). A second end of the conductive pattern 731 may be connected to an nth input terminal of the controller 710. A first end of the conductive pattern 732 may be connected to the reference terminal V_{refy} of the controller 710, and a second end of the conductive pattern 732 may be connected to an (n+1)th input terminal of the controller 710.

According to various embodiments, the electronic pen may generate a magnetic field in contact with or in proximity to the first and second digitizers, and this magnetic field may be referred to as a pen signal of the electronic pen. The magnetic field generated by the electronic pen may generate an induced current in each of the conductive patterns 721, 722, 731, and 732. At this time, because the conductive patterns 721 and 731 are connected in series through the interface (intern), an induced current corresponding to the sum of the magnetic flux passing through the cross-section of the conductive pattern 721 and the magnetic flux passing through the cross-section of the conductive pattern 731 among the magnetic fluxes by the pen signal may flow in the conductive patterns 721 and 731. The induced current flowing in the conductive patterns 721 and 731 or the voltage induced across the conductive patterns 721 and 731 may be transmitted to the input terminal of the controller 710 as an nth signal ASWₙ. In addition, the current induced in each of the conductive patterns 722 and 732 or the voltage induced across each of the conductive patterns 722 and 732 by the magnetic field generated by the electronic pen may be transmitted to the input terminals of the controller 710 as a signal ASWₙ₋₁ or ASWₙ₊₁ generated in each of the conductive patterns 722 and 732.

The controller 710 may identify the position of the electronic pen, based on the received signals ASWₙ₋₁, ASWₙ, and ASWₙ₊₁. Specifically, by identifying the value of ingredient in a direction perpendicular to the folding axis 740 among the coordinates specifying the position of the electronic pen, based on the distribution of the received signals ASWₙ₋₁, ASWₙ, and ASWₙ₊₁, the controller 710 may identify the position of the electronic pen. Because the signal ASWₙ is a signal based on the sum of the magnetic flux passing through the cross-section of the conductive pattern 721 and the magnetic flux passing through the cross-section of the conductive pattern 731 among the magnetic fluxes generated by the pen signal, the controller 710 may operate similarly to regarding a combination of the conductive patterns 721 and 731 as a single conductive pattern.

According to various embodiments, in the case that the first and second digitizers have the conductive pattern arrangement as shown in FIG. 22B, the conductive patterns 521 and 531 may be connected in series, the conductive patterns 521b and 531b may be connected in series, and the conductive patterns 522b and 532b may be connected in series. Therefore, in this case, the controller may identify the value of ingredient in a direction perpendicular to the folding axis 540 among the coordinates specifying the position of the electronic pen in consideration of a signal based on the sum of the magnetic flux passing through the cross-section of the conductive pattern 521 and the magnetic flux passing through the cross-section of the conductive pattern 531, a signal based on the sum of the magnetic flux passing through the cross-section of the conductive pattern 521b and the magnetic flux passing through the cross-section of the conductive pattern 531b, and a signal based on the sum of the magnetic flux passing through the cross-section of the conductive pattern 522b and the magnetic flux passing through the cross-section of the conductive pattern 532b among the magnetic fluxes generated by the pen signal. Thus, the controller may operate similarly to regarding a combination of the conductive patterns 521 and 531 as a single conductive pattern, regarding a combination of the conductive patterns 521b and 531b as a single conductive pattern, and regarding a combination of the conductive patterns 522b and 532b as a single conductive pattern.

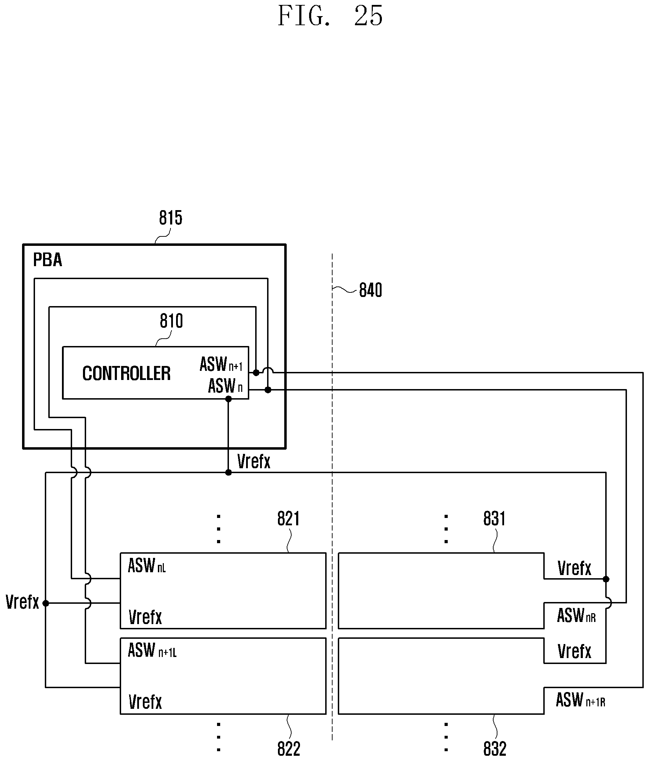

FIG. 25 illustrates a connection between conductive patterns included in a digitizer and a controller according to various embodiments.

Details of a PBA 815 and a controller 810 are the same as those of the PBA 315 and the controller 310 shown in FIG. 21, so descriptions thereof will not be repeated here. The first digitizer included in the first housing corresponding to the left side with respect to the folding axis 840 may include a plurality of first conductive patterns, and the second digitizer included in the second housing corresponding to the right side with respect to the folding axis 840 may include a plurality of second conductive patterns. In FIG. 25, only two conductive patterns 821 and 822 among the plurality of first conductive patterns included in the first digitizer and only two conductive patterns 831 and 832 among the plurality of second conductive patterns included in the second digitizer are shown. The lengths of the conductive patterns 821, 822, 831, and 832 in the direction of the folding axis 840 may be smaller than the widths of the conductive patterns 821, 822, 831, and 832 in the direction perpendicular to the folding axis 840, respectively. In addition, the position of the conductive pattern 821 in the direction of the folding axis 840 may correspond to the position of the conductive pattern 831 in the direction of the folding axis 840, and the position of the conductive pattern 822 in the direction of the folding axis 840 may correspond to the position of the conductive pattern 832 in the direction of the folding axis 840.

According to various embodiments, between the conductive patterns 821 and 822 included in the first digitizer and the PBA 815, the connection interface 325 may be connected as shown in FIG. 21, and between the conductive patterns 831 and 832 included in the second digitizer and the PBA 815, the connection interface 335 may be connected as shown in FIG. 21.

According to various embodiments, a first end of the conductive pattern 821 may be connected to a reference terminal V_{refx} of the controller 810, and a second end of the conductive pattern 821 may be connected to an nth input terminal ASW_{nL} of the controller 810. According to various embodiments, a first end of the conductive pattern 822 may be connected to the reference terminal V_{refx} of the controller 810, and a second end of the conductive pattern 822 may be connected to an (n+1)th input terminal ASWₙ₊₁ of the controller 810. According to various embodiments, a first end of the conductive pattern 831 may be connected to the reference terminal V_{refx} of the controller 810, and a second end of the conductive pattern 831 may be connected to an nth input terminal ASW_{nR} of the controller 810. According to various embodiments, a first end of the conductive pattern 832 may be connected to the reference terminal V_{refx} of the controller 810, and a second end of the conductive pattern 832 may be connected to an (n+1)th input terminal VSW_{n+1R} of the controller 810.

According to various embodiments, the electronic pen may generate a magnetic field in contact with or in proximity to the first and second digitizers, and this magnetic field may be referred to as a pen signal of the electronic pen. The magnetic field generated by the electronic pen generates an induced current in each of the conductive patterns 821, 822, 831, and 832, and an induced current generated in each of the conductive patterns 821, 822, 831, and 832 may be transmitted to the input terminals of the controller 810. Because the second end of the conductive pattern 821 and the second end of the conductive pattern 831 are connected in parallel to the nth input terminal of the controller 810 as shown in FIG. 25, the signal ASWₙ inputted to the nth input terminal of the controller 810 may be the sum of the signal ASW_{nL} generated from the conductive pattern 821 and the signal ASW_{nR} generated from the conductive pattern 831. Also, because the second end of the conductive pattern 822 and the second end of the conductive pattern 832 are connected in parallel to the (n+1)th input terminal of the controller 810, the signal ASWₙ₊₁ inputted to the (n+1)th input terminal of the controller 810 may be the sum of the signal ASW_{n+1L} generated from the conductive pattern 822 and the signal ASW_{n+1R} generated from the conductive pattern 832. Therefore, the controller 810 may identify the position of the electronic pen by identifying the sum of signals from a pair of conductive patterns (the conductive pattern 821 and the conductive pattern 831, or the conductive pattern 822 and the conductive pattern 832) whose positions in the direction of the folding axis 840 correspond to each other. Specifically, the controller 810 may identify the position of the electronic pen by identifying the value of ingredient parallel to the folding axis 840 among the coordinates specifying the position of the electronic pen based on the distribution of the received signals ASWₙ and ASWₙ₊₁.

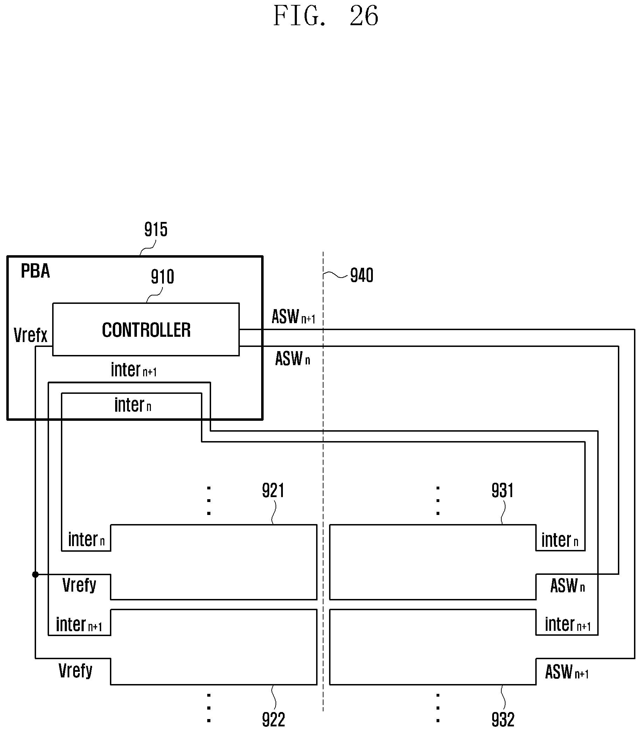

FIG. 26 illustrates a connection between conductive patterns included in a digitizer and a controller according to various embodiments.

Details of a PBA 915 and a controller 910 are the same as those of the PBA 315 and the controller 310 shown in FIG. 21, so descriptions thereof will not be repeated here. As in FIG. 26, the first digitizer included in the first housing corresponding to the left side with respect to the folding axis 940 may include a plurality of first conductive patterns, and the second digitizer included in the second housing corresponding to the right side with respect to the folding axis 840 may include a plurality of second conductive patterns. In FIG. 26, only two conductive patterns 921 and 922 among the plurality of first conductive patterns included in the first digitizer and only two conductive patterns 931 and 932 among the plurality of second conductive patterns included in the second digitizer are shown. The lengths of the conductive patterns 921, 922, 931, and 932 in the direction of the folding axis 940 may be smaller than the widths of the conductive patterns 921, 922, 931, and 932 in the direction perpendicular to the folding axis 940, respectively. In addition, the position of the conductive pattern 921 in the direction of the folding axis 940 may correspond to the position of the conductive pattern 931 in the direction of the folding axis 940, and the position of the conductive pattern 922 in the direction of the folding axis 940 may correspond to the position of the conductive pattern 932 in the direction of the folding axis 940.

According to various embodiments, between the conductive patterns 921 and 922 included in the first digitizer and the PBA 915, the connection interface 325 may be connected as shown in FIG. 21, and between the conductive patterns 931 and 932 included in the second digitizer and the PBA 915, the connection interface 335 may be connected as shown in FIG. 21.

According to various embodiments, a first end of the conductive pattern 921 may be connected to a reference terminal V_{refx} of the controller 910, and a second end of the conductive pattern 921 may be connected to a first end of the conductive pattern 931 through an interface (intern). A second end of the conductive pattern 931 may be connected to an nth input terminal of the controller 910. According to various embodiments, a first end of the conductive pattern 922 may be connected to the reference terminal V_{refx} of the controller 910, and a second end of the conductive pattern 922 may be connected to a first end of the conductive pattern 932 through an interface (intern+1). A second end of the conductive pattern 932 may be connected to an (n+1)th input terminal of the controller 910.

According to various embodiments, the electronic pen may generate a magnetic field in contact with or in proximity to the first and second digitizers, and this magnetic field may be referred to as a pen signal of the electronic pen. The magnetic field generated by the electronic pen may generate an induced current in each of the conductive patterns 921, 922, 931, and 932. At this time, because the conductive patterns 921 and 931 are connected in series through the interface (intern), an induced current corresponding to the sum of the magnetic flux passing through the cross-section of the conductive pattern 921 and the magnetic flux passing through the cross-section of the conductive pattern 931 among the magnetic fluxes by the pen signal may flow in the conductive patterns 921 and 931. The induced current flowing in the conductive patterns 921 and 931 or the voltage induced across the conductive patterns 921 and 931 may be transmitted to the input terminal of the controller 910 as an nth signal ASWₙ. Similarly, because the conductive patterns 922 and 932 are connected in series through the interface (intern+1), an induced current corresponding to the sum of the magnetic flux passing through the cross-section of the conductive pattern 922 and the magnetic flux passing through the cross-section of the conductive pattern 932 among the magnetic fluxes by the pen signal may flow in the conductive patterns 922 and 932. The induced current flowing in the conductive patterns 922 and 932 or the voltage induced across the conductive patterns 922 and 932 may be transmitted to the input terminals of the controller 910 as an (n+1)th signal ASWₙ₊₁.

The controller 910 may identify the position of the electronic pen, based on the received signals ASWₙ and ASWₙ₊₁. Specifically, by identifying the value of ingredient parallel to the folding axis 940 among the coordinates specifying the position of the electronic pen, based on the distribution of the received signals ASWₙ and ASWₙ₊₁, the controller 910 may identify the position of the electronic pen. Because the signal ASWₙ is a signal based on the sum of the magnetic flux passing through the cross-section of the conductive pattern 921 and the magnetic flux passing through the cross-section of the conductive pattern 931 among the magnetic fluxes by the pen signal, and the signal ASWₙ₊₁ is a signal based on the sum of the magnetic flux passing through the cross-section of the conductive pattern 922 and the magnetic flux passing through the cross-section of the conductive pattern 932 among the magnetic fluxes by the pen signal, the controller 910 may operate similarly to regarding a combination of the conductive patterns 921 and 931 as a single conductive pattern and regarding a combination of the conductive patterns 922 and 932 as a single conductive pattern.

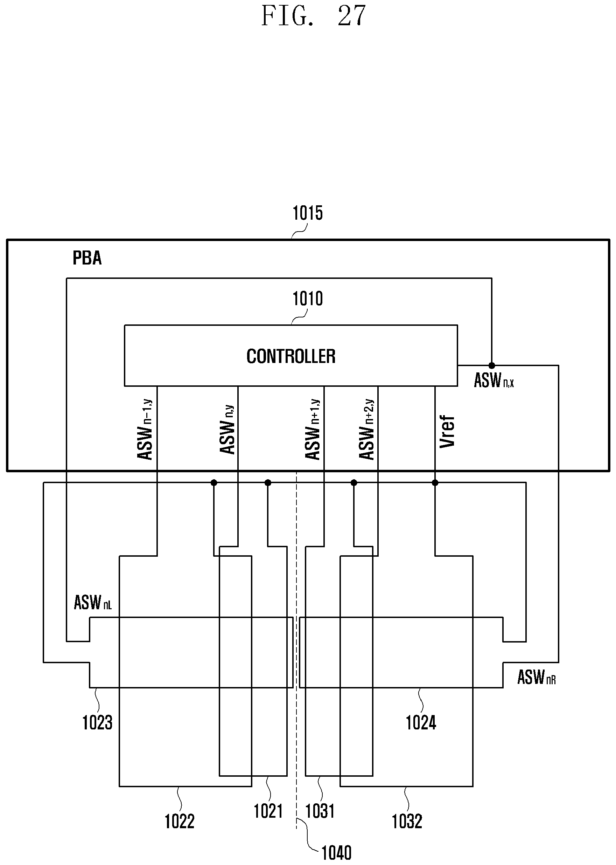

FIG. 27 illustrates a connection between conductive patterns included in a digitizer and a controller according to various embodiments.

Details of a PBA 1015 and a controller 1010 are the same as those of the PBA 315 and the controller 310 shown in FIG. 21, so descriptions thereof will not be repeated here.

Although conductive patterns 1021, 1022, 1031, and 1032 are shown as being directly connected to the controller 1010 in FIG. 27, this connection is electrically equivalent to that a connector is further included on the PBA 1015 and the conductive patterns 1021, 1022, 1031, and 1032 are connected to the controller 1010 through the connector as shown in FIG. 21. In addition, although the PBA 1015 is shown as being disposed to cross the folding axis 1040 in FIG. 27, this is for convenience of illustration. According to various embodiments, the PBA 1015 may be located in one of the first housing corresponding to the left side of the folding axis 1040 or the second housing corresponding to the right side.

Shown in FIG. 27 are only three conductive patterns 1021, 1022, and 1023 among the plurality of first conductive patterns constituting the first digitizer included in the first housing corresponding to the left side with respect to the folding axis 1040. Similarly, only three conductive patterns 1031, 1032, and 1024 among the plurality of second conductive patterns constituting the second digitizer included in the second housing corresponding to the right side with respect to the folding axis 1040 are shown in FIG. 27. The lengths of the conductive patterns 1021, 1022, 1031, and 1032 in the direction of the folding axis 1040 may be greater than the lengths of the conductive patterns 1021, 1022, 1031, and 1032 in the direction perpendicular to the folding axis 1040, respectively. The lengths of the conductive patterns 1023 and 1024 in the direction of the folding axis 1040 may be smaller than the lengths of the conductive patterns 1023 and 1024 in the direction perpendicular to the folding axis 1040, respectively. Also, the position of the conductive pattern 1023 in the direction of the folding axis 1040 may correspond to the position of the conductive pattern 1024 in the direction of the folding axis 1040.

According to various embodiments, the conductive patterns 1021, 1022, and 1023 included in the first digitizer may be connected to the PBA 1015 by the connection interface 325 as shown in FIG. 21, and the conductive patterns 1031, 1032, and 1024 included in the second digitizer may be connected to the PBA 1015 by the connection interface 335 as shown in FIG. 21.

According to various embodiments, a first end of the conductive pattern 1022 may be connected to a reference terminal V_{ref} of the controller 1010, and a second end of the conductive pattern 1022 may be connected to an (n-1)th input terminal of the controller 1010. A first end of the conductive pattern 1021 may be connected to the reference terminal V_{ref} of the controller 1010, and a second end of the conductive pattern 1021 may be connected to an nth input terminal of the controller 1010. A first end of the conductive pattern 1031 may be connected to the reference terminal V_{ref} of the controller 1010, and a second end of the conductive pattern 1031 may be connected to an (n+1)th input terminal of the controller 1010. A first end of the conductive pattern 1032 may be connected to the reference terminal V_{ref} of the controller 1010, and a second end of the conductive pattern 1032 may be connected to an (n+2)th input terminal of the controller 1010.

According to various embodiments, the electronic pen may generate a magnetic field in contact with or in proximity to the first and second digitizers, and this magnetic field may be referred to as a pen signal of the electronic pen. The magnetic field generated by the electronic pen generates an induced current in each of the conductive patterns 1021, 1022, 1031, and 1032. An induced current generated in each of the conductive patterns 1021, 1022, 1031, and 1032 or a voltage induced across each of the conductive patterns 1021, 1022, 1031, and 1032 may be transmitted to the input terminals of the controller 1010 as a signal ASW_{n-1,y}, ASW_{n,y}, ASW_{n+1,y}, or ASW_{n+2,y} generated in each of the conductive patterns 1021, 1022, 1031, and 1032.

The controller 1010 may receive the signals ASW_{n-1,y}, ASW_{n,y}, ASW_{n+1,y}, and ASW_{n+2,y} generated by the respective conductive patterns 1021, 1022, 1031, and 1032 included in the first and second digitizers and, based on the received signals, identify the position of the electronic pen. According to various embodiments, the controller 1010 may identify the sum of the signal ASW_{n,y} generated by the conductive pattern 1021 and the signal ASW_{n+1,y} generated by the conductive pattern 1031 and, based on the sum ASW_{n,y}+ASW_{n+1,y} of two signals and the distribution of signals ASW_{n-1,y} and ASW_{n+2,y} received through other input terminals, identify the value of ingredient in a direction perpendicular to the folding axis 1040 among the coordinates specifying the position of the electronic pen, thereby identifying the position of the electronic pen. That is, by identifying the sum of the signal ASW_{n,y} generated by the conductive pattern 1021 and the signal ASW_{n+1,y} generated by the conductive pattern 1031, the controller 1010 may operate similarly to regarding a combination of the conductive patterns 1021 and 1031 as a single conductive pattern.

According to various embodiments, a first end of the conductive pattern 1023 may be connected to a reference terminal V_{ref} of the controller 1010, and a second end of the conductive pattern 1021 may be connected to an nth input terminal of the controller 1010. According to various embodiments, a first end of the conductive pattern 1024 may be connected to the reference terminal V_{ref} of the controller 1010, and a second end of the conductive pattern 1031 may be connected to an nth input terminal of the controller 1010.

According to various embodiments, the electronic pen may generate a magnetic field in contact with or in proximity to the first and second digitizers, and this magnetic field may be referred to as a pen signal of the electronic pen. The magnetic field generated by the electronic pen generates an induced current in each of the conductive patterns 1023 and 1024, and an induced current generated in each of the conductive patterns 1023 and 1024 may be transmitted to the nth input terminals of the controller 1010. Because the second end of the conductive pattern 1023 and the second end of the conductive pattern 1024 are connected in parallel to the nth input terminal of the controller 1010 as shown in FIG. 27, the signal ASW_{n,x} inputted to the nth input terminal of the controller 1010 may be the sum of the signal ASW_{nL} generated from the conductive pattern 1021 and the signal ASW_{nR} generated from the conductive pattern 1031. Therefore, the controller 1010 may identify the position of the electronic pen, based on the sum of signals from a pair of conductive patterns (e.g., the conductive patterns 1023 and 1024) whose positions in the direction of the folding axis 1040 correspond to each other. Specifically, the controller 1010 may identify the position of the electronic pen by identifying the value of ingredient parallel to the folding axis 1040 among the coordinates specifying the position of the electronic pen, based on the distribution of signals for identifying the coordinates of the electronic pen in the direction parallel to the folding axis 1040 of the electronic pen, which is omitted in FIG. 27, including the received signals ASW_{n,x}.

Those skilled in the art will understand that FIG. 27 is a combination of the embodiments of FIGS. 23 and 25. Various embodiments are not limited to the combination of the embodiments of FIGS. 23 and 25, and those skilled in the art will understand that a combination of the embodiments of FIGS. 24 and 25, a combination of the embodiments of FIGS. 23 and 26, or a combination of the embodiments of FIGS. 24 and 26 is also possible.

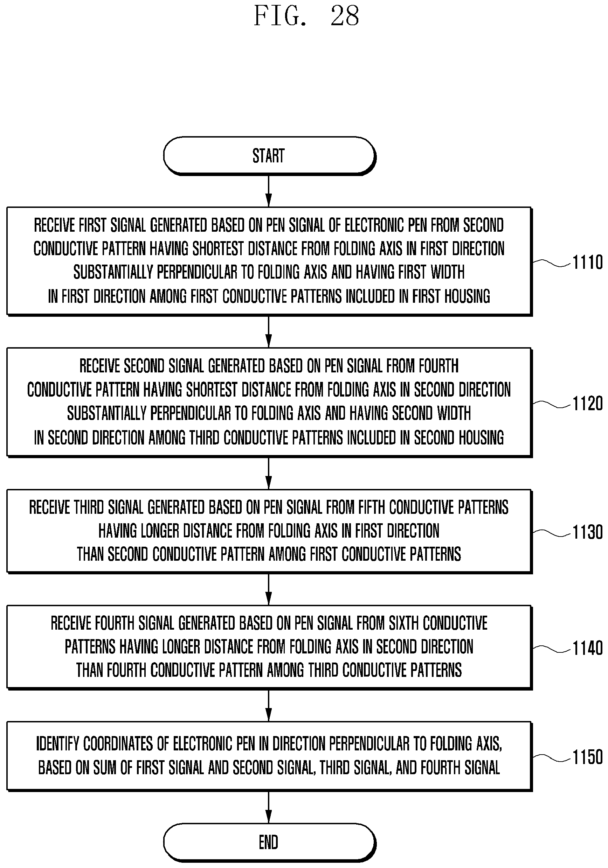

FIG. 28 is a flowchart illustrating operations performed by an electronic device according to various embodiments.

At operation 1110, a controller (e.g., the controller 610) included in the electronic device may receive a first signal (e.g., the signal ASWₙ) generated based on a pen signal of an electronic pen from a second conductive pattern (e.g., the conductive pattern 621) having the shortest distance from a folding axis (e.g., the folding axis 640) in a first direction substantially perpendicular to the folding axis and having a first width in the first direction among first conductive patterns (e.g., the conductive patterns 621 and 622) included in a first housing.

At operation 1120, the controller (e.g., the controller 610) included in the electronic device may receive a second signal (e.g., the signal ASWₙ₊₁) generated based on the pen signal from a fourth conductive pattern (e.g., the conductive pattern 631) having the shortest distance from the folding axis (e.g., the folding axis 640) in a second direction substantially perpendicular to the folding axis and having a second width in the second direction among third conductive patterns (e.g., the conductive patterns 631 and 632) included in a second housing.

At operation 1130, the controller (e.g., the controller 610) included in the electronic device may receive a third signal (e.g., the signal ASWₙ₋₁) generated based on the pen signal from a fifth conductive pattern (e.g., the conductive pattern 622) having a longer distance from the folding axis (e.g., the folding axis 640) in the first direction than the second conductive pattern (e.g., the conductive pattern 621) among the first conductive patterns (e.g., the conductive patterns 621 and 622).

At operation 1140, the controller (e.g., the controller 610) included in the electronic device may receive a fourth signal (e.g., the signal ASWₙ₊₂) generated based on the pen signal from a sixth conductive pattern (e.g., the conductive pattern 632) having a longer distance from the folding axis (e.g., the folding axis 640) in the second direction than the fourth conductive pattern (e.g., the conductive pattern 631) among the third conductive patterns (e.g., the conductive patterns 631 and 632).

At operation 1150, the controller (e.g., the controller 610) included in the electronic device may identify the coordinates of the electronic pen in a direction perpendicular to the folding axis (e.g., the folding axis 640), based on the sum of the first and second signals (e.g., ASWₙ+ASWₙ₊₁), the third signal (e.g., the signal ASWₙ₋₁), and the fourth signal (e.g., the signal ASWₙ₊₂).

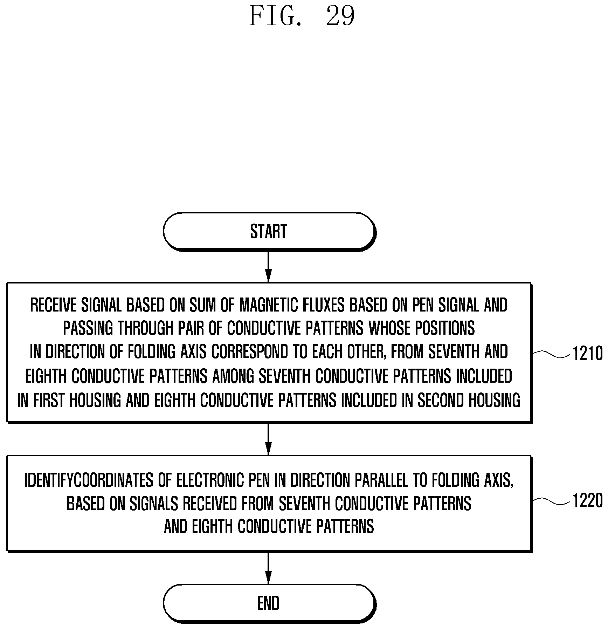

FIG. 29 is a flowchart illustrating operations performed by an electronic device according to various embodiments. At operation 1210, a controller (e.g., the controller 810) included in the electronic device may receive a signal (e.g., the signals ASWand ASWₙ₊₁) based on the sum of magnetic fluxes based on the pen signal and passing through a pair of conductive patterns (e.g., the conductive patterns 821 and 831 or the conductive patterns 822 and 832) whose positions in the direction of the folding axis (e.g., the folding axis 840) correspond to each other, from seventh conductive patterns and eighth conductive patterns among the seventh conductive patterns (e.g., conductive patterns 821 and 822) included in the first housing and the eighth conductive patterns (e.g., the conductive patterns 831 and 832) included in the second housing.

At operation 1220, the controller (e.g., the controller 810) included in the electronic device may identify the coordinates of the electronic pen in a direction parallel to the folding axis (e.g., the folding axis 840), based on the signals (e.g., the signals ASWand ASWₙ₊₁) received from the seventh conductive patterns (e.g., the conductive patterns 821 and 822) and the eighth conductive patterns (e.g., the conductive patterns 831 and 832).

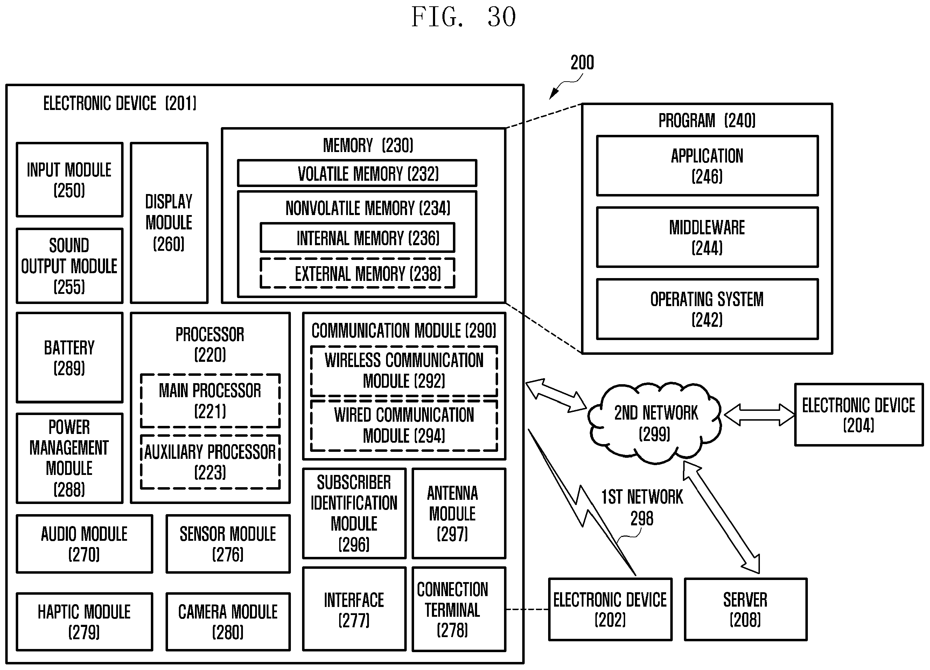

FIG. 30 is a block diagram of an electronic device 201 in a network environment 200 according to various embodiments. The electronic device 201 of FIG. 30 may be similar at least in part to the electronic device 100 of FIGS. 1A to 2B or may further include other embodiments of the electronic device.

Referring to Fig. 30, the electronic device 201 in the network environment 200 may communicate with an electronic device 202 via a first network 298 (e.g., a short-range wireless communication network), or at least one of an electronic device 204 or a server 208 via a second network 299 (e.g., a long-range wireless communication network). According to an embodiment, the electronic device 201 may communicate with the electronic device 204 via the server 208. According to an embodiment, the electronic device 201 may include a processor 220, memory 230, an input module 250, a sound output module 255, a display module 260, an audio module 270, a sensor module 276, an interface 277, a connecting terminal 278, a haptic module 279, a camera module 280, a power management module 288, a battery 289, a communication module 290, a subscriber identification module(SIM) 296, or an antenna module 297. In some embodiments, at least one of the components (e.g., the connecting terminal 278) may be omitted from the electronic device 201, or one or more other components may be added in the electronic device 201. In some embodiments, some of the components (e.g., the sensor module 276, the camera module 280, or the antenna module 297) may be implemented as a single component (e.g., the display module 260).

The processor 220 may execute, for example, software (e.g., a program 240) to control at least one other component (e.g., a hardware or software component) of the electronic device 201 coupled with the processor 220, and may perform various data processing or computation. According to one embodiment, as at least part of the data processing or computation, the processor 220 may store a command or data received from another component (e.g., the sensor module 276 or the communication module 290) in volatile memory 232, process the command or the data stored in the volatile memory 232, and store resulting data in non-volatile memory 234. According to an embodiment, the processor 220 may include a main processor 221 (e.g., a central processing unit (CPU) or an application processor (AP)), or an auxiliary processor 223 (e.g., a graphics processing unit (GPU), a neural processing unit (NPU), an image signal processor (ISP), a sensor hub processor, or a communication processor (CP)) that is operable independently from, or in conjunction with, the main processor 221. For example, when the electronic device 201 includes the main processor 221 and the auxiliary processor 223, the auxiliary processor 223 may be adapted to consume less power than the main processor 221, or to be specific to a specified function. The auxiliary processor 223 may be implemented as separate from, or as part of the main processor 221.

The auxiliary processor 223 may control at least some of functions or states related to at least one component (e.g., the display module 260, the sensor module 276, or the communication module 290) among the components of the electronic device 201, instead of the main processor 221 while the main processor 221 is in an inactive (e.g., sleep) state, or together with the main processor 221 while the main processor 221 is in an active state (e.g., executing an application). According to an embodiment, the auxiliary processor 223 (e.g., an image signal processor or a communication processor) may be implemented as part of another component (e.g., the camera module 280 or the communication module 290) functionally related to the auxiliary processor 223. According to an embodiment, the auxiliary processor 223 (e.g., the neural processing unit) may include a hardware structure specified for artificial intelligence model processing. An artificial intelligence model may be generated by machine learning. Such learning may be performed, e.g., by the electronic device 201 where the artificial intelligence is performed or via a separate server (e.g., the server 208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 230 may store various data used by at least one component (e.g., the processor 220 or the sensor module 276) of the electronic device 201. The various data may include, for example, software (e.g., the program 240) and input data or output data for a command related thererto. The memory 230 may include the volatile memory 232 or the non-volatile memory 234.

The program 240 may be stored in the memory 230 as software, and may include, for example, an operating system (OS) 242, middleware 244, or an application 246.

The input module 250 may receive a command or data to be used by another component (e.g., the processor 220) of the electronic device 201, from the outside (e.g., a user) of the electronic device 201. The input module 250 may include, for example, a microphone, a mouse, a keyboard, a key (e.g., a button), or a digital pen (e.g., a stylus pen).

The sound output module 255 may output sound signals to the outside of the electronic device 201. The sound output module 255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 260 may visually provide information to the outside (e.g., a user) of the electronic device 201. The display module 260 may include, for example, a display, a hologram device, or a projector and control circuitry to control a corresponding one of the display, hologram device, and projector. According to an embodiment, the display module 260 may include a touch sensor adapted to detect a touch, or a pressure sensor adapted to measure the intensity of force incurred by the touch.

The audio module 270 may convert a sound into an electrical signal and vice versa. According to an embodiment, the audio module 270 may obtain the sound via the input module 250, or output the sound via the sound output module 255 or a headphone of an external electronic device (e.g., an electronic device 202) directly (e.g., wiredly) or wirelessly coupled with the electronic device 201.

The sensor module 276 may detect an operational state (e.g., power or temperature) of the electronic device 201 or an environmental state (e.g., a state of a user) external to the electronic device 201, and then generate an electrical signal or data value corresponding to the detected state. According to an embodiment, the sensor module 276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 277 may support one or more specified protocols to be used for the electronic device 201 to be coupled with the external electronic device (e.g., the electronic device 202) directly (e.g., wiredly) or wirelessly. According to an embodiment, the interface 277 may include, for example, a high definition multimedia interface (HDMI), a universal serial bus (USB) interface, a secure digital (SD) card interface, or an audio interface.

A connecting terminal 278 may include a connector via which the electronic device 201 may be physically connected with the external electronic device (e.g., the electronic device 202). According to an embodiment, the connecting terminal 278 may include, for example, a HDMI connector, a USB connector, a SD card connector, or an audio connector (e.g., a headphone connector).

The haptic module 279 may convert an electrical signal into a mechanical stimulus (e.g., a vibration or a movement) or electrical stimulus which may be recognized by a user via his tactile sensation or kinesthetic sensation. According to an embodiment, the haptic module 279 may include, for example, a motor, a piezoelectric element, or an electric stimulator.

The camera module 280 may capture a still image or moving images. According to an embodiment, the camera module 280 may include one or more lenses, image sensors, image signal processors, or flashes.

The power management module 288 may manage power supplied to the electronic device 201. According to one embodiment, the power management module 288 may be implemented as at least part of, for example, a power management integrated circuit (PMIC).

The battery 289 may supply power to at least one component of the electronic device 201. According to an embodiment, the battery 289 may include, for example, a primary cell which is not rechargeable, a secondary cell which is rechargeable, or a fuel cell.

The communication module 290 may support establishing a direct (e.g., wired) communication channel or a wireless communication channel between the electronic device 201 and the external electronic device (e.g., the electronic device 202, the electronic device 204, or the server 208) and performing communication via the established communication channel. The communication module 290 may include one or more communication processors that are operable independently from the processor 220 (e.g., the application processor (AP)) and supports a direct (e.g., wired) communication or a wireless communication. According to an embodiment, the communication module 290 may include a wireless communication module 292 (e.g., a cellular communication module, a short-range wireless communication module, or a global navigation satellite system (GNSS) communication module) or a wired communication module 294 (e.g., a local area network (LAN) communication module or a power line communication (PLC) module). A corresponding one of these communication modules may communicate with the external electronic device via the first network 298 (e.g., a short-range communication network, such as BluetoothTM, wireless-fidelity (Wi-Fi) direct, or infrared data association (IrDA)) or the second network 299 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 292 may identify and authenticate the electronic device 201 in a communication network, such as the first network 298 or the second network 299, using subscriber information (e.g., international mobile subscriber identity (IMSI)) stored in the subscriber identification module 296.

The wireless communication module 292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 292 may support a high-frequency band (e.g., the mmWave band) to achieve, e.g., a high data transmission rate. The wireless communication module 292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 292 may support various requirements specified in the electronic device 201, an external electronic device (e.g., the electronic device 204), or a network system (e.g., the second network 299). According to an embodiment, the wireless communication module 292 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 297 may transmit or receive a signal or power to or from the outside (e.g., the external electronic device) of the electronic device 201. According to an embodiment, the antenna module 297 may include an antenna including a radiating element composed of a conductive material or a conductive pattern formed in or on a substrate (e.g., a printed circuit board (PCB)). According to an embodiment, the antenna module 297 may include a plurality of antennas (e.g., array antennas). In such a case, at least one antenna appropriate for a communication scheme used in the communication network, such as the first network 298 or the second network 299, may be selected, for example, by the communication module 290 (e.g., the wireless communication module 292) from the plurality of antennas. The signal or the power may then be transmitted or received between the communication module 290 and the external electronic device via the selected at least one antenna. According to an embodiment, another component (e.g., a radio frequency integrated circuit (RFIC)) other than the radiating element may be additionally formed as part of the antenna module 297.

According to various embodiments, the antenna module 297 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 201 and the external electronic device 204 via the server 208 coupled with the second network 299. Each of the electronic devices 202 or 204 may be a device of a same type as, or a different type, from the electronic device 201. According to an embodiment, all or some of operations to be executed at the electronic device 201 may be executed at one or more of the external electronic devices 202, 204, or 208. For example, if the electronic device 201 should perform a function or a service automatically, or in response to a request from a user or another device, the electronic device 201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 201. The electronic device 201 may provide the outcome, with or without further processing of the outcome, as at least part of a reply to the request. To that end, a cloud computing, distributed computing, mobile edge computing (MEC), or client-server computing technology may be used, for example. The electronic device 201 may provide ultra low-latency services using, e.g., distributed computing or mobile edge computing. **In** another embodiment, the external electronic device 204 may include an internet-of-things (IoT) device. The server 208 may be an intelligent server using machine learning and/or a neural network. According to an embodiment, the external electronic device 204 or the server 208 may be included in the second network 299. The electronic device 201 may be applied to intelligent services (e.g., smart home, smart city, smart car, or healthcare) based on 5G communication technology or IoT-related technology.

According to various embodiments, an electronic device (e.g., the electronic device 100 in FIG. 1A) may include a first housing (e.g., the first housing 110 in FIG. 1A); a second housing (e.g., the second housing 120 in FIG. 1A) foldably connected to the first housing through a hinge module (e.g., the hinge module 140 in FIG. 1B) based on a folding axis (A); a display panel (e.g., the display panel 430 in FIG. 5) including a first area (e.g., the first area 130a in FIG. 1B) supported by the first housing, a second area (e.g., the second area 130b in FIG. 1B) supported by the second housing, and a third area (e.g., the third area 130c in FIG. 1B) connecting the first area and the second area and bendable through the hinge module (e.g., the hinge module 140 in FIG. 1B); a metal sheet layer (e.g., the metal sheet layer 450 in FIG. 5) disposed under the display panel and including a bendable portion (e.g., the bendable portion 453 in FIG. 5) including a first pattern (e.g., the first pattern 454 in FIG. 5) corresponding to the third area, a first flat portion (e.g., the first flat portion 451 in FIG. 5) extending from the bendable portion and including a second pattern (e.g., the second pattern 455 in FIG. 5) corresponding to the first area, and a second flat portion (e.g., the second flat portion 452 in FIG. 5) extending from the bendable portion and including the second pattern corresponding to the second area; and at least one digitizer (e.g., the digitizer 460 in FIG. 5) disposed under the metal sheet layer, wherein the first pattern and the second pattern have a plurality of openings (e.g., the plurality of first openings 4541 and the plurality of second openings 4551 in FIG. 5) for of wireless signal transfer between the electronic pen and the digitizer.

According to various embodiments, the plurality of openings may be formed to have an aperture ratio having an effective signal transfer rate for wireless signal transfer between at least the electronic pen and the at least one digitizer.

According to various embodiments, the first pattern may include a plurality of first openings (e.g., the plurality of first openings 4541 in FIG. 5) having a first aperture ratio, and the second pattern may include a plurality of second openings (e.g., the plurality of second openings 4551 in FIG. 5) having an aperture ratio equal to or lower than the first aperture ratio.

According to various embodiments, the bendable portion may have bending characteristics determined through shapes and/or an arrangement structure of the plurality of first openings.

According to various embodiments, the first flat portion and/or the second flat portion may have rigidity determined through shapes and/or an arrangement structure of the plurality of second openings.

According to various embodiments, the at least one digitizer (e.g., the digitizer 460 in FIG. 9B) may include a dielectric substrate (e.g., the dielectric substrate 461 in FIG. 9B), a plurality of first conductive patterns (e.g., the first conductive pattern 4621 in FIG. 9B) disposed at predetermined intervals on the dielectric substrate in a first direction parallel to the folding axis (e.g., the folding axis A in FIG. 9B), and a plurality of second conductive patterns (e.g., the second conductive pattern 4622 in FIG. 9B) disposed at predetermined intervals on the dielectric substrate in a second direction intersecting the first direction.

According to various embodiments, the at least one digitizer may include a step region (e.g., the step region 4603 in FIG. 9A) disposed in a region overlapped with at least a part of the bendable portion when the display panel is viewed from above, and having a smaller thickness than a peripheral region.

According to various embodiments, the first conductive pattern or the second conductive pattern may be disposed in the stepped region.

According to various embodiments, the at least one digitizer may include a margin region (e.g., the margin region 4604 in FIG. 10) disposed to be overlapped with at least a part of the bendable portion when the display panel is viewed from above, and formed to be larger than the display panel so as not to be attached to the metal sheet layer.

According to various embodiments, the at least one digitizer may include a wave pattern (e.g., the wave conductive pattern 4623 in FIG. 11) formed by deforming the plurality of second conductive patterns in a zigzag manner in a region overlapped with at least a part of the bendable portion when the display panel is viewed from above.

According to various embodiments, the at least one digitizer may include a third pattern (e.g., the third pattern 4606 in FIG. 12) having a plurality of third openings (e.g., the openings 4606a in FIG. 12) formed in the dielectric substrate in a region overlapped with at least a part of the bendable portion when the display panel is viewed from above.

According to various embodiments, the first conductive pattern and/or the second conductive pattern may be disposed avoiding the plurality of third openings in a region overlapped at least in part with the bendable portion when the display pattern is viewed from above.

According to various embodiments, the at least one digitizer may include a first digitizer (e.g., the first digitizer 481 in FIG. 15A) disposed in a region overlapped with the first flat portion and at least a part of the bendable portion when the display panel is viewed from above, and including a ground line (e.g., the first ground line 4816a in FIG. 15A), and a second digitizer (e.g., the second digitizer 482 in FIG. 15A) disposed to have a separation space from the first digitizer in a region overlapped with the second flat portion and at least a part of the bendable portion when the display panel is viewed from above.

According to various embodiments, a processor operatively connected to the display panel may be further included, and the processor may control the display panel to display a guide object (e.g., the guide object 401 in FIG. 8B) about unrecognizing the electronic pen through a region overlapped with the separation space when the display panel is viewed from above.

According to various embodiments, a first reinforcing plate (e.g., the first reinforcing plate 471 in FIG. 5) disposed under the digitizer in a region overlapped with the first flat portion and at least a part of the bendable portion when the display panel is viewed from above, and a second reinforcing plate (e.g., the second reinforcing plate 472 in FIG. 5) disposed under the digitizer in a region overlapped with the second flat portion and at least a part of the bendable portion when the display panel is viewed from above may be further included.

According to various embodiments, an electronic device may include a first housing; a second housing foldably at least in part connected to the first housing through a hinge module; a flexible display including a first area supported by the first housing, a second area supported by the second housing, and a third area connecting the first area and the second area and bendable through the hinge module, and further including a window layer, a display panel disposed under the window layer, a polymer layer disposed under the display panel, and a metal sheet layer disposed under the polymer layer and including a bendable portion including a first pattern corresponding to the third area, a first flat portion extending from the bendable portion and including a second pattern corresponding to the first area, and a second flat portion extending from the bendable portion and including the second pattern corresponding to the second area; and at least one digitizer disposed under the metal sheet layer, wherein the first pattern and the second pattern may have a plurality of openings for of wireless signal transfer between the electronic pen and the digitizer with the metal sheet layer interposed therebetween.

According to various embodiments, the plurality of openings may be formed to have an aperture ratio having an effective signal transfer rate for wireless signal transfer between at least the electronic pen and the digitizer.

According to various embodiments, the first pattern may include a plurality of first openings having a first aperture ratio, and the second pattern may include a plurality of second openings having an aperture ratio equal to or lower than the first aperture ratio.

According to various embodiments, an electronic device may include a flexible display including a window layer, a display panel disposed under the window layer and having a first area, a second area, and a bendable third area connecting the first and second areas, a polymer layer disposed under the display panel, and a metal sheet layer disposed under the polymer layer and including a bendable portion having a first pattern corresponding to the third area, a first flat portion extending from the bendable portion and having a second pattern corresponding to the first area, and a second flat portion extending from the bendable portion and having the second pattern corresponding to the second area; and at least one digitizer disposed under the metal sheet layer, wherein the first pattern and the second pattern may have a plurality of openings for of wireless signal transfer between the electronic pen and the digitizer with the metal sheet layer interposed therebetween.

According to various embodiments, the plurality of openings may be formed to have an aperture ratio having an effective signal transfer rate for wireless signal transfer between at least the electronic pen and the digitizer, the first pattern may include a plurality of first openings having a first aperture ratio, and the second pattern may include a plurality of second openings having an aperture ratio equal to or lower than the first aperture ratio.

According to various embodiments, the first digitizer may include a dielectric substrate including a first substrate surface facing the display panel, a second substrate surface facing in a direction opposite to the first substrate surface, and a plurality of insulating layers disposed in a space between the first substrate surface and the second substrate surface; a plurality of first conductive patterns disposed at predetermined intervals in a first direction on a first insulating layer among the plurality of insulating layers; a plurality of second conductive patterns disposed at predetermined intervals in a second direction different from the first direction in a second insulating layer between the first insulating layer and the second substrate surface; and at least one ground pattern disposed between the plurality of first conductive patterns, electrically connected to the ground line, and exposed at least in part through the first substrate surface, wherein the at least one ground pattern may be electrically connected to the metal sheet layer through the exposed part.

According to various embodiments, a first electrical connection member disposed between the metal sheet layer and the first digitizer and connecting the exposed part and the metal sheet layer may be further included.

According to various embodiments, a first reinforcing plate disposed under the first digitizer in a region overlapped with the first digitizer when the display panel is viewed from above, and a second reinforcing plate spaced apart from the first reinforcing plate and disposed under the second digitizer in a region overlapped with the second digitizer when the display panel is viewed from above may be further included.

According to various embodiments, the first digitizer may further include a first extension portion extending from the dielectric substrate, bent, and attached under the first reinforcing plate, and at least a part of the ground line disposed to be exposed to outside from the first extension portion may be attached to the first reinforcing plate through a second electrical connecting member, whereby the first reinforcing plate is electrically connected to ground.

According to various embodiments, a bending portion extending from the display panel, bent, and attached under the second reinforcing plate, and a flexible substrate connected to the bending portion and attached under the second reinforcing plate may be further included, and the second reinforcing plate may be electrically connected to a ground through the flexible substrate connected to the ground.

According to various embodiments, the at least one digitizer may include a first digitizer located in an inner space of the first housing and including a plurality of first conductive patterns for generating a first signal based on a pen signal from an electronic pen; and a second digitizer located in an inner space of the second housing and including a plurality of second conductive patterns for generating a second signal based on the pen signal. A controller included in the first housing and configured to identify the position of the electronic pen based on the first and second signals may be included. The plurality of first conductive patterns may include a third conductive pattern having a first width in a first direction substantially perpendicular to the folding axis, and a distance from the third conductive pattern to the folding axis in the first direction may be shorter than a distance from a plurality of fifth conductive patterns, which are conductive patterns other than the third conductive pattern among the plurality of first conductive patterns, to the folding axis in the first direction. The plurality of second conductive patterns may include a fourth conductive pattern having a second width in a second direction substantially perpendicular to the folding axis, and a distance from the fourth conductive pattern to the folding axis in the second direction may be shorter than a distance from a plurality of sixth conductive patterns, which are conductive patterns other than the fourth conductive pattern among the plurality of second conductive patterns, to the folding axis in the second direction. The plurality of fifth conductive patterns may have a third width greater than the first width and the second width in the first direction, and the plurality of sixth conductive patterns may have the third width in the second direction.

According to various embodiments, the controller may be configured to receive, from the third conductive pattern, a third signal generated in the third conductive pattern based on the pen signal, to receive, from the fourth conductive pattern, a fourth signal generated in the fourth conductive pattern based on the pen signal, and to identify the position of the electronic pen based on the sum of the third signal and the fourth signal.

According to various embodiments, the controller may be located in a printed board assembly (PBA), and the second digitizer may be connected to the PBA through an FPCB crossing the folding axis.

According to various embodiments, the third width may be the sum of the first width and the second width.

According to various embodiments, a length of each of the plurality of first conductive patterns in the folding axis direction may be greater than a width of each of the plurality of first conductive patterns in the first direction, and a length of each of the plurality of second conductive patterns in the folding axis direction may be greater than a width of each of the plurality of second conductive patterns in the second direction. The controller may be configured to identify the coordinates of the electronic pen in a direction perpendicular to the folding axis based on at least one of the first signal and the second signal.

According to various embodiments, the first digitizer may include a plurality of seventh conductive patterns generating a signal for identifying coordinates of the electronic pen in a direction parallel to the folding axis based on the pen signal, and the second digitizer may include a plurality of eighth conductive patterns generating a signal for identifying coordinates of the electronic pen in a direction parallel to the folding axis based on the pen signal. A width of each of the plurality of seventh conductive patterns in the first direction may be greater than a length of each of the plurality of seventh conductive patterns in the folding axis direction, and a width of each of the plurality of eighth conductive patterns in the second direction may be greater than a length of each of the plurality of eighth conductive patterns in the folding axis direction.

According to various embodiments, the controller may be configured to receive a signal generated based on the pen signal from the plurality of seventh conductive patterns and the plurality of eighth conductive patterns, and to identify the coordinates of the electronic pen in a direction parallel to the folding axis, based on the sum of signals from a pair of conductive patterns whose positions in the folding axis direction correspond to each other among the plurality of seventh and eighth conductive patterns.

According to various embodiments, a first end of each of the plurality of seventh conductive patterns may be connected to a reference end of the controller, and a second end of each of the plurality of eighth conductive patterns may be connected to the reference end of the controller. Also, a second end of each of the plurality of seventh conductive patterns may be connected to a plurality of input terminals of the controller and a first end of a pair of conductive patterns whose positions in the folding axis direction correspond to each other among the plurality of eighth conductive patterns. The controller may be configured to identify the sum of signals, inputted to the plurality of input terminals, from the plurality of seventh conductive patterns and the pair of conductive patterns whose positions in the folding axis direction correspond to each other among the plurality of eighth conductive patterns.

According to various embodiments, a first end of each of the plurality of seventh conductive patterns may be connected to the controller, and a second end of each of the plurality of seventh conductive patterns may be connected to a first end of conductive patterns whose positions in the folding axis direction correspond to each other among the plurality of eighth conductive patterns. A second end of each of the plurality of eighth conductive patterns may be connected to the controller.

According to various embodiments, an electronic device may include a first housing; a second housing rotatably connected to the first housing about a folding axis; a first digitizer positioned in the first housing and including a plurality of first conductive patterns; a second digitizer positioned in the second housing and including a plurality of second conductive patterns, and a controller positioned in the first housing and configured to identify a position of the electronic pen based on signals from the first and second digitizers. The plurality of first conductive patterns may include a third conductive pattern having a first width in a first direction substantially perpendicular to the folding axis, and a distance from the third conductive pattern to the folding axis in the first direction may be shorter than a distance from a plurality of fifth conductive patterns, which are conductive patterns other than the third conductive pattern among the plurality of first conductive patterns, to the folding axis in the first direction. The plurality of second conductive patterns may include a fourth conductive pattern having a second width in a second direction substantially perpendicular to the folding axis, and a distance from the fourth conductive pattern to the folding axis in the second direction may be shorter than a distance from a plurality of sixth conductive patterns, which are conductive patterns other than the fourth conductive pattern among the plurality of second conductive patterns, to the folding axis in the second direction. The plurality of fifth conductive patterns may have a third width greater than the first width and the second width in the first direction, and the plurality of sixth conductive patterns may have the third width in the second direction. A first end of the third conductive pattern may be connected to the controller, a second end of the third conductive pattern may be connected to a first end of the fourth conductive pattern, and a second end of the fourth conductive pattern may be connected to the controller.

According to various embodiments, the controller may be located in a printed board assembly (PBA), and the second digitizer may be connected to the PBA through an FPCB crossing the folding axis.

According to various embodiments, the second end of the third conductive pattern may be connected to a first point on the PBA, and the first end of the fourth conductive pattern may be connected to the first point through the FPCB.

According to various embodiments, the third width may be the sum of the first width and the second width.

According to various embodiments, a length of each of the plurality of first conductive patterns in the folding axis direction may be greater than a width of each of the plurality of first conductive patterns in the first direction, and a length of each of the plurality of second conductive patterns in the folding axis direction may be greater than a width of each of the plurality of second conductive patterns in the second direction. The controller may be configured to identify the coordinates of the electronic pen in a direction perpendicular to the folding axis based on the signals from the first and second digitizers.

According to various embodiments, the first digitizer may include a plurality of seventh conductive patterns generating a signal for identifying coordinates of the electronic pen in a direction parallel to the folding axis based on the pen signal of the electronic pen, and the second digitizer may include a plurality of eighth conductive patterns generating a signal for identifying coordinates of the electronic pen in a direction parallel to the folding axis based on the pen signal. A width of each of the plurality of seventh conductive patterns in the first direction may be greater than a length of each of the plurality of seventh conductive patterns in the folding axis direction, and a width of each of the plurality of eighth conductive patterns in the second direction may be greater than a length of each of the plurality of eighth conductive patterns in the folding axis direction.

According to various embodiments, the controller may be configured to receive a signal generated based on the pen signal from the plurality of seventh conductive patterns and the plurality of eighth conductive patterns, and to identify the coordinates of the electronic pen in a direction parallel to the folding axis, based on the sum of signals from a pair of conductive patterns whose positions in the folding axis direction correspond to each other among the plurality of seventh and eighth conductive patterns.

According to various embodiments, a first end of each of the plurality of seventh conductive patterns may be connected to a reference end of the controller, and a second end of each of the plurality of eighth conductive patterns may be connected to the reference end of the controller. Also, a second end of each of the plurality of seventh conductive patterns may be connected to a plurality of input terminals of the controller and a first end of a pair of conductive patterns whose positions in the folding axis direction correspond to each other among the plurality of eighth conductive patterns. The controller may be configured to identify the sum of signals, inputted to the plurality of input terminals, from the plurality of seventh conductive patterns and the pair of conductive patterns whose positions in the folding axis direction correspond to each other among the plurality of eighth conductive patterns.

According to various embodiments, a first end of each of the plurality of seventh conductive patterns may be connected to the controller, and a second end of each of the plurality of seventh conductive patterns may be connected to a first end of conductive patterns whose positions in the folding axis direction correspond to each other among the plurality of eighth conductive patterns. A second end of each of the plurality of eighth conductive patterns may be connected to the controller.

According to various embodiments, a method performed by a controller of an electronic device including a first housing and a second housing rotatably connected about a folding axis may include an operation of receiving a first signal generated based on a pen signal of an electronic pen from a second conductive pattern having a shortest distance from the folding axis in a first direction substantially perpendicular to the folding axis and having a first width in the first direction among a plurality of first conductive patterns included in the first housing, an operation of receiving a second signal generated based on the pen signal from a fourth conductive pattern having a shortest distance from the folding axis in a second direction substantially perpendicular to the folding axis and having a second width in the second direction among a plurality of third conductive patterns included in the second housing, an operation of receiving a third signal generated based on the pen signal from a fifth conductive pattern having a longer distance from the folding axis in the first direction than the second conductive pattern among the first conductive patterns, an operation of receiving a fourth signal generated based on the pen signal from a sixth conductive pattern having a longer distance from the folding axis in the second direction than the fourth conductive pattern among the third conductive patterns, and an operation of identifying coordinates of the electronic pen in a direction perpendicular to the folding axis, based on the sum of the first and second signals, the third signal, and the fourth signal.

According to various embodiments, the method may further include an operation of receiving a signal based on the sum of magnetic fluxes based on the pen signal and passing through a pair of conductive patterns whose positions in the direction of the folding axis correspond to each other, from seventh conductive patterns and eighth conductive patterns among the seventh conductive patterns included in the first housing and the eighth conductive patterns included in the second housing, and an operation of identifying the coordinates of the electronic pen in a direction parallel to the folding axis, based on the signals received from the seventh conductive patterns and the eighth conductive patterns.

Meanwhile, the embodiments disclosed in the specification and drawings are only presented as specific examples to easily explain the technical contents of the disclosure and help the understanding of the disclosure, and it is not intended to limit the scope of the disclosure. The invention is defined by the appended claims.

## Claims

1. A foldable electronic device (100, 201, 300) comprising:
a first housing (110) comprising a printed board assembly (315, 715);
a second housing (120) foldably connected to the first housing (110) through a hinge module (140) along a folding axis (540, 740);
a display panel (430) disposed at the first housing (110) and the second housing (120);
a first digitizer (320, 520) disposed in parallel to the folding axis (540) and under the display panel (430) in the first housing (110) and connected to the printed board assembly (315, 715); and
a second digitizer (330, 530) disposed in parallel to the folding axis (540) and under the display panel (430) in the second housing (120) and connected to the printed board assembly (315, 715),
wherein the first digitizer (320, 520) comprises a plurality of first conductive coils (521, 522, 523, 721, 722) configured to detect data input through an electronic pen,
wherein the second digitizer (330, 530) comprises a plurality of second conductive coils (531, 532, 533, 731, 732) configured to detect data input through the electronic pen,
wherein a first combination (521, 531, 721, 731) of one of the first conductive coils (521, 522, 523, 721, 722) and one of the second conductive coils (531, 532, 533, 731, 732) is one conductive coil divided by the folding axis (540, 740), and
wherein the first digitizer (320, 520) and the second digitizer (330, 530) are configured to:
generate a magnetic field through a voltage applied to the plurality of first conductive coils (521, 522, 523) and the plurality of second conductive coils (531, 532, 533),
detect a pen signal generated in a resonance circuit inside the electronic pen by the magnetic field according to the proximity of the electronic pen, and
generate information related to the position of the electronic pen based on the detected pen signal.

2. The foldable electronic device (100, 201, 300) of claim 1, wherein the one of the first conductive coils (521, 522, 523, 721, 722) and the one of the second conductive coils (531, 532, 533, 731, 732) of the first combination (721, 731) are connected in series through the printed board assembly (315, 715).

3. The foldable electronic device (100, 201, 300) of claim 1, further comprising a polymer layer (440) under the display layer (430) and a support layer (450-1) disposed under the polymer layer (440), the support layer (450-1) including a first flat portion (451) corresponding to the first digitizer (320, 520), a second flat portion (452) corresponding to the second digitizer (330, 530), and a bendable portion (453) between the first flat portion (451) and the second flat portion (452),
wherein the bendable portion (453) includes a plurality of openings (4541) for providing flexibility.

4. The foldable electronic device (100, 201, 300) of claim 3, wherein the first digitizer (320, 520) is disposed under the first flat portion (451) and at least a portion of the bendable portion (453), and the second digitizer (330, 530) is disposed under the second flat portion (452) and at least a portion of the bendable portion (453).

5. The foldable electronic device (100, 201, 300) of claim 1, wherein the printed board assembly (315, 715) comprises a controller (310, 710), a first connector (316) and a second connector (317), and
wherein the first digitizer (320, 520) is connected to the controller (310, 710) through the first connector (316) and a first connection interface (325), and the second digitizer (330, 530) is connected to the controller (310, 710) through the second connector (317) and a second connection interface (335).

6. The foldable electronic device (100, 201, 300) of claim 1, wherein a controller (610) is configured to identify a first sum of a signal (ASWn) generated by the first conductive coil (721) of the first combination (721, 731) and a signal (ASWn+1) generated by the second conductive coil (731) of the first combination (721, 731).

7. The foldable electronic device (100, 201, 300) of claim 1, wherein the conductive coils of the first combination (521, 531) have equal or different widths along the planes of the respective first (320, 520) and second digitizers (330, 530) in respective directions perpendicular to the folding axis (540).

8. The foldable electronic device (100, 201, 300) of claim 7, wherein the sum of the widths of the conductive coils of the first combination (521, 531) is equal to each width of the other first conductive coils (522, 523) and second conductive coils (532, 533) that are not divided by the folding axis (540).

9. The foldable electronic device (100, 201, 300) of claim 8, wherein
a second combination (521b, 531b) of one of the first conductive coils (522, 523, 521b, 522b) other than used in the first combination (521, 531), and one of the second conductive coils (532, 533, 531b, 532b) other than used in the first combination (521, 531), is one conductive coil divided by the folding axis (540), and
a third combination (522b, 532b) of one of the first conductive coils (522, 523, 522b), other than used in the first combination (521, 531) and the second combination (521b, 531b), and one of the second conductive coils (532, 533, 532b), other than used in the first combination (521, 531) and the second combination (521b, 531b), is one conductive coil divided by the folding axis (540).

10. The foldable electronic device (100, 201, 300) of claim 9, wherein a width of the first conductive coil (521b) of the second combination (521b, 531b) is equal to a half of the width of the first conductive coil (521) of the first combination (521, 531).

11. The foldable electronic device (100, 201, 300) of claim 9, wherein a width of the first conductive coil (522b) of the third combination (522b, 532b) is equal to three times of the width of the first conductive coil (521b) of the second combination (521b, 531).

12. The foldable electronic device (100, 201, 300) of claim 9,
wherein a controller (610) is configured to identify a first sum of a signal (ASWn) generated by the first conductive coil (721) of the first combination (721, 731) and a signal (ASWn+1) generated by the second conductive coil (731) of the first combination (721, 731),
wherein the controller (610) is configured to identify a second sum of a signal generated by the first conductive coil (521b) of the second combination (521b, 531b) and a signal generated by the second conductive coil (531b) of the second combination (521b, 531b), and
wherein a controller (610) is configured to identify a third sum of a signal generated by the first conductive coil (522b) of the third combination (522b, 532b) and a signal generated by the second conductive coil (532b) of the third combination (521b, 531b).

13. The foldable electronic device (100, 201, 300) of claim 12, wherein based on the second and third sums and the distribution of the signals generated by the other first conductive coils (522, 523) and second conducting coils (532, 533) that are not divided by the folding axis (540), the foldable electronic device (100, 201, 300) is configured to identify a value of an ingredient in a direction perpendicular to the folding axis (540) among coordinates specifying position of an electronic pen.

14. The foldable electronic device (100, 201, 300) of claim 11,
wherein the printed board assembly (315) comprises a controller (710) and
wherein a first end of the first conductive coil (521, 721) of the first combination (521, 531) is connected to a reference terminal (Vrefy) of the controller (710), and a second end of the first conductive coil (521, 721) of the first combination (521, 531) is connected to a first end of the second conductive coil (531, 731) of the first combination (521, 531) through an interface of the controller (710) while a second end of the second conductive coil (531, 731) of the first combination (521, 531) is connected to an input terminal of the controller (710).

15. The foldable electronic device (100, 201, 300) of claim 12,
wherein the one of the first conductive coils (521, 522, 523) and the one of the second conductive coils (531, 532, 533) of the first combination (521, 531) are connected in series,
wherein the first conductive coil (521b) of the second combination (521b, 531b) and the second conductive coil (531b) of the second combination (521b, 531b) are connected in series, and
wherein the first conductive coil (522b) of the third combination (522b, 532b) and the second conductive coil (532b) of the third combination (522b, 532b) are connected in series.

## Patentansprüche

1. Faltbare elektronische Vorrichtung (100, 201, 300), umfassend:
ein erstes Gehäuse (110), das eine Leiterplattenbaugruppe (315, 715) umfasst;
ein zweites Gehäuse (120), das faltbar mit dem ersten Gehäuse (110) über ein Scharniermodul (140) entlang einer Faltachse (540, 740) verbunden ist;
eine Anzeigetafel (430), die am ersten Gehäuse (110) und am zweiten Gehäuse (120) angeordnet ist;
ein erster Digitalisierer (320, 520), der parallel zur Faltachse (540) und unterhalb der Anzeigetafel (430) im ersten Gehäuse (110) angeordnet und mit der Leiterplattenbaugruppe (315, 715) verbunden ist; und
ein zweiter Digitalisierer (330, 530), der parallel zur Faltachse (540) und unterhalb der Anzeigetafel (430) im zweiten Gehäuse (120) angeordnet und mit der Leiterplattenbaugruppe (315, 715) verbunden ist,
wobei der erste Digitalisierer (320, 520) eine Vielzahl von ersten leitfähigen Spulen (521, 522, 523, 721, 722) umfasst, die so konfiguriert sind, dass sie über einen elektronischen Stift eingegebene Daten erfassen,
wobei der zweite Digitalisierer (330, 530) eine Vielzahl von zweiten leitfähigen Spulen (531, 532, 533, 731, 732) umfasst, die so konfiguriert sind, dass sie über den elektronischen Stift eingegebene Daten erfassen,
wobei eine erste Kombination (521, 531, 721, 731) aus einer der ersten leitfähigen Spulen (521, 522, 523, 721, 722) und einer der zweiten leitfähigen Spulen (531, 532, 533, 731, 732) eine durch die Faltachse (540, 740) geteilte leitfähige Spule ist, und
wobei der erste Digitalisierer (320, 520) und der zweite Digitalisierer (330, 530) konfiguriert sind zum:
Erzeugen eines Magnetfelds, indem eine Spannung an die Vielzahl von ersten leitfähigen Spulen (521, 522, 523) und die Vielzahl von zweiten leitfähigen Spulen (531, 532, 533) angelegt wird,
Erfassen eines Stiftsignals, das in einer Resonanzschaltung im Inneren des elektronischen Stifts durch das Magnetfeld in Abhängigkeit von der Entfernung des elektronischen Stifts erzeugt wird, und
Generieren von Informationen zur Position des elektronischen Stifts basierend auf dem erfassten Stiftsignal.

2. Faltbare elektronische Vorrichtung (100, 201, 300) nach Anspruch 1, wobei die eine der ersten leitfähigen Spulen (521, 522, 523, 721, 722) und die eine der zweiten leitfähigen Spulen (531, 532, 533, 731, 732) der ersten Kombination (721, 731) über die Leiterplattenbaugruppe (315, 715) in Reihe geschaltet sind.

3. Faltbare elektronische Vorrichtung (100, 201, 300) nach Anspruch 1, ferner umfassend eine Polymerschicht (440) unterhalb der Anzeigeschicht (430) und eine unterhalb der Polymerschicht (440) angeordnete Trägerschicht (450-1), wobei die Trägerschicht (450-1) einen ersten flachen Abschnitt (451), der dem ersten Digitalisierer (320, 520) entspricht, einen zweiten flachen Abschnitt (452), der dem zweiten Digitalisierer (330, 530) entspricht, sowie einen biegbaren Abschnitt (453) zwischen dem ersten flachen Abschnitt (451) und dem zweiten flachen Abschnitt (452) umfasst,
wobei der biegbare Abschnitt (453) eine Vielzahl von Öffnungen (4541) beinhaltet, um Flexibilität zu gewährleisten.

4. Faltbare elektronische Vorrichtung (100, 201, 300) nach Anspruch 3, wobei der erste Digitalisierer (320, 520) unter dem ersten flachen Abschnitt (451) und mindestens einem Abschnitt des biegbaren Abschnitts (453) angeordnet ist, und der zweite Digitalisierer (330, 530) unter dem zweiten flachen Abschnitt (452) und mindestens einem Abschnitt des biegbaren Abschnitts (453) angeordnet ist.

5. Faltbare elektronische Vorrichtung (100, 201, 300) nach Anspruch 1, wobei die Leiterplattenbaugruppe (315, 715) eine Steuerung (310, 710), einen ersten Verbindungsstecker (316) und einen zweiten Verbindungsstecker (317) umfasst, und
wobei der erste Digitalisierer (320, 520) über den ersten Verbindungsstecker (316) und eine erste Verbindungsschnittstelle (325) mit der Steuerung (310, 710) verbunden ist, und der zweite Digitalisierer (330, 530) über den zweiten Verbindungsstecker (317) und eine zweite Verbindungsschnittstelle (335) mit der Steuerung (310, 710) verbunden ist.

6. Faltbare elektronische Vorrichtung (100, 201, 300) nach Anspruch 1, wobei eine Steuerung (610) so konfiguriert ist, dass sie eine erste Summe eines Signals (ASWn), das von der ersten leitfähigen Spule (721) der ersten Kombination (721, 731) erzeugt wird, und eines von der zweiten leitfähigen Spule (731) der ersten Kombination (721, 731) erzeugten Signals (ASWn+1) ermittelt.

7. Faltbare elektronische Vorrichtung (100, 201, 300) nach Anspruch 1, wobei die leitfähigen Spulen der ersten Kombination (521, 531) entlang der Ebenen des jeweiligen ersten (320, 520) und zweiten Digitalisierers (330, 530) in jeweiligen Richtungen senkrecht zur Faltachse (540) gleiche oder unterschiedliche Breiten aufweisen.

8. Faltbare elektronische Vorrichtung (100, 201, 300) nach Anspruch 7, wobei die Summe der Breiten der leitfähigen Spulen der ersten Kombination (521, 531) gleich jeder Breite der anderen ersten leitfähigen Spulen (522, 523) und zweiten leitfähigen Spulen (532, 533) ist, die nicht durch die Faltachse (540) geteilt sind.

9. Faltbare elektronische Vorrichtung (100, 201, 300) nach Anspruch 8, wobei
eine zweite Kombination (521b, 531b) aus einer der ersten leitfähigen Spulen (522, 523, 521b, 522b), die nicht in der ersten Kombination (521, 531) verwendet wird, und einer der zweiten leitfähigen Spulen (532, 533, 531b, 532b), die nicht in der ersten Kombination (521, 531) verwendet wird, eine leitfähige Spule ist, die durch die Faltachse (540) geteilt wird, und
eine dritte Kombination (522b, 532b) aus einer der ersten leitfähigen Spulen (522, 523, 522b), die nicht in der ersten Kombination (521, 531) und der zweiten Kombination (521b, 531b) verwendet wird, sowie einer der zweiten leitfähigen Spulen (532, 533, 532b), die nicht in der ersten Kombination (521, 531) und der zweiten Kombination (521b, 531b) verwendet wird, eine leitfähige Spule ist, die durch die Faltachse (540) geteilt wird.

10. Faltbare elektronische Vorrichtung (100, 201, 300) nach Anspruch 9, wobei eine Breite der ersten leitfähigen Spule (521b) der zweiten Kombination (521b, 531b) einer Hälfte der Breite der ersten leitfähigen Spule (521) der ersten Kombination (521, 531) entspricht.

11. Faltbare elektronische Vorrichtung (100, 201, 300) nach Anspruch 9, wobei eine Breite der ersten leitfähigen Spule (522b) der dritten Kombination (522b, 532b) dem Dreifachen der Breite der ersten leitfähigen Spule (521b) der zweiten Kombination (521b, 531) entspricht.

12. Faltbare elektronische Vorrichtung (100, 201, 300) nach Anspruch 9,
wobei eine Steuerung (610) so konfiguriert ist, dass sie eine erste Summe eines Signals (ASWn), das von der ersten leitfähigen Spule (721) der ersten Kombination (721, 731) erzeugt wird, und eines von der zweiten leitfähigen Spule (731) der ersten Kombination (721, 731) erzeugten Signals (ASWn+1) ermittelt,
wobei die Steuerung (610) so konfiguriert ist, dass sie eine zweite Summe aus einem von der ersten leitfähigen Spule (521b) der zweiten Kombination (521b, 531b) erzeugten Signal und einem von der zweiten leitfähigen Spule (531b) der zweiten Kombination (521b, 531b) erzeugten Signal identifiziert, und
wobei eine Steuerung (610) so konfiguriert ist, dass sie eine dritte Summe aus einem von der ersten leitfähigen Spule (522b) der dritten Kombination (522b, 532b) und einem von der zweiten leitfähigen Spule (532b) der dritten Kombination (521b, 531b) erzeugten Signal identifiziert.

13. Faltbare elektronische Vorrichtung (100, 201, 300) nach Anspruch 12, wobei basierend auf den zweiten und dritten Summen sowie der Verteilung der Signale, die von den anderen ersten leitfähigen Spulen (522, 523) und zweiten leitfähigen Spulen (532, 533) erzeugt werden, die nicht durch die Faltachse (540) geteilt sind, die faltbare elektronische Vorrichtung (100, 201, 300) so konfiguriert ist, dass es unter den Koordinaten, die die Position eines elektronischen Stifts angeben, einen Wert eines Bestandteils in einer Richtung senkrecht zur Faltachse (540) identifiziert.

14. Faltbare elektronische Vorrichtung (100, 201, 300) nach Anspruch 11,
wobei die Leiterplattenbaugruppe (315) eine Steuerung (710) umfasst, und
wobei ein erstes Ende der ersten leitfähigen Spule (521, 721) der ersten Kombination (521, 531) mit einem Referenzanschluss (Vrefy) der Steuerung (710) verbunden ist, und ein zweites Ende der ersten leitfähigen Spule (521, 721) der ersten Kombination (521, 531) mit einem ersten Ende der zweiten leitfähigen Spule (531, 731) der ersten Kombination (521, 531) über eine Schnittstelle der Steuerung (710) verbunden ist, während ein zweites Ende der zweiten leitfähigen Spule (531, 731) der ersten Kombination (521, 531) mit einem Eingangsanschluss der Steuerung (710) verbunden ist.

15. Faltbare elektronische Vorrichtung (100, 201, 300) nach Anspruch 12,
wobei die eine der ersten leitfähigen Spulen (521, 522, 523) und die eine der zweiten leitfähigen Spulen (531, 532, 533) der ersten Kombination (521, 531) in Reihe geschaltet sind,
wobei die erste leitfähige Spule (521b) der zweiten Kombination (521b, 531b) und die zweite leitfähige Spule (531b) der zweiten Kombination (521b, 531b) in Reihe geschaltet sind, und
wobei die erste leitfähige Spule (522b) der dritten Kombination (522b, 532b) und die zweite leitfähige Spule (532b) der dritten Kombination (522b, 532b) in Reihe geschaltet sind.

## Revendications

1. Dispositif électronique pliable (100, 201, 300), comprenant :
un premier boîtier (110) comprenant un ensemble carte à circuits imprimés (315, 715) ;
un deuxième boîtier (120) relié de manière pliable au premier boîtier (110) par l'intermédiaire d'un module de charnière (140) le long d'un axe de pliage (540, 740) ;
un panneau d'affichage (430) disposé au niveau du premier boîtier (110) et du deuxième boîtier (120) ;
un premier numériseur (320, 520) disposé parallèlement à l'axe de pliage (540) et sous le panneau d'affichage (430) dans le premier boîtier (110), et relié à l'ensemble carte à circuits imprimés (315, 715) ; et
un second numériseur (330, 530) disposé parallèlement à l'axe de pliage (540) et sous le panneau d'affichage (430) dans le second boîtier (120), et relié à l'ensemble carte à circuits imprimés (315, 715),
dans lequel le premier numériseur (320, 520) comprend une pluralité de premières bobines conductrices (521, 522, 523, 721, 722) configurées pour détecter les données saisies à l'aide d'un stylo électronique,
dans lequel le deuxième numériseur (330, 530) comprend une pluralité de deuxièmes bobines conductrices (531, 532, 533, 731, 732) configurées pour détecter les données saisies à l'aide du stylo électronique,
dans lequel une première combinaison (521, 531, 721, 731) de l'une des premières bobines conductrices (521, 522, 523, 721, 722) et l'une des deuxièmes bobines conductrices (531, 532, 533, 731, 732) est une bobine conductrice divisée par l'axe de pliage (540, 740), et
dans lequel le premier numériseur (320, 520) et le second numériseur (330, 530) sont configurés pour :
générer un champ magnétique par l'intermédiaire d'une tension appliquée à la pluralité de premières bobines conductrices (521, 522, 523) et à la pluralité de secondes bobines conductrices (531, 532, 533),
détecter un signal de stylo généré dans un circuit de résonance à l'intérieur du stylo électronique par le champ magnétique, en fonction de la proximité du stylo électronique, et
générer des informations relatives à la position du stylo électronique en se basant sur le signal de stylo détecté.

2. Dispositif électronique pliable (100, 201, 300) selon la revendication 1, dans lequel l'une des premières bobines conductrices (521, 522, 523, 721, 722) et l'une des secondes bobines conductrices (531, 532, 533, 731, 732) de la première combinaison (721, 731) sont connectées en série par l'intermédiaire de l'ensemble carte à circuits imprimés (315, 715).

3. Dispositif électronique pliable (100, 201, 300) selon la revendication 1, comprenant en outre une couche polymère (440) sous la couche d'affichage (430) et une couche de support (450-1) disposée sous la couche polymère (440), la couche de support (450-1) comprenant une première partie plate (451) correspondant au premier numériseur (320, 520), une deuxième partie plate (452) correspondant au deuxième numériseur (330, 530), et une partie pliable (453) située entre la première partie plate (451) et la deuxième partie plate (452),
dans lequel la partie pliable (453) comprend une pluralité d'ouvertures (4541) destinées à assurer la flexibilité.

4. Dispositif électronique pliable (100, 201, 300) selon la revendication 3, dans lequel le premier numériseur (320, 520) est disposé sous la première partie plate (451) et au moins une partie de la partie pliable (453), et le deuxième numériseur (330, 530) est disposé sous la deuxième partie plate (452) et au moins une partie de la partie pliable (453).

5. Dispositif électronique pliable (100, 201, 300) selon la revendication 1, dans lequel l'ensemble carte à circuits imprimés (315, 715) comprend une commande (310, 710), un premier connecteur (316) et un deuxième connecteur (317), et
dans lequel le premier numériseur (320, 520) est connecté à la commande (310, 710) par l'intermédiaire du premier connecteur (316) et d'une première interface de connexion (325), et le deuxième numériseur (330, 530) est connecté à la commande (310, 710) par l'intermédiaire du deuxième connecteur (317) et d'une deuxième interface de connexion (335).

6. Dispositif électronique pliable (100, 201, 300) selon la revendication 1, dans lequel une commande (610) est configurée pour identifier une première somme d'un signal (ASWn) généré par la première bobine conductrice (721) de la première combinaison (721, 731) et d'un signal (ASWn+1) généré par la deuxième bobine conductrice (731) de la première combinaison (721, 731).

7. Dispositif électronique pliable (100, 201, 300) selon la revendication 1, dans lequel les bobines conductrices de la première combinaison (521, 531) présentent des largeurs égales ou différentes le long des plans des premier (320, 520) et deuxième (330, 530) numériseurs respectifs, dans des directions respectives perpendiculaires à l'axe de pliage (540).

8. Dispositif électronique pliable (100, 201, 300) selon la revendication 7, dans lequel la somme des largeurs des bobines conductrices de la première combinaison (521, 531) est égale à chacune des largeurs des autres premières bobines conductrices (522, 523) et secondes bobines conductrices (532, 533) qui ne sont pas divisées par l'axe de pliage (540).

9. Dispositif électronique pliable (100, 201, 300) selon la revendication 8, dans lequel
une seconde combinaison (521b, 531b) de l'une des premières bobines conductrices (522, 523, 521b, 522b) autre que celle utilisée dans la première combinaison (521, 531), et l'une des deuxièmes bobines conductrices (532, 533, 531b, 532b) autre que celle utilisée dans la première combinaison (521, 531), est une bobine conductrice divisée par l'axe de pliage (540), et
une troisième combinaison (522b, 532b) de l'une des premières bobines conductrices (522, 523, 522b), autre que celle utilisée dans la première combinaison (521, 531) et la deuxième combinaison (521b, 531b), et l'une des deuxièmes bobines conductrices (532, 533, 532b), autre que celle utilisée dans la première combinaison (521, 531) et la deuxième combinaison (521b, 531b), est une bobine conductrice divisée par l'axe de pliage (540).

10. Dispositif électronique pliable (100, 201, 300) selon la revendication 9, dans lequel une largeur de la première bobine conductrice (521b) de la deuxième combinaison (521b, 531b) est égale à la moitié de la largeur de la première bobine conductrice (521) de la première combinaison (521, 531).

11. Dispositif électronique pliable (100, 201, 300) selon la revendication 9, dans lequel la largeur de la première bobine conductrice (522b) de la troisième combinaison (522b, 532b) est égale à trois fois la largeur de la première bobine conductrice (521b) de la deuxième combinaison (521b, 531).

12. Dispositif électronique pliable (100, 201, 300) selon la revendication 9,
dans lequel une commande (610) est configurée pour identifier une première somme d'un signal (ASWn) généré par la première bobine conductrice (721) de la première combinaison (721, 731) et d'un signal (ASWn+1) généré par la deuxième bobine conductrice (731) de la première combinaison (721, 731),
dans lequel la commande (610) est configurée pour identifier une deuxième somme d'un signal généré par la première bobine conductrice (521b) de la deuxième combinaison (521b, 531b) et d'un signal généré par la deuxième bobine conductrice (531b) de la deuxième combinaison (521b, 531b), et
dans lequel une commande (610) est configurée pour identifier une troisième somme d'un signal généré par la première bobine conductrice (522b) de la troisième combinaison (522b, 532b) et d'un signal généré par la deuxième bobine conductrice (532b) de la troisième combinaison (521b, 531b).

13. Dispositif électronique pliable (100, 201, 300) selon la revendication 12, dans lequel, en se basant sur les deuxième et troisième sommes et sur la distribution des signaux générés par les autres premières bobines conductrices (522, 523) et des deuxièmes bobines conductrices (532, 533) qui ne sont pas divisées par l'axe de pliage (540), le dispositif électronique pliable (100, 201, 300) est configuré pour identifier une valeur d'un ingrédient dans une direction perpendiculaire à l'axe de pliage (540) parmi les coordonnées spécifiant la position d'un stylo électronique.

14. Dispositif électronique pliable (100, 201, 300) selon la revendication 11,
dans lequel l'ensemble carte à circuits imprimés (315) comprend une commande (710), et
dans lequel une première extrémité de la première bobine conductrice (521, 721) de la première combinaison (521, 531) est connectée à un terminal de référence (Vrefy) de la commande (710), et une deuxième extrémité de la première bobine conductrice (521, 721) de la première combinaison (521, 531) est connectée à une première extrémité de la deuxième bobine conductrice (531, 731) de la première combinaison (521, 531) par l'intermédiaire d'une interface de commande (710), alors qu'une deuxième extrémité de la deuxième bobine conductrice (531, 731) de la première combinaison (521, 531) est connectée à un terminal d'entrée de la commande (710).

15. Dispositif électronique pliable (100, 201, 300) selon la revendication 12,
dans lequel l'une des premières bobines conductrices (521, 522, 523) et l'une des secondes bobines conductrices (531, 532, 533) de la première combinaison (521, 531) sont connectées en série,
dans lequel la première bobine conductrice (521b) de la deuxième combinaison (521b, 531b) et la deuxième bobine conductrice (531b) de la deuxième combinaison (521b, 531b) sont connectées en série, et
dans lequel la première bobine conductrice (522b) de la troisième combinaison (522b, 532b) et la deuxième bobine conductrice (532b) de la troisième combinaison (522b, 532b) sont connectées en série.
